(19) Europäisches Patentamt
European Patent Office
Office européen des brevets

(11) EP 4 503 196 A1

(12) EUROPEAN PATENT APPLICATION
published in accordance with Art. 153(4) EPC

(43) Date of publication:
**05.02.2025 Bulletin 2025/06**

(21) Application number: **23774705.0**

(22) Date of filing: **15.03.2023**

(51) International Patent Classification (IPC):
***H01M 4/62*** *(2006.01)* ***H01M 4/13*** *(2010.01)*
***H01M 4/139*** *(2010.01)* ***H01M 10/052*** *(2010.01)*
***H01M 10/0562*** *(2010.01)* ***H01M 10/0585*** *(2010.01)*

(52) Cooperative Patent Classification (CPC):
(C-Sets available)
**H01M 4/13; C08F 214/225; C08F 214/285; C08F 220/1812; C08K 3/04; C09D 127/16; C09D 127/20; H01M 4/139; H01M 4/62; H01M 4/622; H01M 4/623; H01M 10/052; H01M 10/0525; H01M 10/0562; H01M 10/0585;**
(Cont.)

(86) International application number:
**PCT/JP2023/010142**

(87) International publication number:
**WO 2023/182109 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022 JP 2022048325**

(71) Applicant: **FUJIFILM Corporation**
**Tokyo 106-8620 (JP)**

(72) Inventor: **YASUDA, Koji**
**Ashigarakami-gun, Kanagawa 258-8577 (JP)**

(74) Representative: **HGF**
**HGF Limited**
**1 City Walk**
**Leeds LS11 9DX (GB)**

# (54) SECONDARY BATTERY BINDER COMPOSITION, NONAQUEOUS SECONDARY BATTERY COMPOSITION, SHEET FOR ALL-SOLID-STATE SECONDARY BATTERY AND ALL-SOLID-STATE SECONDARY BATTERY, AND SHEET FOR ALL-SOLID-STATE SECONDARY BATTERY AND METHOD FOR PRODUCING ALL-SOLID-STATE SECONDARY BATTERY

(57) There is provided a binder composition for a secondary battery, containing an organic solvent and a polymer binder dissolved in the organic solvent, in which the binder composition for a secondary battery contains 3 to $1.0 \times 10^5$ ppm of a low-boiling point organic solvent (A) having a boiling point of lower than 120°C in the binder composition. There are also provided a composition for a non-aqueous secondary battery, which contains the binder composition for a secondary battery as well as a sheet for an all-solid state secondary battery and an all-solid state secondary battery, which use the composition for a non-aqueous secondary battery, and manufacturing methods of these.

FIG. 1

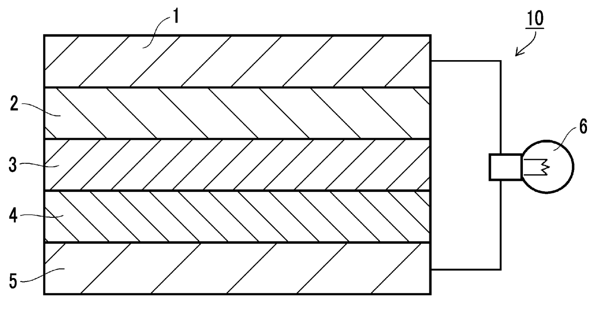


EP 4 503 196 A1

(52) Cooperative Patent Classification (CPC): (Cont.)
C08K 2003/2203; H01M 2004/027;
H01M 2004/028; H01M 2300/0068; Y02E 60/10;
Y02P 70/50

C-Sets
**C08F 214/225, C08F 214/28, C08F 220/06;**
**C08F 214/285, C08F 214/22, C08F 220/06,**
**C08F 220/281;**
**C09D 127/16, C08K 3/01;**
**C09D 127/20, C08K 3/01**

## Description

## BACKGROUND OF THE INVENTION

1. Field of the Invention

The present invention relates to a binder composition for a secondary battery, a composition for a non-aqueous secondary battery, a sheet for an all-solid state secondary battery, and an all-solid state secondary battery, as well as manufacturing methods for a sheet for an all-solid state secondary battery and an all-solid state secondary battery.

2. Description of the Related Art

A non-aqueous electrolyte secondary battery (also referred to as a non-aqueous secondary battery) is a storage battery that includes a negative electrode, a positive electrode, and a non-aqueous solution-based electrolyte between the negative electrode and the positive electrode and enables charging and discharging by the reciprocal migration of specific metal ions such as lithium ions between both electrodes. As such a non-aqueous secondary battery, a non-aqueous electrolytic solution secondary battery which uses an organic electrolyte, and an all-solid state secondary battery are used in a wide range of use applications. In particular, in the all-solid state secondary battery, all of the negative electrode, the electrolyte, and the positive electrode are solid, and thus safety and reliability which are considered as problems of the non-aqueous electrolytic solution secondary battery can be significantly improved. In addition, it is also said to be capable of extending the battery life. Further, the all-solid state secondary battery can be provided to have a structure in which the electrodes and the solid electrolyte are directly disposed in series. Therefore, the all-solid state secondary battery makes it possible to highly increase the energy density as compared with a non-aqueous electrolytic solution secondary battery, and thus the application to an electric vehicle or a large-sized storage battery is expected.

In consideration of improvement of productivity, electrode layers (a negative electrode active material layer and a positive electrode active material layer) in a non-aqueous electrolytic solution secondary battery and constitutional layers (a solid electrolyte layer, a negative electrode active material layer, a positive electrode active material layer, and the like) in an all-solid state secondary battery are generally formed of a composition (constitutional layer forming material) that contains an active material, a raw material compound constituting each layer such as an inorganic solid electrolyte, and a polymer binder that binds a raw material compound, and the like. For example, WO2017/209233A discloses "a solid electrolyte composition containing an inorganic solid electrolyte (A) having an ion conductivity of a metal belonging to Group 1 or Group 2 of the periodic table, a dispersion medium (B) having a LogP value of 1.2 or less, and a dispersion medium (C) having a LogP value of 2 or more, in which a mass ratio (C)/(B) of the dispersion medium (C) to the dispersion medium (B) is $100{,}000 \geq (C)/(B) \geq 10$". In addition, WO2020/158626A discloses a non-aqueous secondary battery electrode slurry composition containing an electrode active material and "a binder composition for a non-aqueous secondary battery electrode, where the binder composition contains a particulate polymer consisting of a polymer having a block region consisting of an aromatic vinyl monomer unit, and water and a volume average particle diameter of the particulate polymer is 0.08 μm or more and less than 0.6 μm".

## SUMMARY OF THE INVENTION

The electrode layer of the non-aqueous electrolytic solution secondary battery and the constitutional layer of the all-solid state secondary battery are formed of solid particles (an active material, a conductive auxiliary agent, an inorganic solid electrolyte, and the like). Therefore, the interfacial contact state between the solid particles and the interfacial contact state between the solid particles and the collector are restricted. As a result, the interface resistance is likely to increase, and the solid particles cannot be firmly adhered to each other with a strong adhesive force (binding force). This increase in the interface resistance causes not only an increase in battery resistance (a decrease in ion conductivity) of an all-solid state secondary battery but also a decrease in cycle characteristics thereof. In addition, since the adhesive force between the solid particles is not sufficient, the cycle characteristics are further deteriorated.

The increase in resistance, which causes a decrease in battery characteristics, is due to not only the interfacial contact state between solid particles but also the non-uniform presence (disposition) of solid particles in the constitutional layer, as well as the surface flatness of the constitutional layer. Therefore, in a case where the constitutional layer is formed of a constitutional layer forming material, the constitutional layer forming material is required to have characteristics of stably maintaining excellent dispersibility (initial dispersibility) of the solid particles immediately after preparation (dispersion stability) and characteristics of having high fluidity due to having an appropriate viscosity, thereby being capable of forming a good coating film (handleability).

By the way, the polymer binder that is used for the constitutional layer forming material can also be used as a solid-shaped material obtained by synthesizing a polymer and then solidifying and drying the polymer; however, it is

advantageous to use the polymer binder as a polymer liquid (solution or dispersion liquid) from the viewpoint of industrial manufacturing such as improvement of workability, reduction of environmental load, and cost reduction.

Therefore, as a result of further studying the polymer liquid, it was found that a composition for a non-aqueous secondary battery, which has excellent initial dispersibility and dispersion stability (together, may be referred to as dispersion characteristics) as well as excellent handleability, cannot be prepared in some cases even in a case of a polymer solution immediately after preparation. In addition, it was also found that the polymer solution after an elapse of time from the preparation thereof significantly deteriorates the battery characteristics of the non-aqueous secondary battery, for example, the ion conductivity (the storage stability is inferior). It was also found that such problems are remarkable in a case where a polymer having a functional group, a partial structure, or the like which is likely to be adsorbed to the inorganic solid electrolyte, the active material, or the like is contained.

However, no study has been made from this viewpoint in WO2017/209233A as well as in WO2020/158626A that relates to a binder composition for a secondary battery.

An object of the present invention is to provide a binder composition for a secondary battery, which exhibits excellent storage stability, where the binder composition for a secondary battery makes it possible to prepare a composition for a non-aqueous secondary battery, which exhibits excellent dispersion characteristics and excellent handleability. In addition, another object of the present invention is to provide a composition for a non-aqueous secondary battery, which exhibits excellent dispersion characteristics and excellent handleability, where the binder composition for a secondary battery makes it possible to realize a non-aqueous secondary battery having low resistance and excellent cycle characteristics. Further, another object of the present invention is to provide a sheet for an all-solid state secondary battery and an all-solid state secondary battery, in which the composition for a non-aqueous secondary battery is used, and manufacturing methods for a sheet for an all-solid state secondary battery, and an all-solid state secondary battery.

As a result of repeated studies on a binder composition for a secondary battery (hereinafter, also simply referred to as a binder composition) which contains a polymer that forms a polymer binder, the inventors of the present invention found that in a case where an organic solvent having a boiling point of lower than 120°C is allowed to be present together at a mass proportion of 3 to $1.0 \times 10^5$ ppm, in a polymer solution (composition) obtained by dissolving a polymer in an organic solvent by imparting a property of dissolving the polymer in an organic solvent, it is possible to prepare a composition for a non-aqueous secondary battery, which has excellent dispersion characteristics and excellent handleability, while making it possible to realize storage stability of the polymer solution with a lapse of time. Further, the inventors of the present invention found that an inorganic solid electrolyte composition prepared using the polymer solution exhibits excellent dispersion characteristics and excellent handleability, whereby it is possible to form an electrode layer or constitutional layer having low resistance in which solid particles are firmly adhered (bound), and further, it is possible to realize a non-aqueous secondary battery having low resistance and excellent cycle characteristics.

The present invention has been completed through further studies based on these findings.

That is, the above problems have been solved by the following means.

<1> A binder composition for a secondary battery, comprising:

an organic solvent; and
a polymer binder dissolved in the organic solvent,
in which the binder composition for a secondary battery contains 3 to $1.0 \times 10^5$ ppm of a low-boiling point organic solvent (A) having a boiling point of lower than 120°C in the binder composition.

<2> The binder composition for a secondary battery according to <1>, in which the organic solvent includes the low-boiling point organic solvent (A) and a high-boiling point organic solvent (B) having a boiling point of 120°C or higher.
<3> The binder composition for a secondary battery according to <1> or <2>, in which a polymer constituting the polymer binder has a constitutional component containing at least one functional group selected from the following group (I) of functional groups,

(group (I) of functional groups)
an ester group, a carboxy group, a dicarboxylic acid group, a carbonate group, a thioester group, a thiocarbonate group, an amide group, a urethane group, urea, and an imide group.

<4> The binder composition for a secondary battery according to any one of claims 1 to 3, in which a polymer constituting the polymer binder contains a constitutional component derived from a (meth)acrylic acid ester compound.
<5> The binder composition for a secondary battery according to any one of <1> to <4>, in which a LogP value of the low-boiling point organic solvent (A) is 2.0 or less.
<6> The binder composition for a secondary battery according to any one of <1> to <5>, in which the boiling point of the

low-boiling point organic solvent (A) is 90°C or lower.

<7> The binder composition for a secondary battery according to any one of <1> to <6>, in which a content of the low-boiling point organic solvent (A) in the binder composition for a secondary battery is 3 to $3.0 \times 10^3$ ppm.

<8> A composition for a non-aqueous secondary battery, comprising:
the binder composition for a secondary battery according to any one of <1> to <7>.

<9> The composition for a non-aqueous secondary battery according to <8>, further comprising an inorganic solid electrolyte having an ion conductivity of a metal belonging to Group 1 or Group 2 in the periodic table.

<10> The composition for a non-aqueous secondary battery according to <9>, in which the inorganic solid electrolyte is a sulfide-based inorganic solid electrolyte.

<11> The composition for a non-aqueous secondary battery according to any one of <8> to <10>, further comprising an active material.

<12> A sheet for an all-solid state secondary battery, comprising:
a layer formed of the composition for a non-aqueous secondary battery according to any one of <8> to <11>.

<13> An all-solid state secondary battery comprising, in the following order:

a positive electrode active material layer;
a solid electrolyte layer; and
a negative electrode active material layer,
in which at least one layer of the positive electrode active material layer, the solid electrolyte layer, or the negative electrode active material layer is a layer formed of the composition for a non-aqueous secondary battery according to any one of <8> to <11>.

<14> A manufacturing method for a sheet for an all-solid state secondary battery, the manufacturing method comprising:
forming a film of the composition for a non-aqueous secondary battery according to any one of <8> to <11>.

<15> A manufacturing method for an all-solid state secondary battery, the manufacturing method comprising:
manufacturing an all-solid state secondary battery through the manufacturing method according to <14>.

The binder composition according to the aspect of the present invention has excellent stability (storage stability) with a lapse of time and has excellent stability (storage stability) with a lapse of time, and thus in a case of being used as a material for preparing the composition for a non-aqueous secondary battery, it can improve the dispersion characteristics and the handleability of the composition for a non-aqueous secondary battery. In addition, the composition for a non-aqueous secondary battery according to the aspect of the present invention exhibits excellent dispersion characteristics and excellent handleability, and thus in a case of being used as a constitutional layer forming material of a non-aqueous secondary battery, it can form an electrode layer or constitutional layer having low resistance in which solid particles are firmly adhered (bound), and it can realize a non-aqueous secondary battery having low resistance and excellent cycle characteristics. In particular, by using, as a constitutional layer forming material, the composition for a non-aqueous secondary battery, which has the above-described excellent characteristics, the present invention can provide a sheet for an all-solid state secondary battery, which has a low resistance constitutional layer in which solid particles are firmly adhered (bound), and an all-solid state secondary battery having low resistance and excellent cycle characteristics, as well as manufacturing methods therefor.

The above-described and other characteristics and advantages of the present invention will be further clarified by the following description with appropriate reference to the accompanying drawing.

## BRIEF DESCRIPTION OF THE DRAWINGS

Fig. 1 is a longitudinal cross-sectional view schematically illustrating an all-solid state secondary battery according to a preferred embodiment of the present invention.

Fig. 2 is a longitudinal cross-sectional view schematically illustrating a coin-type all-solid state secondary battery prepared in Examples.

## DESCRIPTION OF THE PREFERRED EMBODIMENTS

In the present invention, in a case where a numerical value range is shown to describe a content, physical properties, or the like of a component, any upper limit value and any lower limit value can be appropriately combined to obtain a specific numerical value range in a case where an upper limit value and a lower limit value of the numerical value

range are described separately. On the other hand, in a case where a numerical value range is described using "to", a numerical value range indicated using "to" means a range including numerical values before and after the "to" as the lower limit value and the upper limit value. In addition, in a case where a plurality of numerical value ranges are set to make a description using "to", the upper limit value and the lower limit value, which form each of the numerical value ranges, are not limited to a combination of a specific upper limit value and a specific lower limit value described before and after "to" as a specific numerical value range and can be set to a numerical value range obtained by appropriately combining the upper limit value and the lower limit value of each numerical value range.

In the present invention, an expression regarding a compound (for example, in a case where a compound is represented by an expression in which "compound" is attached to the end) is used to have a meaning including not only the compound itself but also a salt or an ion thereof. In addition, this expression has a meaning including a derivative obtained by modifying a part of the compound, for example, by introducing a substituent into the compound within a range where the effect of the present invention is not impaired.

In the present invention, (meth)acryl means one or both of acryl and methacryl. The same applies to (meth) acrylate.

In the present invention, a substituent, a linking group, or the like (hereinafter, referred to as a substituent or the like), which is not specified regarding whether to be substituted or unsubstituted, may have an appropriate substituent. Accordingly, even in a case where a YYY group is simply described in the present invention, this YYY group includes not only an aspect having a substituent but also an aspect not having a substituent. The same shall be applied to a compound that is not specified in the present specification regarding whether to be substituted or unsubstituted. Examples of the preferred examples of the substituent include a substituent Z described later.

In the present invention, in a case where a plurality of substituents or the like represented by a specific reference numeral are present or a plurality of substituents or the like are simultaneously or alternatively defined, the respective substituents or the like may be the same or different from each other. In addition, in a case where a plurality of substituents or the like are adjacent to each other, the substituents may be linked or fused to each other to form a ring unless otherwise specified.

In the present invention, the polymer means a polymer; however, it has the same meaning as a so-called polymeric compound. In addition, a polymer binder (also simply referred to as a binder) means a binder composed of a polymer, and it includes a polymer itself and a binder composed (formed) to contain a polymer.

In the present invention, the main chain of each of the polymer and the polymerized chain refers to a linear molecular chain in which all the molecular chains that constitute the polymer or the polymerized chain other than the main chain can be conceived as a branched chain or a pendant group with respect to the main chain. Although it depends on the mass average molecular weight of the branched chain regarded as a branched chain or pendant group, the longest chain among the molecular chains that constitute the polymer or the polymerized chain is typically the main chain. However, the main chain does not include a terminal group that is provided in the terminal of the polymer or the polymerized chain. In addition, side chains of the polymer refer to branched chains other than the main chain and include a short chain and a long chain.

[Binder composition for secondary battery]

A binder composition for a secondary battery according to an embodiment of the present invention contains an organic solvent and a polymer binder dissolved in the organic solvent. It contains, as the organic solvent, a low-boiling point organic solvent (A) having a content of 3 to $1.0 \times 10^5$ ppm in the binder composition and a boiling point of lower than 120°C and further contains an organic solvent (hereinafter, referred to as a high-boiling point organic solvent (B)) other than the low-boiling point organic solvent (A).

As described above, the binder composition having such a composition has excellent storage stability with a lapse of time. In the present invention, the phrase "has excellent storage stability" is not particularly limited; however, it refers that, for example, in the "storage stability test" in Examples described later, a rate of change of an ion conductivity of an all-solid state secondary battery manufactured by using a binder composition which has been left to stand (stored) for one week in an environment of 60°C after preparation is 30% or less with respect to an ion conductivity of an all-solid state secondary battery manufactured by using a binder composition immediately after preparation.

Further, the binder composition according to the embodiment of the present invention can improve the dispersion characteristics and the handleability of the composition for a non-aqueous secondary battery, whereby it is possible to prepare a composition for a non-aqueous secondary battery, which exhibits excellent dispersion characteristics and excellent handleability.

Not only immediately after preparation but also after a lapse of time from the preparation, and even in a case where the polymer contained in the binder composition is a polymer having a functional group, a partial structure, or the like, which is easily adsorbed to an inorganic solid electrolyte, an active material, or the like, such a binder composition according to the embodiment of the present invention, which is excellent in storage stability and the action of improving the

characteristics of the composition for a non-aqueous secondary battery, makes it possible to prepare a composition for a non-aqueous secondary battery, which exhibits excellent dispersion stability and excellent handleability. As a result, the composition for a non-aqueous secondary battery makes it possible to manufacture a sheet for an all-solid state secondary battery, which has a low resistance constitutional layer in which solid particles are firmly adhered, and furthermore, an all-solid state secondary battery that has low resistance and exhibits cyclic characteristics.

The above-described effect of action, which is exhibited by the binder composition according to the embodiment of the present invention, has been found as a result of various studies on the binder composition, and the details of the reasons therefor are not revealed clearly.

Examples of the conceivable reason include the following reason. That is, the low-boiling point organic solvent (A) generally has a small molecular weight and has a relatively free molecular movement in the binder composition (the high-boiling point organic solvent (B)). Therefore, it is considered that the low-boiling point organic solvent (A) can be dissolved in the organic solvent to assist in improving the dispersion characteristics and handleability of the inorganic solid electrolyte or the like due to the polymer binder in which the molecular structure is spread. On the other hand, the frequency of collision with the polymer molecule in which the molecular structure is spread in the organic solvent is higher than that in the high-boiling point solvent (B), and thus the interaction or reaction with the polymer occurs easily (the structural change or the like of the polymer molecule occurs easily), which may cause a decrease in the storage stability of the binder composition with a lapse of time. However, in a case where the abundance (content) of the low-boiling point organic solvent (A) in the binder composition is set to be in the above-described range, it is conceived that the assisting effect such as the improvement of the dispersion characteristics and the interaction with the polymer are both achieved in a well-balanced manner, and thus the above-described effect of action is exhibited.

The binder composition according to the embodiment of the present invention is preferably a non-aqueous composition. In the present invention, the non-aqueous composition includes not only an aspect including no water but also a form in which a water content (also referred to as a "moisture content") is preferably 500 ppm or less. In the non-aqueous composition, the water content is more preferably 200 ppm or less, still more preferably 100 ppm or less, and particularly preferably 50 ppm or less. In a case where the binder composition is a non-aqueous composition, it is possible to dissolve the binder polymer, and it is possible to suppress the deterioration of the inorganic solid electrolyte in the composition for a non-aqueous secondary battery, which will be described later. The water content refers to the amount of water (the mass proportion thereof to the binder composition) in the binder composition and specifically is determined as a value measured by Karl Fischer titration after carrying out filtering through a membrane filter having a pore size of 0.02 $\mu$m.

It suffices that the binder composition according to the embodiment of the present invention contains organic solvents (the low-boiling point organic solvent (A) and the high-boiling point organic solvent (B)) and a polymer binder, and it may contain a raw material compound that forms a constitutional layer, such as an inorganic solid electrolyte, an active material, or the like. However, since the binder composition according to the embodiment of the present invention is used as a material for preparing the composition for a non-aqueous secondary battery according to the embodiment of the present invention, which is a constitutional layer forming material, it is preferable that the binder composition does not contain the above-described raw material compound that forms a constitutional layer. In the present invention, the fact that the raw material compound is not contained does not mean that even a raw material compound that is inevitably contained is excluded, but it means that the raw material compound may be contained in the binder composition within a range where the effect of the present invention is not impaired, for example, a content of 50% by mass or less, where the content of each raw material compound is preferably 7% by mass or less.

Since the binder composition according to the embodiment of the present invention exhibits the above-described excellent storage stability, it is preferably used as a material for preparing a constitutional layer forming material (a composition for a non-aqueous secondary battery) of an all-solid state secondary battery and as a material that forms a constitutional layer of a sheet for an all-solid state secondary battery and an all-solid state secondary battery.

Hereinafter, the components that are included in the binder composition according to the embodiment of the present invention and components that may be included therein will be described.

<Organic solvent>

The binder composition according to the embodiment of the present invention contains the low-boiling point organic solvent (A) and the high-boiling point organic solvent (B) as organic solvents, and it is preferable that the low-boiling point organic solvent (A) and the high-boiling point organic solvent (B) are compatible with each other to form a mixed solvent. In a case where the organic solvent as a whole dissolves a polymer constituting the polymer binder and contains the low-boiling point organic solvent (A) at the above-described content, the above-described effect of action is exhibited.

In the present invention, the low-boiling point organic solvent (A) refers to an organic solvent having a boiling point of lower than 120°C, and the high-boiling point organic solvent (B) refers to an organic solvent having a boiling point of 120°C or higher. Here, the "boiling point" means a boiling point at a pressure of 101,325 Pa and can be measured

according to a conventional method under a pressure of 101,325 Pa.

The organic solvent may be any solvent that dissolves a polymer binder (a polymer constituting the polymer binder) described later, and it is appropriately determined depending on the kind, chemical structure, and the like of the polymer binder. Such an organic solvent may be any organic compound that is in a liquid state in a use environment. Examples thereof include various organic solvents, and specific examples thereof include an ester compound, a ketone compound, an alcohol compound, a chain-like ether compound, a carbonate compound, a nitrile compound, a halogen-containing compound, a heterocyclic compound, a hydrocarbon compound (an aliphatic hydrocarbon compound or an aromatic hydrocarbon compound), an amide compound, and an amine compound.

Examples of the ester compound include a compound having an ester bond (-CO-O-) in the molecule. Examples of the ester compound include the compounds represented by Formula (SB-31), which are described in paragraphs [0044] to [0046] of WO2017/209233A, and the compound described in paragraph [0087] thereof.

Examples of the ketone compound include a compound having a carbonyl bond (-CO-) in the molecule. However, the carbonyl bond constituting an ester bond, a carbonate bond, an amide bond, and the like is not included. Examples of the ketone compound include the compounds represented by Formula (SB-61), which are described in paragraphs [0054] to [0057] of WO2017/209233A, and the compounds described in paragraphs [0078] to [0080] thereof.

Examples of the alcohol compound include a compound having a hydroxyl group (-OH) in the molecule. Examples of the alcohol compound include the compounds represented by Formula (SB-71), which are described in paragraphs [0058] to [0061] of WO2017/209233A.

Examples of the chain-like ether compound include a non-cyclic (linear or branched) compound having an ether bond (-O-) in the molecule. Examples of the chain-like ether compound include the compounds represented by Formula (SB-21), which are described in paragraphs [0040] to [0043] of WO2017/209233A, and the compounds described in paragraphs [0085] and [0086] thereof.

Examples of the carbonate compound include a compound having a carbonate bond (-O-CO-O-) in the molecule. Examples of the carbonate compound include the compounds represented by Formula (SB-41), which are described in paragraphs [0047] to [0049] of WO2017/209233A.

Examples of the nitrile compound include a compound having a nitrile group (-CN) in the molecule. Examples of the nitrile compound include the compounds represented by Formula (SB-51), which are described in paragraphs [0050] to [0053] of WO2017/209233A, and the compounds described in paragraph [0077] thereof.

Examples of the halogen-containing compound include a compound having a halogen atom in the molecule. It is noted that even in a case of being corresponding to the above-described compound such as an ester compound, a compound having a halogen atom in the molecule is classified as a halogen-containing compound. Examples of the halogen-containing compound include the compounds represented by Formula (SB-81), which are described in paragraphs [0062] to [0065] of WO2017/209233A.

Examples of the heterocyclic compound include a compound having at least one heteroatom as an atom that forms a cyclic molecular structure, and the heterocyclic compound may have a saturated cyclic structure or an unsaturated cyclic structure. The heteroatom is not particularly limited; however, examples thereof include atoms such as oxygen, sulfur, nitrogen, and phosphorus atoms. The heterocyclic compound is preferably a 5-membered ring or a 6-membered ring. Examples of the heterocyclic compound include the compounds represented by Formula (SB-9), which are described in paragraphs [0066] to [0071] of WO2017/209233A.

Examples of the aliphatic hydrocarbon compound include the compounds described in paragraphs [0088] and [0089] of WO2017/209233A, as well as a compound from which an alkyl group, an alkenyl group, an alkynyl group, a cycloalkyl group, or the like in a substituent Z described later is derived.

Examples of the aromatic hydrocarbon compound include the compounds represented by Formula (SB-12), which are described in paragraphs [0090] to [0093] of WO2017/209233A.

Examples of the amide compound include a compound having an amide bond ($-CO-NR^N-$) in the molecule. Here, $R^N$ represents a hydrogen atom or a substituent. Examples of the amide group compound include the compounds represented by Formula (SB-11), which are described in paragraphs [0036] to [0039] of WO2017/209233A.

Examples of the amine compound include a compound having an amine bond ($-N(R^N)_2$)) in the molecule. Here, $R^N$ represents a hydrogen atom or a substituent. Examples of the amine group compound include the compounds represented by Formula (SB-111), which are described in paragraphs [0081] to [0084] of WO2017/209233A.

In addition to those described above, examples of the respective compounds also include respective compounds described later regarding the dispersion medium, and a compound derived by adding a hydrogen atom to a corresponding group in the substituent Z described later.

(Low-boiling point organic solvent (A))

The low-boiling point organic solvent (A) may be any organic solvent having a boiling point of lower than 120°C. The boiling point of the low-boiling point organic solvent (A) is preferably 90°C or lower and more preferably 80°C or lower,

in terms of the storage stability of the binder composition as well as the characteristics (dispersion characteristics and handleability) of the composition for a non-aqueous secondary battery and the battery characteristics (resistance and cycle characteristics). On the other hand, the lower limit value of the boiling point is not particularly limited as long as a liquid state is exhibited in a use environment. However, it is practically 50°C or higher, and it is preferably 60°C or higher and more preferably 70°C or higher.

The low-boiling point organic solvent (A) preferably has a LogP value of 2.0 or less. Although a low-boiling point organic solvent (A) having such a LogP value exhibits polarity (hydrophilicity), it can improve the dispersion characteristics and the handleability of the composition for a non-aqueous secondary battery without impairing excellent storage stability of the binder composition.

In the present invention, the LogP value is a value calculated by ChemBioDraw (product name, manufactured by PerkinElmer, Inc.) Version: 12.9.2.1076.

From the viewpoint that the storage stability of the binder composition and the above-described characteristics of the composition for a non-aqueous secondary battery can be achieved in a well-balanced manner, the LogP value of the low-boiling point organic solvent (A) is preferably 1.0 or less and more preferably 0.5 or less. The lower limit value of the LogP value is not particularly limited; however, it is preferably -2.0 or more and more preferably -1.0 or more.

In consideration of the boiling point as well as the LogP value, the low-boiling point organic solvent (A) can be selected from various organic solvents within a range where the solubility of the polymer binder is not impaired. It is preferably selected from an ester compound, a ketone compound, a hydrocarbon compound, an alcohol compound, a chain-like ether compound, a carbonate compound, a nitrile compound, a halogen-containing compound, and a heterocyclic compound.

Hereinafter, as an example of the low-boiling point organic solvent (A), a compound name, a boiling point, and a LogP value are described.

Specific examples of the ester compound include ethyl acetate (LogP value: 0.29, boiling point: 77°C), propyl acetate (LogP value: 0.78, boiling point: 101°C), and ethyl propionate (LogP value: 0.95, boiling point: 99°C).

Specific examples of the ketone compound include acetone (LogP value: 0.20, boiling point: 56°C) and methyl ethyl ketone (LogP value: 0.86, boiling point: 80°C).

Specific examples of the alcohol compound include methanol (LogP value: -0.27, boiling point: 65°C), ethanol (LogP value: 0.07, boiling point: 78°C), 2-propanol (LogP value: 0.38, boiling point: 83°C), and 1-butanol (LogP value: 0.97, boiling point: 118°C).

Specific examples of the chain-like ether compound include dimethoxyethane (LogP value: -0.07, boiling point: 85°C), 1,2-dimethoxypropane (LogP value: 0.25, boiling point: 96°C), and diethyl ether (LogP value: 0.76, boiling point: 35°C).

Specific examples of the carbonate compound include dimethyl carbonate (LogP value: 0.54, boiling point: 90°C) and ethyl methyl carbonate (LogP value: 0.88, boiling point: 107°C).

Specific examples of the nitrile compound include acetonitrile (LogP value: 0.17, boiling point: 82°C) and propionitrile (PN) (LogP value: 0.82, boiling point: 97°C).

Specific examples of the halogen-containing compound include dichloromethane (LogP value: 1.01, boiling point: 40°C).

Specific examples of the heterocyclic compound include tetrahydrofuran (THF, LogP value: 0.40, boiling point: 66°C), 1,4-dioxane (LogP value: -0.31, boiling point: 101°C), pyridine (LogP value: 0.70, boiling point: 115°C), and pyrrolidine (LogP value: 0.18, boiling point: 87°C).

Specific examples of the hydrocarbon compound include hexane (LogP value: 3.00, boiling point: 69°C), heptane (LogP value: 3.42, boiling point: 98°C), and cyclohexane (LogP value: 2.50, boiling point: 81°C).

Specific examples of the aromatic compound include toluene (LogP value: 2.52, boiling point: 111°C).

(High-boiling point organic solvent (B))

The high-boiling point organic solvent (B) is an organic solvent that is contained in the binder composition as a main solvent and dissolves the polymer binder (a polymer constituting the polymer binder). Such a high-boiling point organic solvent (B) may be any organic solvent having a boiling point of 120°C or higher. The boiling point of the high-boiling point organic solvent (B) is preferably 125°C or higher and more preferably 135°C or higher, in terms of the storage stability of the binder composition as well as the characteristics (dispersion characteristics and handleability) of the composition for a non-aqueous secondary battery and the battery characteristics (resistance and cycle characteristics). On the other hand, the upper limit value of the boiling point is not particularly limited. However, it is practically 240°C or lower, and it is preferably 200°C or lower and more preferably 180°C or lower.

In the present invention, the difference in boiling point between the high-boiling point organic solvent (B) and the low-boiling point organic solvent (A) is not particularly limited, and it is, for example, preferably 30°C to 120°C and more preferably 50°C to 100°C.

The LogP value of the high-boiling point organic solvent (B) is not particularly limited. However, it is preferably a value at which hydrophobicity is exhibited, and it is, for example, preferably more than 2.0 and 10 or less, and more preferably more than 2.0 and 5.0 or less. The difference in LogP value between the high-boiling point organic solvent (B) and the low-boiling point organic solvent (A) is not particularly limited and can be appropriately set.

The high-boiling point organic solvent (B) can be selected from various organic solvents in consideration of the boiling point, the compatibility with the low-boiling point organic solvent (A), and the like. It is preferably selected from an ester compound, a ketone compound, a hydrocarbon compound, an alcohol compound, a chain-like ether compound, a carbonate compound, a nitrile compound, a halogen-containing compound, and a heterocyclic compound, and more preferred examples thereof include an ester compound, a ketone compound, a chain-like ether compound, an aromatic hydrocarbon compound, and an aliphatic hydrocarbon compound.

Examples of the high-boiling point organic solvent (B) include the following organic solvents.

Specific examples of the ester compound include butyl butyrate (LogP value: 2.27, boiling point: 165°C).

Specific examples of the ketone compound include dibutyl ketone (LogP value: 3.18, boiling point: 186°C) and diisobutyl ketone (LogP value: 3.0, boiling point: 163°C).

Specific examples of the aliphatic hydrocarbon compound include octane (LogP value: 3.84, boiling point: 125°C), nonane (LogP value: 4.25, boiling point: 151°C), and cyclooctane (LogP value: 3.34, boiling point: 149°C).

Specific examples of the aromatic compound include xylene (LogP value: 3.01, boiling point: 140°C) and mesitylene (LogP value: 3.50, boiling point: 165°C).

In the present invention, the low-boiling point organic solvent (A) and the high-boiling point organic solvent (B) can be appropriately combined from the above-described organic solvents. Examples of the preferred combination include a combination of the above-described organic solvent preferably selected as the low-boiling point organic solvent (A) and the above-described organic solvent preferably selected as the high-boiling point organic solvent (B). Among the above, more preferred examples thereof include a combination of an ester compound, a ketone compound, a hydrocarbon compound, or an alcohol compound as the low-boiling point organic solvent (A) and an ester compound, a ketone compound, an aromatic hydrocarbon compound, or an aliphatic hydrocarbon compound as the high-boiling point organic solvent (B).

Each of the low-boiling point organic solvent (A) and the high-boiling point organic solvent (B) which are contained in the binder composition may be one kind or two or more kinds.

A content $C_A$ of the low-boiling point organic solvent (A) in the binder composition is 3 to $1.0 \times 10^5$ ppm. In the present invention, ppm is in terms of mass. In a case where the content $C_A$ of the low-boiling point organic solvent (A) is within the above-described range, the characteristics of the composition for a non-aqueous secondary battery can be enhanced while the binder composition exhibits high storage stability. From the viewpoint of improving storage stability and characteristics of the composition for a non-aqueous secondary battery to a higher level, the content $C_A$ of the low-boiling point organic solvent (A) in the binder composition is preferably 3.0 to $3.0 \times 10^4$ ppm, more preferably 3.0 to $3.0 \times 10^3$ ppm, and still more preferably $1.0 \times 10^2$ to $1.0 \times 10^3$ ppm.

A content $C_B$ of the high-boiling point organic solvent (B) in the binder composition is not particularly limited, and it is, for example, preferably 20% to 99% by mass, more preferably 35% to 97% by mass, and still more preferably 50% to 95% by mass, in terms of storage stability, characteristics of the composition for a non-aqueous secondary battery, and the like.

In the binder composition, a ratio $[C_B/C_A]$ of the content $C_B$ of the high-boiling point organic solvent (B) to the content $C_A$ of the low-boiling point organic solvent (A) is not particularly limited, and for example, it can be set to 2 to $3.3 \times 10^6$ and can also be set to 250 to $3.3 \times 10^6$.

The low-boiling point organic solvent (A) and the high-boiling point organic solvent (B) in the binder composition can be identified and quantified by a publicly known method, and for example, can be identified and quantified from a retention time and a detection area by using chromatography such as gas chromatography or liquid chromatography.

<Polymer binder>

The polymer binder contained in the binder composition according to the embodiment of the present invention is a polymer binder formed to contain a polymer, and although depending on the content, it is usually present in a state of being dissolved in the above-described organic solvent (binder composition). In a case where this polymer binder is used in combination with the above-described organic solvent, storage stability can be improved, and characteristics of the composition for a non-aqueous secondary battery and the like can be improved.

In the present invention, the description that the polymer binder is dissolved in the organic solvent means that the polymer binder is dissolved in the organic solvent in the binder composition, and it refers to that, for example, the solubility of the polymer binder in the following solubility measurement is 50% or more. The polymer binder is not limited to an aspect in which the whole polymer binder is dissolved in the organic solvent in the binder composition, and it includes an aspect in which a part of the polymer binder is present in an insoluble state.

A measuring method for solubility is as follows. That is, a polymer binder (solid) of about 0.1 g is precisely weighed, and the precisely weighed mass is defined as W0. Next, the polymer binder and 10 g of an organic solvent having the same composition as that of the organic solvent (a mixed organic solvent of the low-boiling point organic solvent (A) and the high-boiling point organic solvent (B)) contained in the polymer binder and the binder composition put into a container, and the resultant mixture is mixed with a mixing rotor (model number: VMR-5, manufactured by AS ONE Corporation) for 48 hours at a temperature of 25°C and a rotation speed of 100 rpm. Then, the insoluble substance is filtered from the solution, the obtained solid is subjected to vacuum drying at 120°C for 3 hours, and then the mass W1 of the insoluble substance is precisely weighed. Then, the solubility (%) in the organic solvent is calculated according to the following expression, and the obtained value is defined as the solubility of the polymer binder in the organic solvent.

$$\text{Solubility (\%)} = (W0 - W1)/W0 \times 100$$

In the present invention, the solubility of the polymer binder in the organic solvent can be appropriately imparted according to the kind of the polymer that forms the polymer binder, the composition of the polymer (the kind and the content of the constitutional component), the mass average molecular weight of the polymer, and the kind or the content of the functional group (I) described below, as well as the combination with the organic solvent, and the like.

(Binder forming polymer)

In the present invention, a polymer (also referred to as a binder forming polymer) that is contained in a polymer binder and forms this polymer binder is not particularly limited; however, it preferably has one kind or two or more kinds of functional group-containing constitutional components (I) described later.

- Functional group-containing constitutional component (I) -

The functional group-containing constitutional component (I) is a constitutional component having at least one functional group among the following group (I) of functional groups, and it allows a polymer binder to exhibit adsorptivity or adhesiveness to solid particles such as an inorganic solid electrolyte.

<Group (I) of functional groups>

An ester group ($-CO-O-R^I$ or $-O-CO-R^I$), a carboxy group (-CO-OH), a dicarboxylic acid group, a carbonate group ($-O-CO-O-R^I$), a thioester group ($-CS-O-R^I$, $-CO-S-R^I$, or $-CS-S-R^I$), a thiocarbonate group (a group in which at least one oxygen atom in $-O-CO-O-R^I$ is substituted with a sulfur atom), an amide group ($-CO-NR^N-R^I$), a urethane group ($-NR^N-CO-O-R^I$), a urea ($-NR^N-CO-NR^N-R^I$), and an imide group

The chemical formulae described by enclosing the names of the above-described functional groups in parentheses indicate the chemical structures of the groups.

It is noted that although the ester group is included in the thiocarbonyl group and the urethane group, the $-CO-O-R^I$ group included in these groups is not interpreted as the ester group. In addition, although the amide group is included in the urea group, the $-CO-NR^N-R^I$ group included in this group is not interpreted as the amide group. Although a group obtained by the cleavage of the dicarboxylic acid group or the anhydride group thereof may include an ester group ($-CO-O-R^I$), a carboxy group, an amide group, and the like, these groups are integrally interpreted as a group obtained by the cleavage of the dicarboxylic acid group or the anhydride group thereof without being separately interpreted as a functional group.

The functional group-containing constitutional component (I) has the above-described functional group, directly or through a linking group, in a partial structure that is incorporated into the main chain of the binder forming polymer.

In the functional group-containing constitutional component (I), the partial structure that is incorporated into the main chain is not unambiguously determined depending on the kind of the binder forming polymer (main chain) but is appropriately selected. For example, in a case of a chain polymerization polymer, a carbon chain (a carbon-carbon bond) can be mentioned.

A linking group $L^P$ that links the partial structure that is incorporated into the main chain to the above-described functional group is not particularly limited. However, examples thereof include an alkylene group (preferably having 1 to 12 carbon atoms, more preferably 1 to 6 carbon atoms, and still more preferably having 1 to 3 carbon atoms), an alkenylene group (preferably having 2 to 6 carbon atoms and more preferably having 2 or 3 carbon atoms), an arylene group (preferably having 6 to 24 carbon atoms and more preferably having 6 to 10 carbon atoms), an oxygen atom, a sulfur atom, an imino group ($-NR^N-$: $R^N$ represents a hydrogen atom, an alkyl group having 1 to 6 carbon atoms or an aryl group having 6 to 10 carbon atoms), a carbonyl group, a phosphate linking group (-O-P(OH)(O)-O-), a phosphonate linking group (-P(OH)(O)-O-), and a group involved in the combination thereof. However, it is preferable that the linking group $L^P$ is not a group obtained by removing $R^I$ from the functional group selected from the group (I) of functional groups.

In the present invention, the number of atoms constituting the linking group is preferably 1 to 36, more preferably 1 to 30, and still more preferably 1 to 24. The number of linking atoms of the linking group is preferably 16 or less, more preferably 12 or less, and still preferably 10 or less. The lower limit thereof is 1 or more. The number of linking atoms refers to the minimum number of atoms linking predetermined structural moieties. For example, in a case of $-O-C(=O)-CH_2-CH_2-S-$, the number of atoms that constitute the linking group is 10; however, the number of linking atoms is 5.

In each of the above-described functional groups, $R^I$ which serves as a terminal group represents a hydrogen atom, a substituent, or a polymerized chain. However, $R^I$ in $-CO-O-R^I$ represents a substituent or a polymerized chain. The substituent that can be adopted as $R^I$ is not particularly limited. Examples thereof include a group selected from the substituent Z described later. Among the above, an alkyl group is preferable. In particular, $R^I$ to be bonded to the ester group is preferably a combination of a short-chain alkyl group having 1 to 4 carbon atoms and a long-chain alkyl group having 5 to 24 carbon atoms. The polymerized chain that can be adopted as $R^I$ is not particularly limited, and examples thereof include a polymerized chain $P^C$ described later. The substituent or the polymerized chain that can be adopted as $R^I$ may further have a substituent, and the substituent which may be further contained is not particularly limited. However, examples thereof include a group selected from the substituents Z described later, where an alkoxy group, a hydroxy group, a carboxy group, a sulfonate group (sulfo group), a phosphate group, a phosphonate group, or the like is preferable.

$R^N$ in each of the above-described functional groups represents a hydrogen atom or a substituent. The substituent that can be adopted as $R^N$ is not particularly limited. Examples thereof include a group selected from the substituent Z described later. Among the above, an alkyl group is preferable. It is noted that two $R^N$'s in the urea group may be the same or different from each other.

The carboxylic acid group is not particularly limited; however, it includes a group obtained by removing one or more hydrogen atoms from a dicarboxylic acid anhydride (for example, a group represented by Formula (2a)), and a constitutional component itself (for example, a constitutional component represented by Formula (2b)) obtained by copolymerizing a polymerizable dicarboxylic acid anhydride as a polymerizable compound, and it further includes a group obtained by allowing a dicarboxylic acid anhydride to react with an active hydrogen compound, thereby cleaving the anhydride group. The group obtained by removing one or more hydrogen atoms from a dicarboxylic acid anhydride is preferably a group obtained by removing one or more hydrogen atoms from a cyclic dicarboxylic acid anhydride. Examples the dicarboxylic acid anhydride include acyclic dicarboxylic acid anhydrides such as acetic acid anhydride, propionic acid anhydride, and benzoic acid anhydride; and cyclic dicarboxylic acid anhydrides such as maleic acid anhydride, phthalic acid anhydride, fumaric acid anhydride, succinic acid anhydride, and itaconic acid anhydride. The polymerizable dicarboxylic acid anhydride is not particularly limited; however, examples thereof include a dicarboxylic acid anhydride having an unsaturated bond in the molecule, and a polymerizable cyclic dicarboxylic acid anhydride is preferable. Specific examples thereof include maleic acid anhydride and itaconic acid anhydride. Examples of the dicarboxylic acid anhydride group include a group represented by Formula (2a) and a constitutional component represented by Formula (2b); however, the present invention is not limited thereto. In each of the formulae, * represents a bonding position.

The active hydrogen compound is not particularly limited as long as it is a compound that reacts with a dicarboxylic acid anhydride group, and examples thereof include an alcohol compound, an amine compound, a thiol compound, and a compound having a polymerized chain $P^C$ (for example, a reactant of a chain transfer agent and the polymerized chain $P^C$).

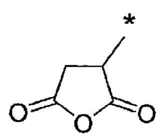

(2a)

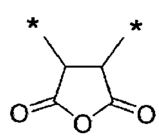

(2b)

The polymerized chain $P^C$ is not particularly limited, and a typical polymer, for example, a chain consisting of a sequential polymerization polymer or a chain polymerized polymer which will be described later can be applied. In the present invention, a chain consisting of a chain polymerization polymer is preferable, a polymerized chain consisting of a (meth)acrylic polymer or a polymerized chain consisting of a vinyl polymer is more preferable, and a polymerized chain consisting of a (meth)acrylic polymer is still more preferable. In a case where the polymerized chain contains two or more constitutional components, the bonding mode of the constitutional components is not particularly limited and may be random, alternating, or block.

The polymerized chain consisting of a (meth)acrylic polymer is not particularly limited; however, it preferably has

a constitutional component derived from the (meth)acrylic compound (M1) described later or a constitutional component derived from the vinyl compound (M2) described later. Among the above, it is more preferably a polymerized chain having a constitutional component derived from one or two or more (meth)acrylic acid ester compounds, and it is still more preferably a polymerized chain having a constitutional component derived from a (meth)acrylic acid alkyl ester compound. The (meth)acrylic acid alkyl ester compound preferably includes an ester compound of an alkyl group having 4 or more carbon atoms (preferably 6 or more carbon atoms) and can further include an ester compound of a short-chain alkyl group having 3 or less carbon atoms.

The group bonded to the terminal of the polymerized chain $P^C$ is not particularly limited, and an appropriate group can be adopted according to a polymerization method, a polymerization stopping method, or the like. Examples thereof include a hydrogen atom, an alkyl group, an aryl group, and a hydroxy group, as well as a chain transfer agent residue and an initiator residue. In terms of dispersion characteristics, preferred examples thereof include an alkyl group (the number of carbon atoms is preferably 1 to 20 and more preferably 4 to 20). This group may further have a substituent; however, it is preferably unsubstituted.

The number average molecular weight of the polymerized chain $P^C$ is appropriately determined; however, it is preferably 200 or more, more preferably 1,000 to 100,000, still more preferably 1,000 to 50,000, and particularly preferably 2,000 to 20,000, in terms of the number average molecular weight (including the linking group $P^P$) in the measuring method described later.

It is preferable that the polymerized chain $P^C$ is bonded to each of the above-described functional groups through the linking group $P^P$. That is, it is preferable that $R^I$ is formed of the linking group $P^P$ and the polymerized chain $P^C$. The linking group $P^P$ is not particularly limited, and preferred examples thereof include the above-described linking group $L^P$. However, the linking group $P^P$ is more preferably a group composed of a combination of an alkylene group, an arylene group, a carbonyl group, an oxygen atom, a sulfur atom, and an imino group, still more preferably a group composed of a combination of an alkylene group, an arylene group, a carbonyl group, an oxygen atom, and an imino group, and particularly preferably a group containing a -CO-O- group or a -CO-N($R^N$)- group (here, $R^N$ is as described above), and an alkylene group.

Further, preferred examples of the linking group $P^P$ also include a linking group including a structural part derived from a chain transfer agent to be used for the synthesis of the above-described polymerized chain $P^C$, a polymerization initiator, or the like; and a linking group obtained by bonding this structural part to a structural part derived from the (meth) acrylic compound (M1) that reacts with the chain transfer agent. The chain transfer agent is not particularly limited; however, examples thereof include 3-mercaptopropionic acid, mercaptoacetic acid, 2-mercaptopropionic acid, 3-mercaptoisobutyric acid, 2-mercaptoethanol, 6-mercapto-1-hexanol, 2-amino, ethanethiol, and 2-aminoethanethiol hydrochloride. Examples of the functional group-containing constitutional component (I) having the polymerized chain $P^C$ include a constitutional component in which a structural moiety derived from a chain transfer agent or the like is bonded to a structural moiety derived from the (meth)acrylic compound (M1) that reacts with the chain transfer agent, or a dicarboxylic acid group. Examples of the constitutional component in which a structural moiety derived from a chain transfer agent or the like is bonded to a structural moiety derived from the (meth)acrylic compound (M1) include a constitutional component (for example, a polymer M-7 synthesized in Examples) in which the polymerized chain $P^C$ is bonded to a partial structure that is incorporated into the main chain, through a -CO-O-alkylene group-X-CO-(X)n-alkylene-S-group. Here, X represents an oxygen atom or -NH-, and n is 0 or 1. In addition, examples of the constitutional component in which a structural moiety derived from a chain transfer agent or the like is bonded to a structural moiety derived from the dicarboxylic acid include a constitutional component (for example, a polymer M-4 synthesized in Examples) in which the polymerized chain $P^C$ is bonded to a partial structure that is incorporated into the main chain, through a dicarboxylic acid group that has been subjected to a ring-opening addition reaction with a chain transfer agent or the like.

The imide group is not particularly limited; however, examples thereof include a group in which the oxygen atom bonded to two carboxy groups in the dicarboxylic acid anhydride group is substituted with a nitrogen atom.

The carboxy group and the dicarboxylic acid group may form a salt. Examples of the salt include salts of various metal salts and a salt of ammonium or amine.

- Constitutional component (AM) -

It is also preferable that the binder forming polymer has one kind or two or more kinds of constitutional components (AM) derived from a (meth)acrylic acid ester compound.

The constitutional component (AM) is not particularly limited, and examples thereof include a constitutional component derived from a (meth)acrylic acid ester compound (M1) described later. It is noted that the constitutional component (AM) is one kind of the above-described functional group-containing constitutional component (I) and corresponds to a functional group-containing constitutional component in which an ester group, a carboxy group, or an amide group selected from the above-described functional group (I) is directly bonded to a partial structure that is incorporated into the main chain.

- Another constitutional component (Z) -

The binder forming polymer may have one kind or two or more kinds of constitutional components (referred to as "other constitutional component (Z)") that do not correspond to any of the constitutional component (I) and the constitutional component (AM).
The other constitutional component (Z) is not particularly limited, and a constitutional component derived from a vinyl compound (M2) described later, and a constitutional component that is essential for forming a main chain of various polymers.

- Binder forming polymer -

The binder forming polymer is not particularly limited, and various publicly known polymers can be used.
The primary structure (the bonding mode of the constitutional component) of the binder forming polymer is not particularly limited and any bonding mode such as a random structure, a block structure, an alternating structure, or a graft structure can be adopted.
Preferred examples of the binder forming polymer include a polymer having, in the main chain, at least one bond selected from a urethane bond, a urea bond, an amide bond, an imide bond, and an ester bond, or a polymerized chain of carbon-carbon double bonds.
The above bond is not particularly limited as long as it is contained in the main chain of the polymer, and it may have any aspect in which it is contained in the constitutional component (the repeating unit) and/or an aspect in which it is contained as a bond that connects different constitutional components to each other). Further, the above-described bond contained in the main chain is not limited to one kind, it may be 2 or more kinds, and it is preferably 1 to 6 kinds and more preferably 1 to 4 kinds. In this case, the bonding mode of the main chain is not particularly limited. The main chain may randomly have two or more kinds of bonds and may be a main chain that is segmented to a segment having a specific bond and a segment having another bond.
Examples of the polymer having, among the above bonds, a urethane bond, a urea bond, an amide bond, an imide bond, or an ester bond in the main chain include sequential polymerization (polycondensation, polyaddition, or addition condensation) polymers such as polyurethane, polyurea, polyamide, polyimide, and polyester, polysiloxane, and copolymers thereof.
In the present invention, the polymerized chain of carbon-carbon double bonds refers to a polymerized chain that is obtained by polymerizing carbon-carbon double bonds (ethylenic unsaturated groups), and specifically, it refers to a polymerized chain obtained by polymerizing (homopolymerizing or copolymerizing) a monomer having a carbon-carbon unsaturated bond.
Examples of the polymer having a polymerized chain of carbon-carbon double bonds in the main chain include chain polymerization polymers such as a fluoropolymer (a fluorine-containing polymer), a hydrocarbon polymer, a vinyl polymer, and a (meth)acrylic polymer, where a (meth)acrylic polymer is preferable.
Examples of the (meth)acrylic polymer include a polymer consisting of a (co)polymer containing 50% by mass or more of a constitutional component derived from a (meth)acrylic compound. Here, in a case where the functional group-containing constitutional component (I) is a constitutional component (which includes a constitutional component of a monoester form obtained by allowing a dicarboxylic acid anhydride group to react with an active hydrogen-containing compound) which is derived from a (meth)acrylic compound, the content of each constitutional component is included for calculation in the content of the constitutional component derived from the (meth)acrylic compound. The content of the constitutional component derived from a (meth)acrylic compound can be set to be the same as the content of the functional group-containing constitutional component (I) described later; however, it is more preferably 60% by mass or more, and still more preferably 70% by mass or more. The upper limit content can be set to 100% by mass; however, it can also be set to 97% by mass or less. Further, the (meth)acrylic polymer is also preferably a copolymer with the vinyl compound (M2) other than the (meth)acrylic compound (M1). In this case, the content of the constitutional component derived from the vinyl compound (M2) is 50% by mass or less, and it is preferably 3% to 40% by mass and more preferably 3% to 30% by mass.
Examples of the hydrocarbon polymer include polyethylene, polypropylene, natural rubber, polybutadiene, polyisoprene, polystyrene, a styrene-butadiene copolymer, a styrene-based thermoplastic elastomer, polybutylene, an acrylonitrile-butadiene copolymer, or a hydrogenated polymer of these, as well as a copolymer with a copolymerizable compound such as the (meth)acrylic compound (M1) or the vinyl compounds (M2) and a copolymer containing the functional group-containing constitutional component (I). The styrene-based thermoplastic elastomer or the hydride thereof is not particularly limited. However, examples thereof include a styrene-ethylene-butylene-styrene block copolymer (SEBS), a styrene-isoprene-styrene block copolymer (SIS), a hydrogenated SIS, a styrene-butadiene-styrene block copolymer (SBS), a hydrogenated SBS, a styrene-ethylene-ethylene-propylene-styrene block copolymer (SEEPS), a styrene-ethylene-propylene-styrene block copolymer (SEPS), a styrene-butadiene rubber (SBR), a hydrogenated a

styrene-butadiene rubber (HSBR), and furthermore, a random copolymer corresponding to each of the above-described block copolymers such as SEBS. In the present invention, the hydrocarbon polymer preferably has no unsaturated group (for example, a 1,2-butadiene constitutional component) that is bonded to the main chain from the viewpoint that the formation of chemical crosslink can be suppressed.

Examples of the fluoropolymer also include polytetrafluoroethylene (PTFE), polyvinylidene difluoride (PVDF), a copolymer of polyvinylidene difluoride and hexafluoropropylene (PVDF-HFP), and a copolymer (PVDF-HFP-TFE) of polyvinylidene difluoride, hexafluoropropylene, and tetrafluoroethylene, as well as a copolymer with a copolymerizable compound such as the (meth)acrylic compound (M1) or the vinyl compounds (M2) and a copolymer containing the functional group-containing constitutional component (I).

In PVDF-HFP, the copolymerization ratio [PVDF:HFP] (mass ratio) of PVDF to HFP is not particularly limited; however, it is preferably 9:1 to 4:6 and more preferably 9:1 to 7: 3 from the viewpoint of adhesiveness. In PVDF-HFP-TFE, the copolymerization ratio [PVDF:HFP:TFE] (mass ratio) of PVDF, HFP, and TFE is not particularly limited; however, it is preferably 20 to 60:10 to 40: 5 to 30, and more preferably 25 to 50:10 to 35:10 to 25.

Examples of the (meth)acrylic compound (M1) include a (meth)acrylic acid compound, a (meth)acrylic acid ester compound, a (meth)acrylamide compound, and a (meth)acrylonitrile compound. Among them, a (meth)acrylic acid ester compound is preferable. Examples of the (meth)acrylic acid ester compound include a (meth)acrylic acid alkyl ester compound and a (meth)acrylic acid aryl ester compound, where a (meth)acrylic acid alkyl ester compound is preferable. The number of carbon atoms of the alkyl group that constitutes the (meth)acrylic acid alkyl ester compound is not particularly limited; however, it can be set to, for example, 1 to 24, and it is preferably 3 to 20, more preferably 4 to 16, and still more preferably 6 to 14, in terms of dispersion characteristics and adhesiveness. The number of carbon atoms of the aryl group that constitutes the aryl ester is not particularly limited; however, it can be set to, for example, 6 to 24, and it is preferably 6 to 10 and preferably 6. In the (meth)acrylamide compound, the nitrogen atom of the amide group may be substituted with an alkyl group or an aryl group.

The vinyl compound (M2) is not particularly limited. However, it is preferably a vinyl compound that is copolymerizable with the (meth)acrylic compound (M1), and examples thereof include an aromatic vinyl compound such as a styrylated compound, a vinyl naphthalene compound, a vinyl carbazole compound, a vinyl imidazole compound, or a vinyl pyridine compound, as well as an allyl compound, a vinyl ether compound, a vinyl ester compound (for example, a vinyl acetate compound), a dialkyl itaconate compound), and the above-described polymerizable cyclic dicarboxylic acid anhydride. Examples of the vinyl compound include the "vinyl monomer" described in JP2015-88486A.

The (meth)acrylic compound (M1) and the vinyl compound (M2) may have a substituent. The substituent is not particularly limited. Examples thereof include a group selected from the substituent Z described later, and preferred examples thereof include a preferable substituent which may be included in the substituent that can be adopted as $R^I$.

The content of each constitutional component in the binder forming polymer is not particularly limited, and it is determined by appropriately considering the physical properties and the like of the entire polymer, and is set, for example, in the following range.

The content of each constitutional component in the binder forming polymer is set, for example, in the following range such that the total content of all the constitutional components is 100% by mass.

It is noted that in a case where the binder forming polymer has a plurality of specific constitutional components, the content of the constitutional components is defined as the total content thereof.

The content of the functional group-containing constitutional component (I) is not particularly limited; however, it can be appropriately adjusted in consideration of dispersion characteristics and the like. The content of the functional group-containing constitutional component (I) is, for example, preferably 1% to 100% by mass, more preferably 10% to 100% by mass, and still more preferably 50% to 100% by mass with respect to the total content of all the constitutional components. The upper limit value thereof can be set to 100% by mass. It is noted that in a case where the binder forming polymer has the constitutional component (AM), the content of the constitutional component (AM) is also included for calculation in the content of the functional group-containing constitutional component (I).

The content of the constitutional component (AM) is not particularly limited; however, it is appropriately determined depending on the kind of the binder forming polymer. For example, in a case where the binder forming polymer is a (meth)acrylic polymer, the content thereof is 50% by mass or more with respect to the total content of all the constitutional components, and the preferred content thereof is as described above regarding the (meth)acrylic polymer. On the other hand, in a case where the binder forming polymer is a polymer other than the (meth)acrylic polymer, the content of the constitutional component (AM) is preferably 1% to 49% by mass and more preferably 1% to 20% by mass with respect to the total content of all the constitutional components.

The content of the other constitutional component (Z) is not particularly limited; however, it can be set to a remainder obtained by subtracting the contents of the constitutional component (I) and the constitutional component (AM) from the total content of all the constitutional components, and for example, it is preferably 0% to 50% by mass and more preferably 0% to 20% by mass.

The binder forming polymer may have a substituent. The substituent is not particularly limited; however,

examples thereof preferably include a group selected from the following substituent Z.

- Substituent Z -

The substituent Z includes an alkyl group (preferably an alkyl group having 1 to 20 carbon atoms, for example, methyl, ethyl, isopropyl, t-butyl, pentyl, heptyl, 1-ethylheptyl, benzyl, 2-ethoxyethyl, or 1-carboxymethyl), an alkenyl group (preferably an alkenyl group having 2 to 20 carbon atoms, for example, vinyl, allyl, or oleyl), an alkynyl group (preferably an alkynyl group having 2 to 20 carbon atoms, for example, ethynyl, butadiynyl, or phenyl-ethynyl), a cycloalkyl group (preferably a cycloalkyl group having 3 to 20 carbon atoms, for example, cyclopropyl, cyclopentyl, cyclohexyl, or 4-methylcyclohexyl; although the meaning of the alkyl group described in the present invention typically include a cycloalkyl group, the alkyl group and the cycloalkyl group are separately described here), an aryl group (preferably an aryl group having 6 to 26 carbon atoms, for example, phenyl, 1-naphthyl, 4-methoxyphenyl, 2-chlorophenyl, or 3-methylphenyl), an aralkyl group (preferably an aralkyl group having 7 to 23 carbon atoms, for example, benzyl or phenethyl), a heterocyclic group (preferably a heterocyclic group having 2 to 20 carbon atoms and more preferably a 5- or 6-membered heterocyclic group having at least one oxygen atom, one sulfur atom, or one nitrogen atom; the heterocyclic group includes an aromatic heterocyclic group and an aliphatic heterocyclic group; for example, a tetrahydropyran ring group, a tetrahydrofuran ring group, a 2-pyridyl group, a 4-pyridyl group, a 2-imidazolyl group, a 2-benzimidazolyl group, a 2-thiazolyl group, a 2-oxazolyl group, or a pyrrolidone group), an alkoxy group (preferably an alkoxy group having 1 to 20 carbon atoms, for example, methoxy, ethoxy, isopropyloxy, or benzyloxy), an aryloxy group (preferably an aryloxy group having 6 to 26 carbon atoms, for example, phenoxy, 1-naphthyloxy, 3-methylphenoxy, or 4-methoxyphenoxy), a heterocyclic oxy group (a group in which an -O- group is bonded to the above-described heterocyclic group), an alkoxycarbonyl group (preferably an alkoxycarbonyl group having 2 to 20 carbon atoms, for example, ethoxycarbonyl, 2-ethylhexyloxycarbonyl, or dodecyloxycarbonyl), an aryloxycarbonyl group (preferably an aryloxycarbonyl group having 6 to 26 carbon atoms, for example, phenoxycarbonyl, 1-naphthyloxycarbonyl, 3-methylphenoxycarbonyl, or 4-methoxyphenoxycarbonyl), a heterocyclic oxycarbonyl group (a group in which an -O-CO- group is bonded to the above-described heterocyclic group), an amino group (preferably an amino group having 0 to 20 carbon atoms, an alkylamino group, or an arylamino group, for example, amino ($-NH_2$), N,N-dimethylamino, N,N-diethylamino, N-ethylamino, or anilino), a sulfamoyl group (preferably a sulfamoyl group having 0 to 20 carbon atoms, for example, N,N-dimethylsulfamoyl or N-phenylsufamoyl), an acyl group (including an alkylcarbonyl group, an alkenylcarbonyl group, an alkynylcarbonyl group, an arylcarbonyl group, and a heterocyclic carbonyl group; preferably an acyl group having 1 to 20 carbon atoms, for example, acetyl, propionyl, butyryl, octanoyl, hexadecanoyl, acryloyl, methacryloyl, crotonoyl, benzoyl, a naphthoyl, or nicotinoyl), an acyloxy group (including an alkylcarbonyloxy group, an alkenylcarbonyloxy group, an alkynylcarbonyloxy group, and a heterocyclic carbonyloxy group; preferably an acyloxy group having 1 to 20 carbon atoms, for example, acetyloxy, propionyloxy, butyryloxy, octanoyloxy, hexadecanoyloxy, acryloyloxy, methacryloyloxy, crotonoyloxy, or nicotinoyloxy), an aryloyloxy group (preferably an aryloyloxy group having 7 to 23 carbon atoms, for example, benzoyloxy or naphthoyloxy), a carbamoyl group (preferably a carbamoyl group having 1 to 20 carbon atoms, for example, N,N-dimethylcarbamoyl or N-phenylcarbamoyl), an acylamino group (preferably an acylamino group having 1 to 20 carbon atoms, for example, acetylamino or benzoylamino), an alkylthio group (preferably an alkylthio group having 1 to 20 carbon atoms, for example, methylthio, ethylthio, isopropylthio, or benzylthio), an arylthio group (preferably an arylthio group having 6 to 26 carbon atoms, for example, phenylthio, 1-naphthylthio, 3-methylphenylthio, or 4-methoxyphenylthio), a heterocyclic thio group (a group in which an -S- group is bonded to the above-described heterocyclic group), an alkylsulfonyl group (preferably an alkylsulfonyl group having 1 to 20 carbon atoms, for example, methylsulfonyl or ethylsulfonyl), an arylsulfonyl group (preferably an arylsulfonyl group having 6 to 22 carbon atoms, for example, benzenesulfonyl), an alkylsilyl group (preferably an alkylsilyl group having 1 to 20 carbon atoms, for example, monomethylsilyl, dimethylsilyl, trimethylsilyl, or triethylsilyl), an arylsilyl group (preferably an arylsilyl group having 6 to 42 carbon atoms, for example, triphenylsilyl), an alkoxysilyl group (preferably an alkoxysilyl group having 1 to 20 carbon atoms, for example, monomethoxysilyl, dimethoxysilyl, trimethoxysilyl, or triethoxysilyl), an aryloxysilyl group (preferably an aryloxysilyl group having 6 to 42 carbon atoms, for example, triphenyloxysilyl), a phosphoryl group (preferably a phosphate group having 0 to 20 carbon atoms, for example, $-OP(=O)(R^P)_2$), a phosphonyl group (preferably a phosphonyl group having 0 to 20 carbon atoms, for example, $-P(=O)(R^P)_2$), a phosphinyl group (preferably a phosphinyl group having 0 to 20 carbon atoms, for example, $-P(R^P)_2$), a phosphonate group (preferably a phosphonate group having 0 to 20 carbon atoms, for example, $-PO(OR^P)_2$), a sulfo group (a sulfonate group), a carboxy group, a hydroxy group, a sulfanyl group, a cyano group, and a halogen atom (for example, a fluorine atom, a chlorine atom, a bromine atom, or an iodine atom). $R^P$ represents a hydrogen atom or a substituent (preferably a group selected from the substituent Z).

In addition, each group exemplified in the substituent Z may be further substituted with the substituent Z.

The alkyl group, the alkylene group, the alkenyl group, the alkenylene group, the alkynyl group, the alkynylene group, and/or the like may be cyclic or chained, may be linear or branched.

The binder forming polymer can be synthesized by selecting a raw material compound and polymerizing the raw

material compound by a publicly known method.

The method of incorporating each functional group is not particularly limited, and examples thereof include a method of copolymerizing a compound having a functional group, a method of using a polymerization initiator having (generating) the above-described functional group or a chain transfer agent, a method of using a polymeric reaction, an ene reaction or ene-thiol reaction with a double bond, and an atom transfer radical polymerization (ATRP) method using a copper catalyst. In addition, a functional group can be introduced by using a functional group that is present in the main chain, the side chain, or the terminal of the polymer, as a reaction point. For example, a functional group can be introduced by various reactions with a dicarboxylic acid anhydride group in a polymerized chain using a compound having a functional group.

Specific examples of the binder forming polymer include each of polymers synthesized in Examples; however, the present invention is not limited thereto.

- Physical properties, characteristics, or like of binder forming polymer or polymer binder

The polymer binder or the binder forming polymer, which is used in the present invention, preferably has the following physical properties or characteristics.

The mass average molecular weight of the binder forming polymer is not particularly limited. It is, for example, preferably 5,000 or more, more preferably 30,000 or more, and still more preferably 100,000 or more. The upper limit thereof is practically 5,000,000 or less, preferably 2,000,000 or less, more preferably 1,000,000 or less, still more preferably 600,000 or less, and particularly preferably less than 500,000.

The mass average molecular weight of the binder forming polymer can be appropriately adjusted by changing the kind, content, polymerization time, polymerization temperature, and the like of the polymerization initiator.

In the present invention, unless otherwise specified, molecular weights of a polymer, a polymerized chain, and a macromonomer refer to a mass average molecular weight and number average molecular weight in terms of standard polystyrene conversion, which are determined by gel permeation chromatography (GPC). The measuring method thereof includes, basically, a method in which conditions are set to Conditions 1 or Conditions 2 (preferential) described below. However, depending on the kind of polymer or macromonomer, an appropriate eluent may be suitably selected and used.

(Condition 1)

Column: Connect two TOSOH TSKgel Super AWM-H (product name, manufactured by Tosoh Corporation)
Carrier: 10 mM LiBr/N-methylpyrrolidone
Measurement temperature: 40°C
Carrier flow rate: 1.0 ml/min
Sample concentration: 0.1% by mass
Detector: refractive index (RI) detector

(Condition 2)

Column: A column obtained by connecting TOSOH TSKgel Super HZM-H, TOSOH TSKgel Super HZ4000, and TOSOH TSKgel Super HZ2000 (all of which are product names, manufactured by Tosoh Corporation)
Carrier: tetrahydrofuran
Measurement temperature: 40°C
Carrier flow rate: 1.0 ml/min
Sample concentration: 0.1% by mass
Detector: refractive index (RI) detector

The moisture concentration of the binder (the binder forming polymer) is preferably 100 ppm (in terms of mass) or less. Further, as this binder, a polymer may be crystallized and dried, or a binder dispersion liquid may be used as it is.

It is preferable that the binder forming polymer is noncrystalline. In the present invention, the description that a polymer is "noncrystalline" typically refers to that no endothermic peak due to crystal melting is observed in a case where the measurement is carried out at the glass transition temperature.

The binder forming polymer may be a non-crosslinked polymer or a crosslinked polymer. In addition, in a case where the crosslinking of the polymer progresses due to heating or voltage application, the molecular weight may be higher than the above-described molecular weight. Preferably, the binder forming polymer has a mass average molecular weight in the above-described range at the start of use of the non-aqueous secondary battery.

The binder forming polymer, which is contained in the polymer binder, may be one kind or two or more kinds.

The polymer binder contained in the binder composition may be one kind or two or more kinds. In a case where the

polymer binder contains two or more kinds of polymer binders, it can contain a polymer binder that has the above-described functional group-containing constitutional component (I) and a polymer binder that does not have the above-described functional group-containing constitutional component (I).

The content of the polymer binder in the binder composition is not particularly limited; however, it is preferably 1% to 70% by mass, more preferably 5% to 50% by mass, and still more preferably 8% to 40% by mass, in terms of storage stability and the like.

<Other components>

In addition to the organic solvent and the polymer binder, the binder composition may contain, as other components, various additives, various components that are appropriately contained in the composition for a non-aqueous secondary battery composition, which will be described later, and the like. In addition, it may contain a polymer binder that is insoluble and is present in a solid state in an organic solvent. As such a polymer binder, a polymer binder that is generally used as a binder for an all-solid state secondary battery can be used without particular limitation. The content of the other components in the binder composition is not particularly limited and is appropriately determined.

<Preparation of binder composition>

The binder composition according to the embodiment of the present invention can be prepared as a mixture by mixing a polymer binder, an organic solvent, and other components with, for example, various mixers that are typically used. Here, in the present invention, the binder composition is prepared by actively mixing the low-boiling point organic solvent (A) in addition to the high-boiling point organic solvent (B). It can also be prepared, for example, by mixing a polymer binder as a solid such as a powder, the low-boiling point organic solvent (A), and the high-boiling point organic solvent (B). In addition, it can also be prepared, as a polymer liquid (solution or dispersion) after synthesis, by mixing the high-boiling point organic solvent (B) or the low-boiling point organic solvent (A) with a mixture of the polymer binder and the low-boiling point organic solvent (A) or high-boiling point organic solvent (B). Further, it can also be prepared by stopping solvent substitution when the content of the low-boiling point organic solvent (A) has reached the above-described range in a case where the polymer liquid after the synthesis is subjected to solvent substitution, and then appropriately adding the high-boiling point organic solvent (B).

The mixing method is not particularly limited, and it can be carried out using a publicly known mixer such as a ball mill, a beads mill, a planetary mixer, a blade mixer, a roll mill, a kneader, a disc mill, a self-rotation type mixer, or a narrow gap type disperser.

The mixing conditions are not particularly limited either. For example, each of the above components may be mixed collectively or may be mixed sequentially. The mixing conditions are not particularly limited. The mixing temperature is preferably set to a temperature at which the low-boiling point organic solvent (A) during mixing does not volatilize. For example, it can be set to a temperature lower than the boiling point of the low-boiling point organic solvent (A), and more specifically, it can be set to a temperature of 15°C to 50°C. In addition, the rotation speed of the self-rotation type mixer or the like can be set to 200 to 3,000 rpm. The mixing atmosphere may be any atmosphere such as atmospheric air, dry air (the dew point: -20°C or lower), or inert gas (for example, an argon gas, a helium gas, or a nitrogen gas).

Since the binder composition according to the embodiment of the present invention has excellent storage stability, it can be stored after the preparation and does not have to be prepared each time when it is used.

[Composition for non-aqueous secondary battery]

The composition for a non-aqueous secondary battery according to the embodiment of the present invention is a composition containing the binder composition according to the embodiment of the present invention as a polymer binder component (further, a dispersion medium component). It is noted that in the present invention, in a case where the composition for a non-aqueous secondary battery is used as a material that forms a constitutional layer of an all-solid state secondary battery, it is referred to as an inorganic solid electrolyte-containing composition, and in a case where it is used as a material that forms an electrode layer of a non-aqueous electrolytic solution secondary battery, it is also referred to as a non-aqueous electrolytic solution secondary battery electrode composition.

The composition for a non-aqueous secondary battery according to the embodiment of the present invention contains, in addition to the binder composition according to the embodiment of the present invention, an appropriate component depending on the use application and the like. For example, in a case of being a non-aqueous electrolytic solution secondary battery electrode composition, it contains the binder composition according to the embodiment of the present invention, an active material, and appropriately other components which will be described later, a dispersion medium, and the like. On the other hand, in a case of being an inorganic solid electrolyte-containing composition, it contains the binder composition according to the embodiment of the present invention, an inorganic solid electrolyte

having ion conductivity of a metal belonging to Group 1 or Group 2 in the periodic table, and appropriately an active material, a conductive auxiliary agent, a dispersion medium, and other components described later.

In the present invention, in the composition for a non-aqueous secondary battery, each component constituting the binder composition according to the embodiment of the present invention does not need to be integrally present as the binder composition, and each component may be independently (separately) present.

In addition, in the composition for a non-aqueous secondary battery, the polymer binder may be insoluble and be present in a solid state in a dispersion medium in the composition (including an organic solvent of the binder composition; hereinafter, the same meaning applies unless otherwise specified); however, it is preferably dissolved therein. The description of being dissolved in a dispersion medium has the same meaning as being dissolved in the above-described organic solvent, except that the organic solvent is read as the dispersion medium. In a case where the polymer binder is dissolved to be present in the composition for a non-aqueous secondary battery, the polymer binder stably exhibits the adsorption characteristics with respect to solid particles and a function of dispersing solid particles in a dispersion medium, and thus it is possible to maintain the excellent dispersibility of the solid particles in the composition for a non-aqueous secondary battery. In addition, it is possible to suppress the (re)aggregation or precipitation of the solid particles and realize excellent dispersion stability even with the lapse of time or the like. Further, it is possible to reinforce the adhesiveness between the solid particles or the adhesiveness to the collector, thereby enhancing the effect of improving the cycle characteristics of the all-solid state secondary battery.

It is noted that the solubility of the polymer binder in the dispersion medium can be appropriately imparted by the kind of the binder forming polymer, the composition of the binder forming polymer (the kind and the content of the constitutional component), the mass average molecular weight of the binder forming polymer, and the kind of the above-described functional group (I) or the content thereof, as well as a combination with the dispersion medium, and the like.

The composition for a non-aqueous secondary battery according to the embodiment of the present invention exhibits excellent dispersion characteristics and excellent handleability. Therefore, a non-aqueous secondary battery having a constitutional layer formed of the composition for a non-aqueous secondary battery according to the embodiment of the present invention has low resistance and also has excellent cycle characteristics.

Although the details of the reason for the above are not yet clear, they are considered to be as follows.

Since the binder in the binder composition according to the embodiment of the present invention is dissolved in an organic solvent, the binders are less likely to aggregate and adhere to each other even in the composition for a non-aqueous secondary battery, and the dispersibility of the polymer binder itself is improved. In addition, it is considered that the low-boiling point organic solvent (A) derived from the binder composition assists the action of improving the dispersion characteristics and the handleability of the solid particles by adsorbing the polymer binder that is highly dispersed. As a result, it is considered that the solid particles can be highly dispersed (the initial dispersibility is excellent) by suppressing aggregation, precipitation, and the like, the excellent initial dispersibility can be maintained and reproduced even with the passage of time (the dispersion stability is excellent), and moreover, appropriate fluidity is exhibited (the handleability is excellent). Therefore, the composition for a non-aqueous secondary battery according to the embodiment of the present invention can construct sufficient conduction paths (an ion conduction path and an electron conduction path) by maintaining the contact between the solid particles having suppressed uneven distribution, while firmly adhering or bonding the solid particles to each other, which makes it possible to form a constitutional layer in which the interface resistance is reduced. This constitutional layer makes it difficult for overcurrent to be generated during charging and discharging of an all-solid state secondary battery and also makes it possible to prevent the deterioration of solid particles.

In a case where the composition for a non-aqueous secondary battery according to the embodiment of the present invention, which exhibits the above-described action, is used as a constitutional layer forming material, it is possible to manufacture a sheet for an all-solid state secondary battery, which has a low resistance constitutional layer in which solid particles are firmly adhered, and furthermore, an all-solid state secondary battery that has low resistance and exhibits cyclic characteristics.

In the composition for a non-aqueous secondary battery according to the embodiment of the present invention, it is conceived that the polymer binder is adsorbed to the solid particles and interposed between the solid particles to exhibit a function of dispersing the solid particles in a dispersion medium. Here, the adsorption of the polymer binder to each solid particle is not particularly limited; however, it includes not only physical adsorption but also chemical adsorption (adsorption by chemical bond formation, adsorption by transfer of electrons, or the like).

The composition for a non-aqueous secondary battery according to the embodiment of the present invention is preferably a slurry in which solid particles are dispersed in a dispersion medium.

On the other hand, the polymer binder functions as a binding agent that firmly binds solid particles to each other in a constitutional layer formed of the composition for a non-aqueous secondary battery. Further, it also functions as a binding agent that firmly binds the base material such as a collector and solid particles. It is noted that in the composition for a non-aqueous secondary battery, the polymer binder may or may not have a function of binding solid particles to each other.

The composition for a non-aqueous secondary battery according to the embodiment of the present invention is preferably a non-aqueous composition. In the present invention, the non-aqueous composition has the same meaning as

the binder composition.

Since the composition for a non-aqueous secondary battery according to the embodiment of the present invention exhibits the above-described excellent characteristics, it can be used as a material that forms a sheet for a non-aqueous secondary battery (preferably, a sheet for an all-solid state secondary battery) and an electrode layer (preferably, a constitutional layer of an all-solid state secondary battery) of a non-aqueous secondary battery.

The composition for a non-aqueous secondary battery according to the embodiment of the present invention also includes an aspect in which an active material and the like are contained in addition to the inorganic solid electrolyte (the composition in this aspect may be referred to as the "electrode composition").

Hereinafter, components which are contained in the composition for a non-aqueous secondary battery according to the embodiment of the present invention and components which can be contained therein will be described.

<Binder composition>

The composition for a non-aqueous secondary battery according to the embodiment of the present invention contains the above-described binder composition. The content of the binder composition in the composition for a non-aqueous secondary battery can be appropriately determined in consideration of the content of the polymer binder described later, the content of the organic solvent, and the like; however, it is usually set to a proportion which is the content of the polymer binder described later.

(Polymer binder)

The composition for a non-aqueous secondary battery according to the embodiment of the present invention contains a polymer binder derived from the above-described binder composition. The polymer binder is as described above. It is noted that in the present invention, the above-described polymer binder that is used in the binder composition can be appropriately added and mixed in addition to the binder composition.

The content of the polymer binder in the composition for a non-aqueous secondary battery is not particularly limited. However, in terms of dispersion characteristics and ion conductivity as well as binding properties, it is preferably 0.1% to 8.0% by mass, more preferably 0.2% to 4.0% by mass, and still more preferably 0.3% to 2.5% by mass. In addition, for the same reason, the content of the polymer binder in 100% by mass of the solid content of the composition for a non-aqueous secondary battery is preferably 0.1% to 10.0% by mass, more preferably 0.3% to 5.0% by mass, and still more preferably 0.4% to 3.0% by mass.

In the present invention, the mass ratio [(the mass of the inorganic solid electrolyte + the mass of the active material)/(the total mass of the polymer binder)] of the total mass (total amount) of the inorganic solid electrolyte and the active material to the mass of the polymer binder in the solid content of 100% by mass is preferably in a range of 1,000 to 1. Further, this ratio is more preferably 500 to 2 and still more preferably 100 to 10.

[Organic solvent]

The composition for a non-aqueous secondary battery according to the embodiment of the present invention contains an organic solvent derived from the above-described binder composition. The organic solvent, the low-boiling point organic solvent (A), and the high-boiling point organic solvent (B) are as described above. The kind of the organic solvent, particularly the kind of the high-boiling point organic solvent (B) may be the same or different from the kind of the dispersion medium described below; however, it is preferably the same as the dispersion medium.

The present invention is characterized by the content of the low-boiling point organic solvent (A) in the binder composition, and the content of the low-boiling point organic solvent (A) in the composition for a non-aqueous secondary battery can be appropriately determined. The content of the low-boiling point organic solvent (A) in the composition for a non-aqueous secondary battery is determined by the using amount (the above-described content) of the binder composition and the content of the low-boiling point organic solvent (A) in the binder composition. The content in the composition for a non-aqueous secondary battery can be set to, for example, 1 to $5.0 \times 10^4$ ppm, and it is preferably 1 to $1.0 \times 10^3$ ppm.

In the composition for a non-aqueous secondary battery, the content of the organic solvent (the total amount of the content of the low-boiling point organic solvent (A) and the content of the high-boiling point organic solvent (B)) and the content of the high-boiling point organic solvent (B) can be appropriately determined depending on the using amount of the binder composition and each content of the binder composition described above.

<Inorganic solid electrolyte>

The composition for a non-aqueous secondary battery according to the embodiment of the present invention

contains an inorganic solid electrolyte.

In the present invention, the inorganic solid electrolyte is an inorganic solid electrolyte, where the solid electrolyte refers to a solid-shaped electrolyte capable of migrating ions therein. The inorganic solid electrolyte is clearly distinguished from the organic solid electrolyte (the polymeric electrolyte such as polyethylene oxide (PEO) or the organic solid electrolyte salt such as lithium bis(trifluoromethanesulfonyl)imide (LiTFSI)) since it does not include any organic substance as a principal ion-conductive material. In addition, the inorganic solid electrolyte is solid in a steady state and thus, typically, is not dissociated or liberated into cations and anions. In terms of this fact, the inorganic solid electrolyte is also clearly distinguished from inorganic electrolyte salts of which cations and anions are dissociated or liberated in electrolytic solutions or polymers ($LiPF_6$, $LiBF_4$, lithium bis(fluorosulfonyl)imide (LiFSI), LiCl, and the like). The inorganic solid electrolyte is not particularly limited as long as it has an ion conductivity of a metal belonging to Group 1 or Group 2 in the periodic table and generally does not have electron conductivity.

As the inorganic solid electrolyte, a solid electrolyte material that is typically used for an all-solid state secondary battery can be appropriately selected and used. Examples of the inorganic solid electrolyte include (i) a sulfide-based inorganic solid electrolyte, (ii) an oxide-based inorganic solid electrolyte, (iii) a halide-based inorganic solid electrolyte, and (iv) a hydride-based inorganic solid electrolyte. The sulfide-based inorganic solid electrolytes are preferably used from the viewpoint that it is possible to form a more favorable interface between the active material and the inorganic solid electrolyte.

In a case where the all-solid state secondary battery according to the embodiment of the present invention is a lithium ion battery, the inorganic solid electrolyte preferably has a lithium ion conductivity.

(i) Sulfide-based inorganic solid electrolyte

The sulfide-based inorganic solid electrolyte is preferably an electrolyte that contains a sulfur atom, has an ion conductivity of a metal belonging to Group 1 or Group 2 in the periodic table, and has electron-insulating properties. The sulfide-based inorganic solid electrolytes are preferably inorganic solid electrolytes which contain, as elements, at least Li, S, and P and have a lithium ion conductivity; however, the sulfide-based inorganic solid electrolytes may appropriately include elements other than Li, S, and P.

Examples of the sulfide-based inorganic solid electrolyte include an inorganic solid electrolyte having an ion conductivity of the lithium ion, which satisfies a composition represented by the following Formula (S1).

$$L_{a1}M_{b1}P_{c1}S_{d1}A_{e1} \qquad (S1)$$

In Formula (S1), L represents an element selected from Li, Na, or K and is preferably Li. M represents an element selected from B, Zn, Sn, Si, Cu, Ga, Sb, Al, or Ge. A represents an element selected from I, Br, Cl, or F. a1 to e1 represent the compositional ratios between the respective elements, and a1:b1:c1:d1:e1 satisfies 1 to 12:0 to 5:1:2 to 12:0 to 10. a1 is preferably 1 to 9 and more preferably 1.5 to 7.5. b1 is preferably 0 to 3 and more preferably 0 to 1. d1 is preferably 2.5 to 10 and more preferably 3.0 to 8.5. e1 is preferably 0 to 5 and more preferably 0 to 3.

The compositional ratios among the respective elements can be controlled by adjusting the amounts of raw material compounds blended to manufacture the sulfide-based inorganic solid electrolyte as described below.

The sulfide-based inorganic solid electrolyte may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two or more raw materials of, for example, lithium sulfide ($Li_2S$), phosphorus sulfide (for example, diphosphorus pentasulfide ($P_2S_5$)), a phosphorus single body, a sulfur single body, sodium sulfide, hydrogen sulfide, lithium halides (for example, LiI, LiBr, and LiCl), or sulfides of an element represented by M described above (for example, $SiS_2$, SnS, and $GeS_2$).

The ratio between $Li_2S$ and $P_2S_5$ in each of Li-P-S-based glass and Li-P-S-based glass ceramic is preferably 60:40 to 90:10 and more preferably 68:32 to 78:22 in terms of the molar ratio between $Li_2S$:$P_2S_5$. In a case where the ratio between $Li_2S$ and $P_2S_5$ is set in the above-described range, it is possible to increase a lithium ion conductivity. Specifically, the lithium ion conductivity can be preferably set to $1 \times 10^{-4}$ S/cm or more and more preferably set to $1 \times 10^{-3}$ S/cm or more. The upper limit is not particularly limited; however, it is realistically $1 \times 10^{-1}$ S/cm or lower.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-Ges2-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-Sis2-$P_2S_5$-LiI, $Li_2S$-$SiS_2$-LiI, $Li_2S$-$SiS_2$-$Li_4SiO_4$, $Li_2S$-$SiS_2$-$Li_3PO_4$, and $Li_{10}GeP_2S_{12}$. The mixing ratio between the individual raw materials does not matter. Examples of the method of synthesizing a sulfide-based inorganic solid electrolyte material

using the above-described raw material compositions include an amorphorization method. Examples of the amorphorization method include a mechanical milling method, a solution method, and a melting quenching method. This is because treatments at a normal temperature become possible, and it is possible to simplify manufacturing processes.

(ii) Oxide-based inorganic solid electrolyte

The oxide-based inorganic solid electrolyte is preferably an electrolyte that contains an oxygen atom, has an ion conductivity of a metal belonging to Group 1 or Group 2 in the periodic table, and has electron-insulating properties.

The ion conductivity of the oxide-based inorganic solid electrolyte is preferably $1 \times 10^{-6}$ S/cm or more, more preferably $5 \times 10^{-6}$ S/cm or more, and particularly preferably $1 \times 10^{-5}$ S/cm or more. The upper limit is not particularly limited; however, it is practically $1 \times 10^{-1}$ S/cm or less.

Specific examples of the compound include $Li_{xa}La_{ya}TiO_3$ (LLT) [xa satisfies $0.3 \leq xa \leq 0.7$, and ya satisfies $0.3 \leq ya \leq 0.7$]; $Li_{xb}La_{yb}Zr_{zb}M^{bb}_{mb}O_{nb}$ ($M^{bb}$ is one or more elements selected from Al, Mg, Ca, Sr, V, Nb, Ta, Ti, Ge, In, and Sn, xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$); $Li_{xc}B_{yc}M^{cc}_{zc}O_{nc}$ ($M^{cc}$ is one or more elements selected from C, S, Al, Si, Ga, Ge, In, and Sn, xc satisfies $0 < xc \leq 5$, yc satisfies $0 < yc \leq 1$, zc satisfies $0 < zc \leq 1$, and nc satisfies $0 < nc \leq 6$); $Li_{xd}(Al, Ga)_{ya}(Ti, Ge)_{zd}Si_{ad}P_{md}O_{nd}$ (xd satisfies $1 \leq xd \leq 3$, yd satisfies $0 \leq yd \leq 1$, zd satisfies $0 \leq zd \leq 2$, ad satisfies $0 \leq ad \leq 1$, md satisfies $1 \leq md \leq 7$, and nd satisfies $3 \leq nd \leq 13$.); $Li_{(3-2xe)}M^{ee}_{xe}D^{ee}O$ (xe represents a number of 0 or more and 0.1 or less, $M^{ee}$ represents a divalent metal atom, and $D^{ee}$ represents a halogen atom or a combination of two or more halogen atoms); $Li_{xf}Si_{yf}O_{zf}$ (xf satisfies $1 \leq xf \leq 5$, yf satisfies $0 < yf \leq 3$, and zf satisfies $1 \leq zf \leq 10$); $Li_{xg}S_{yg}O_{zg}$ (xg satisfies $1 \leq xg \leq 3$, yg satisfies $0 < yg \leq 2$, and zg satisfies $1 \leq zg \leq 10$); $Li_3BO_3$; $Li_3BO_3$-$Li_2SO_4$,; $Li_2O$-$B_2O_3$-$P_2O_5$; $Li_2O$-$SiO_2$; $Li_6BaLa_2Ta_2O_{12}$; $Li_3PO_{(4-3/2w)}N_w$ (w satisfies $w < 1$); $Li_{3.5}Zn_{0.25}GeO_4$ having a lithium super ionic conductor (LISICON)-type crystal structure; $La_{0.55}Li_{0.35}TiO_3$ having a perovskite-type crystal structure; $LiTi_2P_3O_{12}$ having a natrium super ionic conductor (NASICON)-type crystal structure; $Li_{1+xh+yh}(Al, Ga)_{xh}(Ti, Ge)_{2-xh}Si_{yh}P_{3-yh}O_{12}$ (xh satisfies $0 \leq xh \leq 1$, and yh satisfies $0 \leq yh \leq 1$); and $Li_7La_3Zr_2O_{12}$ (LLZ) having a garnet-type crystal structure.

In addition, a phosphorus compound containing Li, P, or O is also desirable. Examples thereof include lithium phosphate ($Li_3PO_4$); LiPON in which a part of oxygen elements in lithium phosphate are substituted with a nitrogen element; and $LiPOD^1$ ($D^1$ is preferably one or more elements selected from Ti, V, Cr, Mn, Fe, Co, Ni, Cu, Zr, Nb, Mo, Ru, Ag, Ta, W, Pt, and Au).

Further, it is also possible to preferably use $LiA^1ON$ ($A^1$ is one or more elements selected from Si, B, Ge, Al, C, and Ga).

(iii) Halide-based inorganic solid electrolyte

The halide-based inorganic solid electrolyte is preferably a compound that contains a halogen atom, has an ion conductivity of a metal belonging to Group 1 or Group 2 in the periodic table, and has electron-insulating properties.

The halide-based inorganic solid electrolyte is not particularly limited; however, examples thereof include LiCl, LiBr, LiI, and compounds such as $Li_3YBr_6$ or $Li_3YCl_6$ described in ADVANCED MATERIALS, 2018, 30, 1803075. In particular, $Li_3YBr_6$ or $Li_3YCl_6$ is preferable.

(iv) Hydride-based inorganic solid electrolyte

The hydride-based inorganic solid electrolyte is preferably a compound that contains a hydrogen atom, has an ion conductivity of a metal belonging to Group 1 or Group 2 in the periodic table, and has electron-insulating properties.

The hydride-based inorganic solid electrolyte is not particularly limited; however, examples thereof include $LiBH_4$, $Li_4(BH_4)_3I$, and $3LiBH_4$-LiCl.

It is preferable that the inorganic solid electrolyte has a particulate shape in the composition for a non-aqueous secondary battery. In this case, the particle diameter (the volume average particle diameter) of the inorganic solid electrolyte is not particularly limited; however, it is preferably 0.01 μm or more and more preferably 0.1 μm or more. The upper limit is preferably 100 μm or less and more preferably 50 μm or less.

The particle diameter of the inorganic solid electrolyte is measured according to the following procedure. Using water (heptane in a case where the inorganic solid electrolyte is unstable in water), the particles of the inorganic solid electrolyte are diluted in a 20 mL sample bottle to prepare 1% by mass of a dispersion liquid. The diluted dispersion liquid sample is irradiated with 1 kHz ultrasonic waves for 10 minutes and is then immediately used for testing. Data collection is carried out 50 times using this dispersion liquid sample, a laser diffraction/scattering-type particle size distribution analyzer LA-920 (product name, manufactured by Horiba Ltd.), and a quartz cell for measurement at a temperature of 25°C to obtain the volume average particle diameter. For other detailed conditions and the like, Japanese Industrial Standards (JIS) Z8828: 2013 "particle diameter Analysis-Dynamic Light Scattering" is referred to as necessary. Five samples per level are

produced, and the average values therefrom are employed.

The method of adjusting the particle diameter is not particularly limited, and a publicly known method can be applied. Examples thereof include a method using a typical pulverizer or a classifier. As the pulverizer or a classifier, for example, a mortar, a ball mill, a sand mill, a vibration ball mill, a satellite ball mill, a planetary ball mill, a swirling airflow-type jet mill, or a sieve is suitably used. During pulverization, it is possible to carry out wet-type pulverization in which water or a dispersion medium such as methanol is allowed to be present together. In order to provide the desired particle diameter, classification is preferably carried out. The classification is not particularly limited and can be carried out using a sieve, a wind power classifier, or the like. Both the dry-type classification and the wet-type classification can be used.

One kind of inorganic solid electrolyte may be contained, or two or more kinds thereof may be contained.

The content of the inorganic solid electrolyte in the composition for a non-aqueous secondary battery is not particularly limited. However, in terms of binding properties as well as in terms of dispersion characteristics, it is preferably 50% by mass or more, more preferably 70% by mass or more, and particularly preferably 90% by mass or more, in 100% by mass of the solid content. From the same viewpoint, the upper limit thereof is preferably 99.9% by mass or less, more preferably 99.5% by mass or less, and particularly preferably 99% by mass or less.

However, in a case where the composition for a non-aqueous secondary battery contains an active material described below, regarding the content of the inorganic solid electrolyte in the solid electrolyte composition, the total content of the active material and the inorganic solid electrolyte is preferably in the above-described range.

In the present invention, the solid content (solid component) refers to components that neither volatilizes nor evaporates and disappears in a case where the composition for a non-aqueous secondary battery is subjected to drying treatment at 150°C for 6 hours in a nitrogen atmosphere at a pressure of 1 mmHg. Typically, the solid content refers to a constitutional component other than a dispersion medium described later.

<Dispersion medium>

The composition for a non-aqueous secondary battery according to the embodiment of the present invention may contain a dispersion medium that disperses or dissolves each of the above components, in addition to the organic solvent derived from the binder composition.

Such a dispersion medium may be any organic compound that is in a liquid state in the use environment. Examples thereof include various organic solvents described above, and specific examples thereof suitably include an alcohol compound, an ether compound, an amide compound, an amine compound, a ketone compound, an aromatic hydrocarbon compound, an aliphatic hydrocarbon compound, a nitrile compound, and an ester compound. Among them, an ether compound, a ketone compound, an aromatic compound, an aliphatic compound, or an ester compound is preferable, and an ester compound, a ketone compound, an aromatic compound, or an ether compound is more preferable.

The dispersion medium may be a non-polar dispersion medium (a hydrophobic dispersion medium) or a polar dispersion medium (a hydrophilic dispersion medium); however, a non-polar dispersion medium is preferable from the viewpoint that excellent dispersion characteristics can be exhibited. The non-polar dispersion medium generally means a dispersion medium having a property of a low affinity to water; however, in the present invention, examples thereof include an ester compound, a ketone compound, an ether compound, an aromatic compound, and an aliphatic compound.

Examples of the alcohol compound include methyl alcohol, ethyl alcohol, 1-propyl alcohol, 2-propyl alcohol, 2-butanol, ethylene glycol, propylene glycol, glycerin, 1,6-hexanediol, cyclohexanediol, sorbitol, xylitol, 2-methyl-2,4-pentanediol, 1,3-butanediol, and 1,4-butanediol.

Examples of the ether compound include an alkylene glycol (diethylene glycol, triethylene glycol, polyethylene glycol, dipropylene glycol, or the like), an alkylene glycol monoalkyl ether (ethylene glycol monomethyl ether, ethylene glycol monobutyl ether, diethylene glycol monomethyl ether, propylene glycol monomethyl ether, dipropylene glycol monomethyl ether, tripropylene glycol monomethyl ether, diethylene glycol monobutyl ether, or the like), alkylene glycol dialkyl ether (ethylene glycol dimethyl ether or the like), a dialkyl ether (dimethyl ether, diethyl ether, diisopropyl ether, dibutyl ether, or the like), and a cyclic ether (tetrahydrofuran, dioxane (including 1,2-, 1,3- or 1,4-isomer), or the like).

Examples of the amide compound include N,N-dimethylformamide, N-methyl-2-pyrrolidone, 2-pyrrolidinone, 1,3-dimethyl-2-imidazolidinone, ε-caprolactam, formamide, N-methylformamide, acetamide, N-methylacetamide, N,N-dimethylacetamide, N-methylpropanamide, and hexamethylphosphoric triamide.

Examples of the amine compound include triethylamine, diisopropylethylamine, and tributylamine.

Examples of the ketone compound include acetone, methyl ethyl ketone, methyl isobutyl ketone (MIBK), cyclopentanone, cyclohexanone, cycloheptanone, dipropyl ketone, dibutyl ketone, diisopropyl ketone, diisobutyl ketone (DIBK), isobutyl propyl ketone, sec-butyl propyl ketone, pentyl propyl ketone, and butyl propyl ketone.

Examples of the aromatic hydrocarbon compound include benzene, toluene, xylene, and perfluorotoluene.

Examples of the aliphatic hydrocarbon compound include hexane, heptane, octane, nonane, decane, dodecane, cyclohexane, methylcyclohexane, ethylcyclohexane, cycloheptane, cyclooctane, decalin, paraffin, gasoline, naphtha,

kerosene, and light oil.

Examples of the nitrile compound include acetonitrile, propionitrile, and isobutyronitrile.

Examples of the ester compound include ethyl acetate, propyl acetate, propyl butyrate, butyl acetate, ethyl butyrate, isopropyl butyrate, butyl butyrate, isobutyl butyrate, butyl pentanoate, pentyl pentanoate, ethyl isobutyrate, propyl isobutyrate, isopropyl isobutyrate, isobutyl isobutyrate, propyl pivalate, isopropyl pivalate, butyl pivalate, and isobutyl pivalate.

The number of carbon atoms of the compound that constitutes the dispersion medium is not particularly limited, and it is preferably 2 to 30, more preferably 4 to 20, still more preferably 6 to 15, and particularly preferably 7 to 12.

The dispersion medium preferably has low polarity (is preferably a low-polarity dispersion medium) in terms of dispersion characteristics of solid particles and in terms of preventing the deterioration (decomposition) of a sulfide-based inorganic solid electrolyte in a case where the sulfide-based inorganic solid electrolyte is used as the inorganic solid electrolyte.

The boiling point of the dispersion medium at normal pressure (1 atm: 101,325 Pa)) is not particularly limited; however, it is preferably 50°C or higher, and it is more preferably 120°C or higher. The upper limit thereof is preferably 250°C or lower and more preferably 220°C or lower.

The dispersion medium contained in the composition for a non-aqueous secondary battery may be one kind or two or more kinds. Examples of the dispersion medium including two or more kinds of dispersion media include xylene (a mixture of xylene isomers in which the mixing molar ratio between isomers is, ortho-isomer:para-isomer:meta-isomer = 1:5:2) and mixed xylene (a mixture of o-xylene, p-xylene, m-xylene, and ethylbenzene).

The content of the dispersion medium in the composition for a non-aqueous secondary battery is not particularly limited, and it is, for example, preferably 10% to 80% by mass, more preferably 20% to 70% by mass, and still more preferably 25% to 50% by mass, in terms of the total amount of the dispersion medium and the organic solvent derived from the binder composition.

<Active material>

The composition for a non-aqueous secondary battery according to the embodiment of the present invention preferably contains an active material that is capable of intercalating and deintercalating an ion of a metal belonging to Group 1 or Group 2 of the periodic table. Examples of the active material, which will be described later, include a positive electrode active material and a negative electrode active material.

In the present invention, the composition for a non-aqueous secondary battery containing an active material (a positive electrode active material or a negative electrode active material) may be referred to as an electrode composition (a positive electrode composition or a negative electrode composition).

(Positive electrode active material)

The positive electrode active material is an active material that is capable of intercalating and deintercalating an ion of a metal belonging to Group 1 or Group 2 of the periodic table, and it is preferably one capable of reversibly intercalating and deintercalating a lithium ion. The above-described material is not particularly limited as long as the material has the above-described characteristics and may be a transition metal oxide or an element capable of being complexed with Li such as sulfur or the like.

Among the above, as the positive electrode active material, transition metal oxides are preferably used, and transition metal oxides having a transition metal element $M^a$ (one or more elements selected from Co, Ni, Fe, Mn, Cu, and V) are more preferable. In addition, an element $M^b$ (an element of Group 1 (Ia) of the metal periodic table other than lithium, an element of Group 2 (IIa), or an element such as Al, Ga, In, Ge, Sn, Pb, Sb, Bi, Si, P, or B) may be mixed into this transition metal oxide. The mixing amount thereof is preferably 0% to 30% by mole of the amount (100% by mole) of the transition metal element $M^a$. It is more preferable that the transition metal oxide is synthesized by mixing the above components such that a molar ratio $Li/M^a$ is 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), and lithium-containing transition metal silicate compounds (ME).

Specific examples of the transition metal oxides having a bedded salt-type structure (MA) include $LiCoO_2$ (lithium cobalt oxide [LCO]), $LiNi2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Specific examples of the transition metal oxides having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron

phosphate salts such as $LiFePO_4$ and $Li_3Fe_2(PO_4)_3$, iron pyrophosphates such as $LiFeP_2O_7$, and cobalt phosphates such as $LiCoPO_4$, and a monoclinic NASICON type vanadium phosphate salt such as $Li_3V_2(PO_4)_3$ (lithium vanadium phosphate).

Examples of the lithium-containing transition metal halogenated phosphoric acid compound (MD) include an iron fluorophosphate such as $Li_2FePO_4F$, a manganese fluorophosphate such as $Li2MnPO_4F$, and a cobalt fluorophosphate such as $Li_2CoPO_4F$.

Examples of the lithium-containing transition metal silicate compounds (ME) include $Li_2FeSiO_4$, $Li_2MnSiO_4$, and $Li_2CoSiO_4$.

In the present invention, the transition metal oxide having a bedded salt-type structure (MA) is preferable, and LCO or NMC is more preferable.

The shape of the positive electrode active material is not particularly limited; however, it is preferably a particulate shape in the composition for a non-aqueous secondary battery. In a case where the positive electrode active material has a particulate shape, the particle diameter (the volume average particle diameter) of the positive electrode active material is not particularly limited. For example, it can be set to 0.1 to 50 μm. The particle diameter of the positive electrode active material particle can be prepared in the same manner as in the preparation of the particle diameter of the inorganic solid electrolyte, and the particle diameter thereof can be measured by the same measuring method as the measuring method for the particle diameter of the inorganic solid electrolyte.

A positive electrode active material obtained using a baking method may be used after being washed with water, an acidic aqueous solution, an alkaline aqueous solution, or an organic solvent.

The positive electrode active material contained in the composition for a non-aqueous secondary battery according to the embodiment of the present invention may be one kind or two or more kinds.

The content of the positive electrode active material in the composition for a non-aqueous secondary battery is not particularly limited; however, it is preferably 10% to 97% by mass, more preferably 30% to 95% by mass, still more preferably 40% to 93% by mass, and particularly preferably 50% to 90% by mass, with respect to 100% by mass of the solid content.

(Negative electrode active material)

The negative electrode active material is an active material that is capable of intercalating and deintercalating an ion of a metal belonging to Group 1 or Group 2 of the periodic table, and it is preferably one capable of reversibly intercalating and deintercalating a lithium ion. The material is not particularly limited as long as it has the above-described characteristics, and examples thereof include a carbonaceous material, a metal oxide, a metal composite oxide, a lithium single body, a lithium alloy, and a negative electrode active material that is capable of an alloy (capable of being alloyed) with lithium. Among the above, a carbonaceous material, a metal composite oxide, or a lithium single body is preferably used from the viewpoint of reliability. An active material that is capable of being alloyed with lithium is preferable since the capacity of the all-solid state secondary battery can be increased.

The carbonaceous material that is used as the negative electrode active material is a material substantially consisting of carbon. Examples thereof include petroleum pitch, carbon black such as acetylene black (AB), graphite (natural graphite, artificial graphite such as vapor-grown graphite), and carbonaceous material obtained by baking a variety of synthetic resins such as polyacrylonitrile (PAN)-based resins or furfuryl alcohol resins. Further, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers, mesophase microspheres, graphite whisker, and tabular graphite.

These carbonaceous materials can be classified into non-graphitizable carbonaceous materials (also referred to as "hard carbon") and graphitizable carbonaceous materials based on the graphitization degree. In addition, it is preferable that the carbonaceous material has the lattice spacing, density, and crystallite size described in JP1987-22066A (JP-S62-22066A), JP1990-6856A (JP-H2-6856A), and JP1991-45473A (JP-H3-45473A). The carbonaceous material is not necessarily a single material and, for example, may be a mixture of natural graphite and artificial graphite described in JP1993-90844A (JP-H5-90844A) or graphite having a coating layer described in JP1994-4516A (JP-H6-4516A).

As the carbonaceous material, hard carbon or graphite is preferably used, and graphite is more preferably used.

The oxide of a metal or a metalloid element that is applied as the negative electrode active material is not particularly limited as long as it is an oxide capable of intercalating and deintercalating lithium, and examples thereof include an oxide of a metal element (metal oxide), a composite oxide of a metal element or a composite oxide of a metal element and a metalloid element (collectively referred to as "metal composite oxide), and an oxide of a metalloid element (a metalloid oxide). The oxides are preferably noncrystalline oxides, and preferred examples thereof include chalcogenides which are reaction products between metal elements and elements in Group 16 of the periodic table. In the present invention, the metalloid element refers to an element having intermediate properties between those of a metal element and

a non-metalloid element. Typically, the metalloid elements include six elements including boron, silicon, germanium, arsenic, antimony, and tellurium, and further include three elements including selenium, polonium, and astatine. In addition, "noncrystalline" represents an oxide having a broad scattering band with an apex in a range of 20° to 40° in terms of 2θ value in case of being measured by an X-ray diffraction method using CuKα rays, and the oxide may have a crystalline diffraction line. The highest intensity in a crystalline diffraction line observed in a range of 40° to 70° in terms of 20 value is preferably 100 times or less and more preferably 5 times or less with respect to the intensity of a diffraction line at the apex in a broad scattering band observed in a range of 20° to 40° in terms of 20 value, and it is particularly preferable that the oxide does not have a crystalline diffraction line.

In the compound group consisting of the noncrystalline oxides and the chalcogenides, noncrystalline oxides of metalloid elements and chalcogenides are more preferable, and (composite) oxides consisting of one element or a combination of two or more elements selected from elements (for example, Al, Ga, Si, Sn, Ge, Pb, Sb, and Bi) belonging to Groups 13 (IIIB) to 15 (VB) in the periodic table or chalcogenides are particularly preferable. Specific examples of the preferred noncrystalline oxide and chalcogenide preferably include $Ga_2O_3$, GeO, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, and $Sb_2S_5$.

Suitable examples of the negative electrode active material which can be used in combination with a noncrystalline oxide containing Sn, Si, or Ge as a major component include a carbonaceous material capable of intercalating and/or deintercalating lithium ions or lithium metal, a lithium single body, a lithium alloy, and a negative electrode active material that is capable of being alloyed with lithium.

It is preferable that an oxide of a metal or a metalloid element, in particular, a metal (composite) oxide and the chalcogenide contain at least one of titanium or lithium as the constitutional component from the viewpoint of high current density charging and discharging characteristics. Examples of the metal composite oxide (lithium composite metal oxide) including lithium include a composite oxide of lithium oxide and the above metal (composite) oxide or the above chalcogenide, and specifically, $Li_2SnO_2$.

As the negative electrode active material, for example, a metal oxide (titanium oxide) having a titanium element is also preferable. Specifically, $Li_4Ti_5O_{12}$ (lithium titanate [LTO]) is preferable since the volume variation during the intercalation and deintercalation of lithium ions is small, and thus the high-speed charging and discharging characteristics are excellent, and the deterioration of electrodes is suppressed, whereby it is possible to improve the life of the lithium ion secondary battery.

The lithium alloy as the negative electrode active material is not particularly limited as long as it is typically used as a negative electrode active material for a secondary battery, and examples thereof include a lithium aluminum alloy, and specifically, a lithium aluminum alloy, using lithium as a base metal, to which 10% by mass of aluminum is added.

The negative electrode active material capable of forming an alloy with lithium is not particularly limited as long as it is typically used as a negative electrode active material for a secondary battery. Such an active material has a large expansion and contraction due to charging and discharging of the all-solid state secondary battery and accelerates the deterioration of the cycle characteristics. However, since the composition for a non-aqueous secondary battery according to the embodiment of the present invention contains the polymer binder described above, and thus it is possible to suppress the deterioration of the cycle characteristics. Examples of such an active material include a (negative electrode) active material (an alloy or the like) having a silicon element or a tin element and a metal such as Al or In, a negative electrode active material (a silicon element-containing active material) having a silicon element capable of exhibiting high battery capacity is preferable, and a silicon element-containing active material in which the content of the silicon element is 50% by mole or more with respect to all the constitutional elements is more preferable.

In general, a negative electrode including the negative electrode active material (for example, a Si negative electrode including a silicon element-containing active material or an Sn negative electrode containing an active material containing a tin element) can intercalate a larger amount of Li ions than a carbon negative electrode (for example, graphite or acetylene black). That is, the amount of Li ions intercalated per unit mass increases. As a result, the battery capacity (the energy density) can be increased. As a result, there is an advantage in that the battery driving duration can be extended.

Examples of the silicon element-containing active material include a silicon-containing alloy (for example, $LaSi_2$, $VSi_2$, La-Si, Gd-Si, or Ni-Si) including a silicon material such as Si or SiOx ($0 < x \leq 1$) and titanium, vanadium, chromium, manganese, nickel, copper, lanthanum, or the like or a structured active material thereof (for example, $LaSi_2$/Si), and an active material such as $SnSiO_3$ or $SnSiS_3$ including silicon element and tin element. It is noted that in addition, since SiOx itself can be used as a negative electrode active material (a metalloid oxide) and Si is produced along with the operation of an all-solid state secondary battery, SiOx can be used as a negative electrode active material (or a precursor material thereof) capable of being alloyed with lithium.

Examples of the negative electrode active material including the tin element include Sn, SnO, $SnO_2$, SnS, $SnS_2$, and the above-described active material including silicon element and tin element. In addition, a composite oxide with lithium oxide, for example, $Li_2SnO_2$ can also be used.

In the present invention, the above-described negative electrode active material can be used without any particular limitation. From the viewpoint of battery capacity, a preferred aspect as the negative electrode active material is a

negative electrode active material that is capable of being alloyed with lithium. Among them, the silicon material or the silicon-containing alloy (the alloy containing a silicon element) described above is more preferable, and it is more preferable to include a negative electrode active material containing silicon (Si) or a silicon-containing alloy.

The chemical formulae of the compounds obtained by the above baking method can be calculated using an inductively coupled plasma (ICP) emission spectroscopy as a measuring method from the mass difference of powder before and after baking as a convenient method.

The shape of the negative electrode active material is not particularly limited; however, it is preferably a particulate shape in the composition for a non-aqueous secondary battery. In a case where the negative electrode active material has a particulate shape, the particle diameter of the negative electrode active material is not particularly limited; however, it is preferably 0.1 to 60 μm. The particle diameter of the negative electrode active material particle can be prepared in the same manner as in the preparation of the particle diameter of the inorganic solid electrolyte, and the particle diameter thereof can be measured by the same measuring method as the measuring method for the average particle diameter of the inorganic solid electrolyte.

The negative electrode active material contained in the composition for a non-aqueous secondary battery according to the embodiment of the present invention may be one kind or two or more kinds.

The content of the negative electrode active material in the composition for a non-aqueous secondary battery is not particularly limited, and it is preferably 10% to 90% by mass, more preferably 20% to 85% by mass, still more preferably 30% to 80% by mass, and even still more preferably 40% to 75% by mass, in the solid content of 100% by mass.

In the present invention, in a case where a negative electrode active material layer is formed by charging a secondary battery, ions of a metal belonging to Group 1 or Group 2 in the periodic table, generated in the all-solid state secondary battery, can be used instead of the negative electrode active material. By bonding the ions to electrons and precipitating a metal, a negative electrode active material layer can be formed.

(Coating of active material)

The surfaces of the positive electrode active material and the negative electrode active material may be subjected to surface coating with another metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, and lithium niobate-based compounds, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, and $B_2O_3$.

In addition, the surface of the electrode containing the positive electrode active material or negative electrode active material may be subjected to a surface treatment with sulfur or phosphorus.

Further, the particle surface of the positive electrode active material or negative electrode active material may be subjected to a surface treatment with an actinic ray or an active gas (plasma or the like) before and after the surface coating.

<Conductive auxiliary agent>

The composition for a non-aqueous secondary battery according to the embodiment of the present invention may contain a conductive auxiliary agent.

The conductive auxiliary agent is not particularly limited, and conductive auxiliary agents that are known as ordinary conductive auxiliary agents can be used. It may be, for example, graphite such as natural graphite and artificial graphite, carbon black such as acetylene black, Ketjen black, and furnace black, amorphous carbon such as needle cokes, carbon fibers such as a vapor-grown carbon fiber and a carbon nanotube, or a carbonaceous material such as graphene or fullerene, which are electron-conductive materials, and it may be also a metal powder or metal fiber of copper, nickel, or the like. A conductive polymer such as polyaniline, polypyrrole, polythiophene, polyacetylene, or a polyphenylene derivative may also be used.

In the present invention, in a case where the active material is used in combination with the conductive auxiliary agent, among the above-described conductive auxiliary agents, a conductive auxiliary agent that does not intercalate and deintercalate ions (preferably Li ions) of a metal belonging to Group 1 or Group 2 in the periodic table and does not function as an active material at the time of charging and discharging of the battery is classified as the conductive auxiliary agent. Therefore, among the conductive auxiliary agents, a conductive auxiliary agent that can function as the active material in the active material layer at the time of charging and discharging of the battery is classified as an active material but not as a conductive auxiliary agent. Whether or not the conductive auxiliary agent functions as the active material at the time of charging and discharging of a battery is not unambiguously determined but is determined by the combination with the active material.

The conductive auxiliary agent preferably has a particulate shape in the composition for a non-aqueous secondary battery. In a case where the conductive auxiliary agent has a particulate shape, the particle diameter (volume

average particle diameter) of the conductive auxiliary agent is not particularly limited; however, it is, for example, preferably 0.02 to 1.0 μm and more preferably 0.03 to 0.5 μm. The particle diameter of the conductive auxiliary agent can be adjusted in the same manner as in the adjustment of the particle diameter of the inorganic solid electrolyte, and the particle diameter thereof can be measured by the same measuring method as the method for the particle diameter of the inorganic solid electrolyte.

The conductive auxiliary agent contained in the composition for a non-aqueous secondary battery may be one kind or two or more kinds.

In a case where the composition for a non-aqueous secondary battery according to the embodiment of the present invention contains the conductive auxiliary agent, the content of the conductive auxiliary agent in the conductive auxiliary agent is preferably 0% to 10% by mass and more preferably 1% to 5% by mass with respect to 100% by mass of the solid content.

<Lithium salt>

It is also preferable that the composition for a non-aqueous secondary battery according to the embodiment of the present invention includes a lithium salt (supporting electrolyte). Generally, the lithium salt is preferably a lithium salt that is used for this kind of product and is not particularly limited. For example, lithium salts described in paragraphs 0082 to 0085 of JP2015-088486A are preferable. In a case where the composition for a non-aqueous secondary battery according to the embodiment of the present invention contains a lithium salt, the content of the lithium salt is preferably 0.1 parts by mass or more and more preferably 5 parts by mass or more with respect to 100 parts by mass of the solid electrolyte. The upper limit thereof is preferably 50 parts by mass or less and more preferably 20 parts by mass or less.

<Dispersing agent>

Since the above-described polymer binder functions as a dispersing agent as well, the composition for a non-aqueous secondary battery according to the embodiment of the present invention may not contain a dispersing agent other than this polymer binder; however, it may contain a dispersing agent. As the dispersing agent, a dispersing agent that is generally used for an all-solid state secondary battery can be appropriately selected and used. In general, a compound intended for particle adsorption and steric repulsion and/or electrostatic repulsion is suitably used.

<Other additives>

As a component other than each of the components described above, the composition for a non-aqueous secondary battery according to the embodiment of the present invention may appropriately contain an ionic liquid, a thickener, a crosslinking agent (an agent causing a crosslinking reaction by radical polymerization, condensation polymerization, or ring-opening polymerization), a polymerization initiator (an agent that generates an acid or a radical by heat or light), an anti-foaming agent, a leveling agent, a dehydrating agent, or an antioxidant. The ionic liquid is contained in order to further improve the ion conductivity, and the publicly known one in the related art can be used without particular limitation. In addition, a polymer other than the binder forming polymer described above, a typically used binding agent, or the like may be contained.

<Preparation of composition for non-aqueous secondary battery>

The composition for a non-aqueous secondary battery according to the embodiment of the present invention can be prepared as a mixture, preferably as a slurry, by mixing the above-described binder composition and each of the above-described components depending on the use application by using, for example, the above-described mixer.

The mixing conditions are not particularly limited, and examples thereof include the mixing conditions in the preparation of the binder composition described above. It is noted that since the inorganic solid electrolyte easily reacts with moisture, the mixing is preferably carried out under dry air or in an inert gas.

Since the composition for a non-aqueous secondary battery according to the embodiment of the present invention has excellent dispersion characteristics of solid particles, it can be stored after the preparation and does not have to be prepared each time when it is used.

[Sheet for non-aqueous secondary battery]

A sheet for a non-aqueous secondary battery can be produced by using the composition for a non-aqueous secondary battery according to the embodiment of the present invention. This sheet for a non-aqueous secondary battery is a sheet-shaped molded body that is capable of forming an electrode layer of a non-aqueous secondary battery, and it

includes various aspects depending on the use application thereof.

Hereinafter, a sheet for an all-solid state secondary battery, which is one suitable form of the sheet for a non-aqueous secondary battery, will be described; however, the following content regarding the sheet for an all-solid state secondary battery can be applied to the sheet for a non-aqueous secondary battery.

<Sheet for all-solid state secondary battery>

A sheet for an all-solid state secondary battery according to the embodiment of the present invention is a sheet-shaped molded body with which a constitutional layer of an all-solid state secondary battery can be formed, and it includes various aspects depending on the use application thereof. Examples of thereof include a sheet that is preferably used in a solid electrolyte layer (also referred to as a solid electrolyte sheet for an all-solid state secondary battery) and a sheet that is preferably used in an electrode or a laminate of an electrode and a solid electrolyte layer (an electrode sheet for an all-solid state secondary battery). In the present invention, the variety of sheets described above will be collectively referred to as a sheet for an all-solid state secondary battery.

In the present invention, each layer that constitutes a sheet for an all-solid state secondary battery may have a monolayer structure or a multilayer structure.

In the sheet for an all-solid state secondary battery, the solid electrolyte layer or the active material layer is formed of the composition for a non-aqueous secondary battery according to the embodiment of the present invention. The layer formed of the composition for a non-aqueous secondary battery according to the embodiment of the present invention is formed of a component derived from the composition for a non-aqueous secondary battery (excluding a dispersion medium and an organic solvent), and In general, solid particles (an inorganic solid electrolyte, a conductive auxiliary agent, and an active material) and a polymer binder are firmly adhered (bound) in a state of being mixedly present.

In a case where the sheet for an all-solid state secondary battery is incorporated into an all-solid state secondary battery as it is or by appropriately peeling off a base material, the cycle characteristics and the conductivity (the lower resistance) of the all-solid state secondary battery can be improved.

The solid electrolyte sheet for an all-solid state secondary battery according to the embodiment of the present invention may be any sheet having a solid electrolyte layer, and it may be a sheet in which a solid electrolyte layer is formed on a base material or may be a sheet (a sheet from which the base material has been peeled off) that is formed of a solid electrolyte layer without including a base material. The solid electrolyte sheet for an all-solid state secondary battery may include another layer in addition to the solid electrolyte layer. Examples of the other layer include a protective layer (a stripping sheet), a collector, and a coating layer. The solid electrolyte layer included in the solid electrolyte sheet for an all-solid state secondary battery is preferably formed of the composition for a non-aqueous secondary battery (the inorganic solid electrolyte-containing composition) according to the embodiment of the present invention. The content of each component in the solid electrolyte layer is not particularly limited; however, it preferably has the same meaning as the content of each component in the solid content of the composition for a non-aqueous secondary battery according to the embodiment of the present invention. The layer thickness of each layer that constitutes the solid electrolyte sheet for an all-solid state secondary battery is the same as the layer thickness of each layer described later in the all-solid state secondary battery.

The base material is not particularly limited as long as it can support the solid electrolyte layer, and examples thereof include a sheet body (plate-shaped body) formed of materials described later regarding the collector, an organic material, an inorganic material, or the like. Examples of the organic materials include various polymers, and specific examples thereof include polyethylene terephthalate, polypropylene, polyethylene, and cellulose. Examples of the inorganic materials include glass and ceramic.

The electrode sheet for an all-solid state secondary battery according to the embodiment of the present invention (simply also referred to as an "electrode sheet") may be any electrode sheet including an active material layer, and it may be a sheet in which an active material layer is formed on a base material (collector) or may be a sheet (a sheet from which the base material has been peeled off) that is formed of an active material layer without including a base material. The electrode sheet is typically a sheet including the collector and the active material layer, and examples of an aspect thereof include an aspect including the collector, the active material layer, and the solid electrolyte layer in this order and an aspect including the collector, the active material layer, the solid electrolyte layer, and the active material layer in this order. It is preferable that the solid electrolyte layer and the active material layer which are contained in the electrode sheet are formed of the composition for a non-aqueous secondary battery according to the embodiment of the present invention (the inorganic solid electrolyte-containing composition or the electrode composition). The content of each component in the solid electrolyte layer or the active material layer is not particularly limited; however, it preferably has the same meaning as the content of each component in the solid content of the composition for a non-aqueous secondary battery according to the embodiment of the present invention. The layer thickness of each of the layers forming the electrode sheet according to the embodiment of the present invention is the same as the layer thickness of each of the layers described below regarding the all-solid state secondary battery. The electrode sheet may include the above-described other layer.

It is noted that in a case where the solid electrolyte layer or the active material layer is not formed of the composition for a non-aqueous secondary battery according to the embodiment of the present invention, it is formed of a typical constitutional layer forming material.

In the sheet for an all-solid state secondary battery according to the embodiment of the present invention, at least one layer of the constitutional layers is formed of the composition for a non-aqueous secondary battery according to the embodiment of the present invention. Therefore, the sheet for an all-solid state secondary battery according to the embodiment of the present invention includes a constitutional layer having a flat surface, in which solid particles which are uniformly disposed are firmly bound while an increase in the interface resistance of the solid particles is suppressed. Therefore, in a case where this constitutional layer is incorporated into an all-solid state secondary battery, it is possible to realize excellent cycle characteristics and low resistance (high conductivity) of the all-solid state secondary battery. In addition, in the electrode sheet in which the active material layer is formed on the collector, it is possible to firmly adhere the active material layer to a collector. As described above, the sheet for an all-solid state secondary battery according to the embodiment of the present invention is suitably used as a sheet-shaped member that is incorporated as a constitutional layer of an all-solid state secondary battery.

[Manufacturing method for sheet for an all-solid state secondary battery]

A manufacturing method for a sheet for an all-solid state secondary battery according to the embodiment of the present invention is not particularly limited and can be manufactured by forming the above-described constitutional layer using the composition for a non-aqueous secondary battery according to the embodiment of the present invention. Examples thereof include a method in which the film formation (the coating and drying) is carried out preferably on a base material or a collector (the other layer may be interposed) to form a layer (a coated and dried layer) consisting of the composition for a non-aqueous secondary battery. This method makes it possible to produce a sheet for an all-solid state secondary battery having a base material or a collector and having a coated and dried layer. In particular, in a case where a film of the composition for a non-aqueous secondary battery according to the embodiment of the present invention is formed on a collector to produce an electrode sheet, it is possible to reinforce the adhesion between the collector and the active material layer. Here, the coated and dried layer refers to a layer formed by coating the composition for a non-aqueous secondary battery according to the embodiment of the present invention and drying the dispersion medium and the organic solvent (that is, a layer formed using the composition for a non-aqueous secondary battery according to the embodiment of the present invention and constituted of a composition in which the dispersion medium and the organic solvent have been removed from the composition for a non-aqueous secondary battery according to the embodiment of the present invention). In the constitutional layer and the coated and dried layer, the dispersion medium and the organic solvent may remain within a range where the effect of the present invention is not impaired, and the residual amount thereof, for example, in each of the layers may be 3% by mass or lower.

In the manufacturing method for a sheet for an all-solid state secondary battery according to the embodiment of the present invention, each of the steps such as coating and drying will be described in the following manufacturing method for an all-solid state secondary battery.

In the manufacturing method for a sheet for an all-solid state secondary battery according to the embodiment of the present invention, the coated and dried layer obtained as described above can be pressurized. The pressurizing condition and the like will be described later in the section of the manufacturing method for an all-solid state secondary battery.

In addition, in the manufacturing method for a sheet for an all-solid state secondary battery according to the embodiment of the present invention, the base material, the protective layer (particularly stripping sheet), or the like can also be stripped.

[Non-aqueous secondary battery]

The non-aqueous secondary battery according to the embodiment of the present invention includes a positive electrode active material layer, a negative electrode active material layer facing the positive electrode active material layer, and an electrolyte layer disposed between the positive electrode active material layer and the negative electrode active material layer. The non-aqueous secondary battery according to the embodiment of the present invention is not particularly limited in the configuration as long as it has a solid electrolyte layer between the positive electrode active material layer and the negative electrode active material layer, and for example, a publicly known configuration for a non-aqueous secondary battery can be employed.

<All-solid state secondary battery>

Hereinafter, the all-solid state secondary battery which is a preferred form of the non-aqueous secondary battery

will be described.

The all-solid state secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The all-solid state secondary battery according to the embodiment of the present invention is not particularly limited in the configuration as long as it has a solid electrolyte layer between the positive electrode active material layer and the negative electrode active material layer, and for example, a publicly known configuration that relates to an all-solid state secondary battery can be employed. The positive electrode active material layer is preferably formed on a positive electrode collector to constitute a positive electrode. The negative electrode active material layer is preferably formed on a negative electrode collector to configure a negative electrode. In the present invention, each constitutional layer (including a collector and the like) that constitutes an all-solid state secondary battery may have a monolayer structure or a multilayer structure.

It is preferable that at least one of the solid electrolyte layer, the negative electrode active material layer, or the positive electrode active material layer is formed of the composition for a non-aqueous secondary battery according to the embodiment of the present invention. In addition, an aspect in which both the negative electrode active material layer and the positive electrode active material layer are formed of the composition for a non-aqueous secondary battery according to the embodiment of the present invention is also one of the preferred aspects. In addition, it is preferable that any one of the negative electrode (a laminate of a negative electrode collector and a negative electrode collector) and the positive electrode (a laminate of a positive electrode collector and a positive electrode collector), preferably the positive electrode is formed of the electrode sheet for an all-solid state secondary battery according to the embodiment of the present invention, and an aspect in which both of them are formed of the electrode sheet for an all-solid state secondary battery according to the embodiment of the present invention is also one of the preferred aspects.

In the present invention, an aspect in which all of the layers are formed of the composition for a non-aqueous secondary battery according to the embodiment of the present invention is also one of the preferred aspects. In a case where the active material layer or the solid electrolyte layer is not formed of the composition for a non-aqueous secondary battery according to the embodiment of the present invention, a publicly known material in the related art can be used.

In the present invention, each constitutional layer (including a collector and the like) that constitutes an all-solid state secondary battery may have a monolayer structure or a multilayer structure.

<Positive electrode active material layer, solid electrolyte layer, and negative electrode active material layer>

In the solid electrolyte layer and the active material layer which are formed of the composition for a non-aqueous secondary battery according to the embodiment of the present invention, the kinds of components contained and the contents thereof are preferably the same as those in the solid content of the composition for a non-aqueous secondary battery according to the embodiment of the present invention.

The thickness of each of the negative electrode active material layer, the solid electrolyte layer, and the positive electrode active material layer is not particularly limited. In case of taking a dimension of a general all-solid state secondary battery into account, the thickness of each of the layers is preferably 10 to 1,000 μm and more preferably 20 μm or more and less than 500 μm. In the all-solid state secondary battery according to the embodiment of the present invention, it is still more preferable that the thickness of any layer is 50 μm or more and less than 500 μm.

<Collector>

Each of the positive electrode active material layer and the negative electrode active material layer may include a collector on the side opposite to the solid electrolyte layer. The positive electrode collector and the negative electrode collector are preferably an electron conductor.

In the present invention, any one of the positive electrode collector or the negative electrode collector, or collectively both of them may be simply referred to as the collector.

As a material that forms the positive electrode collector, not only aluminum, an aluminum alloy, stainless steel, nickel, or titanium but also a material (a material on which a thin film has been formed) obtained by treating the surface of aluminum or stainless steel with carbon, nickel, titanium, or silver is preferable. Among the above, aluminum or an aluminum alloy is more preferable.

As a material that forms the negative electrode collector, aluminum, copper, a copper alloy, stainless steel, nickel, titanium, or the like, and further, a material obtained by treating the surface of aluminum, copper, a copper alloy, or stainless steel with carbon, nickel, titanium, or silver is preferable, and aluminum, copper, a copper alloy, or stainless steel is more preferable.

Regarding the shape of the collector, a film sheet shape is typically used; however, it is also possible to use a collector having a shape a net shape or a punched shape, or a collector of a lath body, a porous body, a foaming body, a molded body of a fiber group, or the like.

The thickness of the collector is not particularly limited; however, it is preferably 1 to 500 μm. In addition,

protrusions and recesses are preferably provided on the surface of the collector by carrying out a surface treatment.

<Other configurations>

In the present invention, a functional layer, a functional member, or the like may be appropriately interposed or disposed between or on the outside of the respective layers of the negative electrode collector, the negative electrode active material layer, the solid electrolyte layer, the positive electrode active material layer, and the positive electrode collector.

<Housing>

Depending on the use application, the all-solid state secondary battery according to the embodiment of the present invention may be used as the all-solid state secondary battery having the above-described structure as it is but is preferably sealed in an appropriate housing to be used in the form of a dry cell. The housing may be a metallic housing or a resin (plastic) housing. In a case where a metallic housing is used, examples thereof include an aluminum alloy housing and a stainless steel housing. It is preferable that the metallic housing is classified into a positive electrode-side housing and a negative electrode-side housing and that the positive electrode-side housing and the negative electrode-side housing are electrically connected to the positive electrode collector and the negative electrode collector, respectively. The positive electrode-side housing and the negative electrode-side housing are preferably integrated by being joined together through a gasket for short circuit prevention.

<Preferred embodiment of all-solid state secondary battery>

Hereinafter, the all-solid state secondary battery according to the preferred embodiment of the present invention will be described with reference to Fig. 1; however, the present invention is not limited thereto.

Fig. 1 is a cross-sectional view schematically illustrating an all-solid state secondary battery (a lithium ion secondary battery) according to a preferred embodiment of the present invention. In a case of being seen from the negative electrode side, an all-solid state secondary battery 10 of the present embodiment includes a negative electrode collector 1, a negative electrode active material layer 2, a solid electrolyte layer 3, a positive electrode active material layer 4, and a positive electrode collector 5 in this order. The respective layers are in contact with each other, and thus structures thereof are adjacent. In a case in which the above-described structure is employed, during charging, electrons ($e^-$) are supplied to the negative electrode side, and lithium ions ($Li^+$) are accumulated on the negative electrode side. On the other hand, during discharging, the lithium ions ($Li^+$) accumulated in the negative electrode return to the positive electrode side, and electrons are supplied to an operation portion 6. In an example illustrated in the drawing, an electric bulb is employed as a model at the operation portion 6 and is lit by discharging.

In a case where the all-solid state secondary battery having a layer configuration illustrated in Fig. 1 is placed in a 2032-type coin case 11, the all-solid state secondary battery will be referred to as a laminate 12 for an all-solid state secondary battery, and a battery produced by placing this laminate 12 for an all-solid state secondary battery in a 2032-type coin case 11 will be referred to as a (coin-type) all-solid state secondary battery 13, whereby both batteries may be distinctively referred to in some cases.

(Positive electrode active material layer, solid electrolyte layer, and negative electrode active material layer)

In the all-solid state secondary battery 10, all of the positive electrode active material layer, the solid electrolyte layer, and the negative electrode active material layer are formed of the composition for a non-aqueous secondary battery according to the embodiment of the present invention. The kinds of the inorganic solid electrolyte and the polymer binder which are contained in the positive electrode active material layer 4, the solid electrolyte layer 3, and the negative electrode active material layer 2 may be the same or different from each other. In addition, the kinds of the conductive auxiliary agents contained in the positive electrode active material layer 4 and the negative electrode active material layer 2 may be the same or different from each other.

In the present invention, any one of the positive electrode active material layer and the negative electrode active material layer, or collectively both of them may be simply referred to as the active material layer or the electrode active material layer. In addition, in the present invention, any one of the positive electrode active material and the negative electrode active material, or collectively both of them may be simply referred to as an active material or an electrode active material.

The solid electrolyte layer contains an inorganic solid electrolyte having an ion conductivity of a metal belonging to Group 1 or Group 2 in the periodic table, the above-described polymer binder, any component described above, and the like within a range where the effect of the present invention is not impaired, and it generally does not contain a positive

electrode active material and/or a negative electrode active material.

The positive electrode active material layer contains an inorganic solid electrolyte having an ion conductivity of a metal belonging to Group 1 or Group 2 in the periodic table, the above-described polymer binder, a positive electrode active material, a conductive auxiliary agent, and any component described above and the like within a range where the effect of the present invention is not impaired.

The negative electrode active material layer contains an inorganic solid electrolyte having an ion conductivity of a metal belonging to Group 1 or Group 2 in the periodic table, the above-described polymer binder, a negative electrode active material, a conductive auxiliary agent, and any component described above and the like within a range where the effect of the present invention is not impaired.

In the all-solid state secondary battery 10, the negative electrode active material layer can be a lithium metal layer. Examples of the lithium metal layer include a layer formed by depositing or molding a lithium metal powder, a lithium foil, and a lithium vapor deposition film. The thickness of the lithium metal layer can be, for example, 1 to 500 μm regardless of the above thickness of the above negative electrode active material layer.

In the present invention, in a case where the constitutional layer is formed of the composition for a non-aqueous secondary battery according to the embodiment of the present invention, it is possible to realize an all-solid state secondary battery having excellent cycle characteristics and low resistance. Further, since the all-solid state secondary battery according to the embodiment of the present invention exhibits low resistance and a high ion conductivity, a large current can be extracted.

(Collector)

The positive electrode collector 5 and the negative electrode collector 1 are as described above.

In a case where the all-solid state secondary battery 10 has a constitutional layer other than the constitutional layer formed of the composition for a non-aqueous secondary battery according to the embodiment of the present invention, a layer formed of a publicly known constitutional layer forming material can also be applied.

In addition, each layer may be composed of a single layer or multiple layers.

[Manufacturing of non-aqueous secondary battery]

The non-aqueous secondary battery can be manufactured according to a conventional method by using the composition for a non-aqueous secondary battery according to the embodiment of the present invention.

For example, the all-solid state secondary battery can be manufactured by forming each of the layers described above using the composition for a non-aqueous secondary battery according to the embodiment of the present invention or the like. Specifically, the all-solid state secondary battery according to the embodiment of the present invention can be manufactured by carrying out a method (a manufacturing method for a sheet for an all-solid state secondary battery according to the embodiment of the present invention) which includes (is carried out through) a step of coating an appropriate base material (for example, a metal foil which serves as a collector) with the composition for a non-aqueous secondary battery according to the embodiment of the present invention and forming a coating film (forming a film).

More specifically, a composition for a non-aqueous secondary battery containing a positive electrode active material is applied and dried as a positive electrode material (a positive electrode composition) onto a metal foil which is a positive electrode collector, to form a positive electrode active material layer, thereby producing a positive electrode sheet for an all-solid state secondary battery. Next, the composition for a non-aqueous secondary battery for forming a solid electrolyte layer is applied and dried onto the positive electrode active material layer to form the solid electrolyte layer. Further, the composition for a non-aqueous secondary battery containing a negative electrode active material as a negative electrode material (a negative electrode composition) is applied onto the solid electrolyte layer and dried to form a negative electrode active material layer. A negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can also be manufactured by sealing the all-solid state secondary battery in a housing.

In addition, it is also possible to manufacture an all-solid state secondary battery by carrying out the forming method of each layer in reverse order to form a negative electrode active material layer, a solid electrolyte layer, and a positive electrode active material layer on a negative electrode collector and superposing a positive electrode collector thereon.

As another method, the following method can be exemplified. That is, the positive electrode sheet for an all-solid state secondary battery is produced as described above. In addition, a composition for a non-aqueous secondary battery which contains a negative electrode active material and serves as a negative electrode material (a negative electrode composition) is applied onto a metal foil which is a negative electrode collector, and dried to form a negative electrode

active material layer, thereby producing a negative electrode sheet for an all-solid state secondary battery. Next, a solid electrolyte layer is formed on the active material layer in any one of these sheets as described above. Further, the other one of the positive electrode sheet for an all-solid state secondary battery and the negative electrode sheet for an all-solid state secondary battery is laminated on the solid electrolyte layer such that the solid electrolyte layer and the active material layer come into contact with each other. In this manner, an all-solid state secondary battery can be manufactured.

As still another method, for example, the following method can be used. That is, the positive electrode sheet for an all-solid state secondary battery and the negative electrode sheet for an all-solid state secondary battery are prepared as described above. In addition, separately from the positive electrode sheet for an all-solid state secondary battery and the negative electrode sheet for an all-solid state secondary battery, the composition for a non-aqueous secondary battery is applied onto a base material, thereby producing a solid electrolyte sheet for an all-solid state secondary battery constituted of a solid electrolyte layer. Further, the positive electrode sheet for an all-solid state secondary battery and the negative electrode sheet for an all-solid state secondary battery are laminated such that the solid electrolyte layer removed from the base material is sandwiched therebetween. In this manner, an all-solid state secondary battery can be manufactured.

Further, a positive electrode sheet for an all-solid state secondary battery, a negative electrode sheet for an all-solid state secondary battery, and a solid electrolyte sheet for an all-solid state secondary battery are produced as described above. Next, the positive electrode sheet for an all-solid state secondary battery or negative electrode sheet for an all-solid state secondary battery, and the solid electrolyte sheet for an all-solid state secondary battery are overlaid and pressurized into a state where the positive electrode active material layer or the negative electrode active material layer is brought into contact with the solid electrolyte layer. In this way, the solid electrolyte layer is transferred to the positive electrode sheet for an all-solid state secondary battery or the negative electrode sheet for an all-solid state secondary battery. Then, the solid electrolyte layer from which the base material of the solid electrolyte sheet for an all-solid state secondary battery has been peeled off and the negative electrode sheet for an all-solid state secondary battery or positive electrode sheet for an all-solid state secondary battery are overlaid and pressurized (into a state where the negative electrode active material layer or positive electrode active material layer is brought into contact with the solid electrolyte layer). In this way, an all-solid state secondary battery can be manufactured. The pressurizing method and the pressurizing conditions in this method are not particularly limited, and a method and pressurizing conditions described in the pressurization step, which will be described later, can be applied.

The solid electrolyte layer or the like can also be formed on the substrate or the active material layer, for example, by pressure-molding the composition for a non-aqueous secondary battery or the like under a pressurizing condition described below.

In the above-described manufacturing method, it suffices that the composition for a non-aqueous secondary battery according to the embodiment of the present invention is used for any of the composition for a non-aqueous secondary battery, the positive electrode composition, and the negative electrode composition, and the composition for a non-aqueous secondary battery according to the embodiment of the present invention can be used for all the compositions.

In a case where the solid electrolyte layer or the active material layer is formed of a composition other than the composition for a non-aqueous secondary battery according to the embodiment of the present invention, examples of the material thereof include a typically used composition. In addition, the negative electrode active material layer can also be formed by binding ions of a metal belonging to Group 1 or Group 2 in the periodic table, which are accumulated on a negative electrode collector during initialization described later or during charging for use, without forming the negative electrode active material layer during the manufacturing of the all-solid state secondary battery to electrons and precipitating the ions on a negative electrode collector the like as a metal.

<Formation of individual layer (film formation)>

The coating method for the composition for a non-aqueous secondary battery is not particularly limited and can be appropriately selected. Examples thereof include coating (preferably wet-type coating), spray coating, spin coating, dip coating, slit coating, stripe coating, and bar coating. The coating temperature is not particularly limited, and examples the range thereof include a temperature range of usually room temperature (for example, 15°C to 30°C) under non-heating.

In this case, the composition for a non-aqueous secondary battery may be dried after being applied each time or may be dried after being applied multiple times. The drying temperature is not particularly limited. The lower limit is preferably 30°C or higher, more preferably 60°C or higher, and still more preferably 80°C or higher. The upper limit thereof is preferably 300°C or lower, more preferably 250°C or lower, and still more preferably 200°C or lower. In a case where the solid electrolyte composition is heated in the above-described temperature range, the dispersion medium and the organic solvent can be removed to make the composition enter a solid state (coated and dried layer). This temperature range is preferable since the temperature is not excessively increased and each member of the all-solid state secondary battery is not impaired. As a result, excellent overall performance is exhibited in the all-solid state secondary battery, and it is possible to obtain good binding properties and good ion conductivity.

After applying the composition for a non-aqueous secondary battery, it is preferable to pressurize each layer or the all-solid state secondary battery after superimposing the constitutional layers or producing the all-solid state secondary battery. In addition, each of the layers is also preferably pressurized together in a state of being laminated. Examples of the pressurizing methods include a method using a hydraulic cylinder press machine. The pressurizing force is not particularly limited; however, it is generally preferably in a range of 5 to 1,500 MPa.

In addition, the pressurization and the heating of the applied composition for a non-aqueous secondary battery may be carried out at the same time. The heating temperature is not particularly limited but is generally in a range of 30°C to 300°C. The press can also be applied at a temperature higher than the glass transition temperature of the inorganic solid electrolyte. It is also possible to carry out the press at a temperature higher than the glass transition temperature of the polymer contained in the polymer binder. However, in general, the temperature does not exceed the melting point of this polymer.

The pressurization may be carried out in a state where the coating solvent or dispersion medium and the organic solvent have been dried in advance or in a state where the solvent, or the dispersion medium and the organic solvent remain.

It is noted that respective compositions may be applied at the same time, and the application, the drying, and the pressing may be carried out simultaneously and/or sequentially. Each of the compositions may be applied onto each of the separate base materials and then laminated by carrying out the transfer.

The atmosphere in the film forming method (coating, drying, and pressurization (under heating) is not particularly limited and may be any atmosphere such as atmospheric air, dry air (the dew point: -20°C or lower), or inert gas (for example, an argon gas, a helium gas, or a nitrogen gas).

The pressurization time may be a short time (for example, within several hours) under the application of a high pressure or a long time (one day or longer) under the application of an intermediate pressure. In case of members other than the sheet for an all-solid state secondary battery, for example, the all-solid state secondary battery, it is also possible to use a restraining tool (screw fastening pressure or the like) of the all-solid state secondary battery in order to continuously apply an intermediate pressure. The pressing pressure may be a pressure that is uniform or varies with respect to a portion under pressure such as a sheet surface. The pressing pressure may be changed according to the area or the film thickness of the portion under pressure. In addition, the pressure may also be variable stepwise for the same portion. A pressing surface may be flat or roughened.

<Initialization>

The all-solid state secondary battery manufactured as described above is preferably initialized after the manufacturing or before use. The initialization is not particularly limited, and it is possible to initialize the all-solid state secondary battery by, for example, carrying out initial charging and discharging in a state where the pressing pressure is increased and then releasing the pressure until it reaches a general working pressure of the all-solid state secondary battery.

[Use application of non-aqueous secondary battery]

The non-aqueous secondary battery according to the embodiment of the present invention can be applied to a variety of usages. The application aspect thereof is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, examples of consumer usages include automobiles (electric vehicles and the like), electric vehicles, motors, lighting equipment, toys, game devices, road conditioners, watches, strobes, cameras, medical devices (pacemakers, hearing aids, and shoulder massage devices, and the like). Further, the all-solid state secondary battery can be used for a variety of military usages and universe usages. In addition, the all-solid state secondary battery can also be combined with a solar battery.

Examples

Hereinafter, the present invention will be described in more detail based on Examples; however, the present invention is not limited thereto be interpreted. "Parts" and "%" that represent compositions in the following Examples are in terms of mass unless particularly otherwise described. In the present invention, "room temperature" means 25°C.

1. Polymer synthesis

Polymers M-1 to M-7 shown by the following chemical formulae and in Table 1 below were synthesized as follows.

[Synthesis Example M-1] Synthesis of polymer M-1

To a 200 mL volumetric flask, 21.6 g of methyl methacrylate (manufactured by FUJIFILM Wako Pure Chemical Corporation), 46.1 g of dodecyl acrylate (manufactured by Tokyo Chemical Industry Co., Ltd.), 3.6 g of hydroxyethyl acrylate (manufactured by FUJIFILM Wako Pure Chemical Corporation), 0.8 g of monomethyl maleate (manufactured by Tokyo Chemical Industry Co., Ltd.), and 0.05 g of a polymerization initiator V-601 (product name, manufactured by FUJIFILM Wako Pure Chemical Corporation) were added and dissolved in 27.0 g of butyl butyrate to prepare a monomer solution.

43.0 g of butyl butyrate was added to a 500 mL three-neck flask and heated to 80°C. Then, a solution obtained by dissolving 0.03 g of a polymerization initiator V-601 (product name) in 2.0 g of butyl butyrate was added to the flask under a nitrogen atmosphere. Thereafter, the above-described monomer solution was added dropwise to the flask over 2 hours while carrying out stirring at 80°C. After completion of the dropwise addition, stirring was carried out at 80°C for 2 hours, and then the temperature was raised to 90°C, followed by stirring for 2 hours. The obtained polymerization solution was poured into 960 g of methanol, stirred for 10 minutes, and allowed to stand for 10 minutes. The precipitate obtained after removing the supernatant was dissolved in 120 g of xylene, and the solvent was distilled off at 30 hPa and 60°C. Further, 80 g of xylene was added thereto, and a step of distilling off the solvent (under the above-described conditions) was repeated until the methanol was not contained (equal to or lower than the detection limit by measurement with gas chromatography).

In this way, a polymer M-1 ((meth)acrylic polymer) was synthesized to obtain a xylene solution M-1 of the polymer M-1 (concentration: 30% by mass).

[Synthesis Example M-2] Synthesis of polymer M-2

A polymer M-2 (a (meth)acrylic polymer) was synthesized in the same manner as in Synthesis Example M-1 to obtain a xylene solution M-2 of the polymer M-2 (concentration: 30% by mass), except that in Synthesis Example M-1, a compound from which each constitutional component was derived was used so that the polymer M-2 had the composition (the kind and the content of the constitutional component) shown by the following chemical formula and in Table 1, and the polymerization concentration and the amount of the polymerization initiator were appropriately adjusted so that the mass average molecular weights shown in Table 1 was obtained.

[Synthesis Example M-3] Synthesis of polymer M-3

150 parts by mass of toluene, 30 parts by mass of styrene, 24 parts by mass of ethylene, and 46 parts by mass of 1,3-butadiene were added to an autoclave, and 1 part by mass of a polymerization initiator V-601 (manufactured by FUJIFILM Wako Pure Chemical Corporation) were added thereto. Then, the temperature was raised to 80°C, and stirring was carried out for 3 hours. Then, the temperature was raised to 90°C, and the reaction was carried out until the conversion rate reached 100%. The obtained solution was reprecipitated in methanol and dried to obtain a solid, and 3 parts by mass of 2,6-di-t-butyl-p-cresol and 0.3 parts by mass of maleic acid anhydride were added with respect to 100 parts by mass of the obtained polymer, and then the reaction was carried out at 180°C for 5 hours. The obtained solution was reprecipitated in methanol, and the obtained solid was dried at 80°C to obtain a target polymer (a dry solid product). The mass average molecular weight of this polymer was 89,000.

Then, after 50 parts by mass of the polymer (the dry solid product) obtained as described above was dissolved in 50 parts by mass of cyclohexane and 150 parts by mass of tetrahydrofuran (THF), the solution was brought to 70°C, 3 parts by mass of n-butyl lithium, 3 parts by mass of 2,6-di-t-butyl-p-cresol, 1 part by mass of bis(cyclopentadienyl)titanium dichloride, and 2 parts by mass of diethyl aluminum chloride were added thereto, and the resultant mixture was reacted at a hydrogen pressure of 10 $kg/cm^2$ for 1 hour. Then, the solvent was distilled off, drying was carried out to synthesize a polymer M-3 (a hydrocarbon polymer, mass average molecular weight: 150,000), which was dissolved in xylene to obtain a xylene solution M-3 (concentration: 15% by mass) of the polymer M-3.

[Synthesis Example M-4] Synthesis of polymer M-4

150 parts by mass of toluene, 30 parts by mass of styrene, and 70 parts by mass of 1,3-butadiene were added to an autoclave, and 1 part by mass of a polymerization initiator V-601 (manufactured by FUJIFILM Wako Pure Chemical Corporation) were added thereto. Then, the temperature was raised to 80°C, and stirring was carried out for 3 hours. Then, the temperature was raised to 90°C, and the reaction was carried out until the conversion rate reached 100%. The obtained

solution was reprecipitated in methanol and dried to obtain a solid, and 3 parts by mass of 2,6-di-t-butyl-p-cresol and 2.2 parts by mass of maleic acid anhydride were added with respect to 100 parts by mass of the obtained polymer, and then the reaction was carried out at 180°C for 5 hours. The obtained solution was reprecipitated in acetonitrile, and the obtained solid was dried at 80°C to obtain a polymer (a dry solid product). The mass average molecular weight of this polymer was 90,000. Then, after 50 parts by mass of the polymer (the dry solid product) obtained as described above was dissolved in 50 parts by mass of cyclohexane and 150 parts by mass of THF, the solution was brought to 70°C, 3 parts by mass of n-butyl lithium, 3 parts by mass of 2,6-di-t-butyl-p-cresol, 1 part by mass of bis(cyclopentadienyl)titanium dichloride, and 2 parts by mass of diethyl aluminum chloride were added thereto. The resultant mixture was reacted at a hydrogen pressure of 10 $kg/cm^2$ for 1 hour, and then the solvent was distilled off, and drying was carried out to obtain a hydrocarbon polymer precursor A (mass average molecular weight: 90,000).

On the other hand, 100 parts by mass of xylene (manufactured by FUJIFILM Wako Pure Chemical Corporation) was added to a 2 L three-neck flask equipped with a reflux condenser and a gas introduction cock, nitrogen gas was introduced at a flow rate of 100 mL/min for 10 minutes, and then the temperature was raised to 80°C. A mixed liquid of 12.2 parts by mass of 2-aminoethanethiol hydrochloride (manufactured by Tokyo Chemical Industry Co., Ltd.) and 100 parts by mass of ethanol (manufactured by FUJIFILM Wako Pure Chemical Corporation) and a mixed liquid of 400 parts by mass of lauryl acrylate (manufactured by FUJIFILM Wako Pure Chemical Corporation), 100 parts by mass of hydroxyethyl acrylate (manufactured by FUJIFILM Wako Pure Chemical Corporation), 170 parts by mass of xylene (manufactured by FUJIFILM Wako Pure Chemical Corporation), and 10 parts by mass of azobisbutyronitrile (manufactured by FUJIFILM Wako Pure Chemical Corporation) were each separately added dropwise into the above three-neck flask over 2 hours. After the dropwise addition, the mixture was further stirred at 80°C for 2 hours. Then, it was added dropwise to methanol to obtain a macromonomer having a terminal amino group (hydrochloride) as a precipitate. The weight-average molecular weight of the macromonomer was 3,000.

Next, 450 parts by mass of xylene (manufactured by FUJIFILM Wako Pure Chemical Corporation) and 50 parts by mass of the hydrocarbon polymer precursor A were added and dissolved in a 1 L three-neck flask equipped with a reflux condenser and a gas introduction cock. Then, 68 parts by mass of the macromonomer having a terminal amino group and 1.6 parts by mass of 1,8-diazabicycloundecene (DBU, manufactured by FUJIFILM Wako Pure Chemical Corporation) were added thereto, the temperature was 130°C, and stirring was continued for 10 hours. Then, a 1 N hydrochloric acid aqueous solution was added and separated to extract the organic layer, and the organic layer was added dropwise to acetone to obtain the polymer M-4 as a precipitate. After drying under reduced pressure at 60°C for 5 hours, the precipitate was redissolved in butyl butyrate. In this way, a polymer M-4 (a hydrocarbon polymer, mass average molecular weight: 130,000) was synthesized to obtain a butyl butyrate solution (concentration: 15% by mass) of the polymer M-4.

[Synthesis Example M-5] Synthesis of polymer M-5

200 parts by mass of ion exchange water, 100 parts by mass of vinylidene fluoride, 98 parts by mass of hexafluoropropylene, and 2 parts by mass of acrylic acid were added to an autoclave, and further 1.5 parts by mass of diisopropyl peroxydicarbonate was added thereto, followed by stirring at 30°C for 24 hours. After completion of the polymerization, the precipitate was filtered and dried at 100°C for 10 hours to obtain a polymer (fluoropolymer) M-5. The obtained polymer was a random copolymer, and its mass average molecular weight was 300,000. The obtained polymer M-5 was dissolved in xylene to obtain a xylene solution (concentration: 15% by mass) of the polymer M-5.

[Synthesis Example M-6] Synthesis of polymer M-6

A polymer M-6 was synthesized in the same manner as in Synthesis Example M-5 to obtain a xylene solution M-6 of the polymer M-6 (concentration: 15% by mass), except that in Synthesis Example M-5, a compound from which each constitutional component was derived was used so that the polymer M-6 had the composition (the kind and the content of the constitutional component) shown by the following chemical formula and in Table 1, and the polymerization concentration and the amount of the polymerization initiator were appropriately adjusted so that the mass average molecular weights shown in Table 1 was obtained.

[Synthesis Example M-7] Synthesis of polymer M-7

269.0 g of toluene was charged into a 1 L three-neck flask equipped with a stirrer, a thermometer, a reflux cooling pipe, and a nitrogen gas introduction pipe and was heated to 80°C under a nitrogen stream. Next, a monomer solution consisting of 150.2 g of methyl methacrylate, 381.6 g of lauryl methacrylate, 5.3 g of V-601 (manufactured by FUJIFILM Wako Pure Chemical Corporation), and 4.7 g of mercaptopropionic acid was added dropwise to the three-neck flask at a constant speed such that the dropwise addition was completed in 2 hours. After completion of the dropwise addition of the monomer solution, the solution was subsequently stirred for 2 hours, was heated to 95°C, and was further stirred for 2

hours. Subsequently, 0.3 g of p-methoxyphenol, 31.8 g of glycidyl methacrylate, and 6.4 g of tetrabutylammonium bromide were added to the obtained reaction mixture, and the temperature was raised to 120°C, followed by stirring for 3 hours. Thereafter, the reaction solution was cooled to room temperature, was poured into 2 L of methanol under stirring, and was allowed to stand for a while. The solid obtained by decanting the supernatant solution was dissolved in 1,200 g of xylene, and the solvent was distilled off under reduced pressure to a solid content of 40% to obtain a macromonomer solution.

Next, 167 g of xylene and 112.5 g of the macromonomer solution (solid content: 40.0%) were charged into a 1 L three-neck flask equipped with a stirrer, a thermometer, a reflux cooling pipe, and a nitrogen gas introduction pipe, and then the temperature was raised to 80°C under a nitrogen stream. Next, a monomer solution consisting of 105.0 g of mono(2-acryloyloxyethyl) succinate, 115.5 g of xylene, and 1.5 g of V-601 was added dropwise to the three-neck flask at a constant speed such that the dropwise addition was completed in 2 hours. After completion of the dropwise addition of the monomer solution, the solution was subsequently stirred for 2 hours, was heated to 90°C, and was further stirred for 2 hours. The obtained reaction mixture was filtered through a mesh having a pore size of 50 μm. In this way, a xylene dispersion liquid M-7 (concentration: 30% by mass) of a polymer M-7 ((meth)acrylic polymer) was obtained. The average particle diameter of the binder consisting of the polymer M-7 was 200 nm.

Each of the polymers synthesized is shown below. The numerical value at the bottom right of each constitutional component indicates the content (% by mass). In the following polymer, Me represents a methyl group, MMA represents methyl methacrylate, LMA represents lauryl methacrylate, and "wt%" means % by mass.

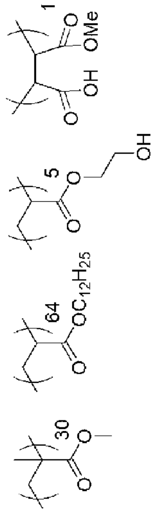

1 wt%

M-1

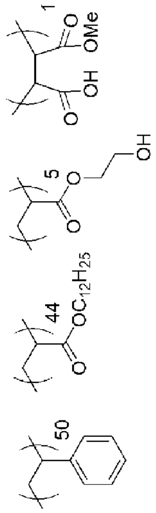

1 wt%

M-2

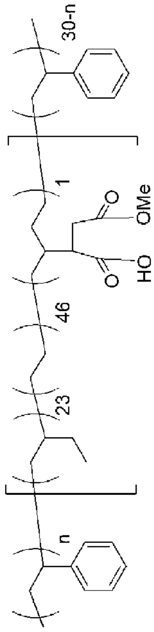

30-n wt%

M-3

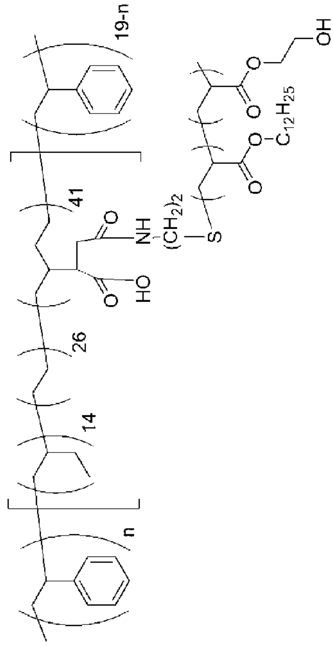

19-n wt%

M-4

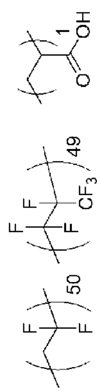

M-5

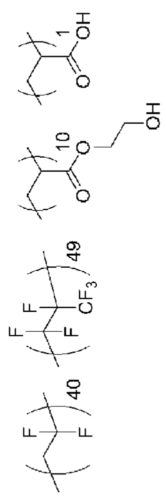

M-6

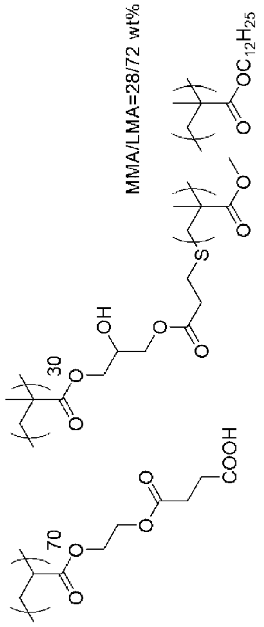

MMA/LMA=28/72 wt%

M-7

The kind of each of the synthesized polymers, the kind of the functional group (I), the content of the functional group-containing constitutional component (I), and the mass average molecular weight (in terms of the measured value according to the method described above) are shown in the column of "Polymer" in Table 1. It is noted that in a case where the polymer has a plurality of functional groups, the plurality of functional groups are described together using "/".

It is noted that all of the polymer solutions M-1 to M-6 obtained in the respective synthesis examples and the polymer dispersion liquid M-7 did not contain the above-described low-boiling point organic solvent (A) (equal to or lower than the detection limit by measurement with gas chromatography).

[Example 1]

In Example 1, a binder composition was prepared, and the characteristics thereof were evaluated.

<Preparation Example B of binder composition> Preparation of binder compositions S-1 to S-15 and T-1 to T-3

The low-boiling point organic solvent (A) shown in Table 1 was added to the polymer solutions M-1 to M-6 synthesized in the respective synthesis examples or the polymer dispersion liquid M-7 at a proportion at which the content shown in Table 1 (content in the composition) was obtained, and the content of the high-boiling point organic solvent (B) was appropriately adjusted such that the concentration of solid contents of the polymer was a content shown in the column of "Content in binder composition" of Table 1, thereby preparing binder compositions S-1 to S-15 and T-1 to T-3. All of the obtained binder compositions S-1 to S-15 and T-1 to T-3 were non-aqueous compositions.

It is noted that binder composition T-2 was prepared as follows.

That is, the polymer M-1 was synthesized in the same manner as in the synthesis of the xylene solution M-1 to obtain an ethyl acetate solution T-2 of the polymer M-1 (concentration: 30% by mass), except that ethyl acetate was used instead of xylene in the synthesis of the xylene solution M-1 of the polymer M-1.

The details of each binder composition are shown in Table 1.

"Content in binder composition" in the column of "Polymer" in Table 1 indicates the content (concentration of solid contents) of the polymer in the binder composition, and the unit thereof (% by mass) is omitted. In addition, the "State" column in Table 1 shows the state of the binder in the binder composition (dissolved (denoted as "dissolved" in Table 1) or insoluble and dispersed in a particulate shape (denoted as "particle" in Table 1)) as a result that has been obtained by carrying out the evaluation according to the above-described solubility measurement.

<Evaluation 1: Storage stability test>

Each of the binder compositions prepared as described above was stored at 60°C for 1 week to prepare each of binder compositions (after storage), which had been subjected to a lapse of time from the preparation.

Regarding each binder composition, using each of the binder composition immediately after preparation and the binder composition subjected to a lapse of time from the preparation (the binder composition after storage without redispersion), each composition and sheet for an all-solid state secondary battery were produced to manufacture each all-solid state secondary battery in the same manner as in [Example 2] described later.

The ion conductivity of the all-solid state secondary battery manufactured by using the binder composition immediately after preparation (referred to as a battery immediately after manufacturing) and the all-solid state secondary battery (referred to as a battery after a laps time) manufactured by using the binder composition subjected to a lapse of time from the preparation, which had been obtained as described above, were measured in the same manner as in <Evaluation 5: Measurement of resistance> which will be described later.

It was determined where the rate of change $\Delta\sigma$ $[(\sigma_A - \sigma_B)/\sigma_A]$ of the ion conductivity $\sigma_B$ of the battery after a lapse of time with respect to the ion conductivity $\sigma_A$ of the battery immediately after manufacturing was included in any of the following evaluation standards. The results are shown in Table 1.

In the present test, it is indicated that the smaller the rate of change $\Delta\sigma$ is, the more excellent the storage stability of the binder composition is, and an evaluation standard "D" or higher is the pass level.

- Evaluation standards -

A: $\Delta\sigma \leq 5\%$
B: $5\% < \Delta\sigma \leq 10\%$
C: $10\% < \Delta\sigma \leq 20\%$
D: $20\% < \Delta\sigma \leq 30\%$
E: $30\% < \Delta\sigma \leq 50\%$
F: $50\% < \Delta\sigma$

[Table 1]

| No. | Polymer | | | | | | Low-boiling point organic solvent (A) | | | | High-boiling point organic solvent (B) | | State | Storage stability | Note |
|---|---|---|---|---|---|---|---|---|---|---|---|---|---|---|---|
| | | Kind (main skeleton) | Functional group (I) | Content of constitutional component (I) | i Mass average molecular weight | Content in binder composition | | Boiling point (°C) | LogP | Content (ppm) | | Content | | | |
| S-1 | M-1 | (Meth) acrylic polymer | Ester/dicarboxylic acid group | 99/1 | 200,000 | 10 | Ethyl acetate | 77 | 0.29 | $1.0\times10^5$ | Xylene | Residual part | Dissolved | D | Example |
| S-2 | M-1 | (Meth) acrylic polymer | Ester/dicarboxylic acid group | 99/1 | 200,000 | 10 | | 111 | 2.52 | $3.0\times10^4$ | Xylene | Residual part | Dissolved | C | Example |
| S-3 | M-1 | (Meth) acrylic polymer | Ester/dicarboxylic acid group | 99/1 | 200,000 | 10 | MEK | 80 | 0.86 | $3.0\times10^4$ | Xylene | Residual part | Dissolved | C | Example |
| S-4 | M-1 | (Meth) acrylic polymer | Ester/dicarboxylic acid group | 99/1 | 200,000 | 10 | Ethyl acetate | 77 | 0.29 | $3.0\times10^4$ | Xylene | Residual part | Dissolved | C | Example |
| S-5 | M-1 | (Meth) acrylic polymer | Ester/dicarboxylic acid group | 99/1 | 200,000 | 10 | Ethyl acetate | 77 | 0.29 | $1.0\times10^4$ | Xylene | Residual part | Dissolved | C | Example |
| S-6 | M-1 | (Meth) acrylic polymer | Ester/dicarboxylic acid group | 99/1 | 200,000 | 10 | Ethyl acetate | 77 | 0.29 | $3.0\times10^3$ | Xylene | Residual part | Dissolved | B | Example |
| S-7 | M-1 | (Meth) acrylic polymer | Ester/dicarboxylic acid group | 99/1 | 200,000 | 10 | Ethyl acetate | 77 | 0.29 | $1.0\times10^3$ | Xylene | Residual part | Dissolved | A | Example |
| S-8 | M-1 | (Meth) acrylic polymer | Ester/dicarboxylic acid group | 99/1 | 200,000 | 10 | Ethyl acetate | 77 | 0.29 | $1.0\times10^2$ | Xylene | Residual part | Dissolved | A | Example |
| S-9 | M-1 | (Meth) acrylic polymer | Ester/dicarboxylic acid group | 99/1 | 200,000 | 10 | Ethyl acetate | 77 | 0.29 | 3.0 | Xylene | Residual part | Dissolved | B | Example |

(continued)

| No. | Polymer | | | | | | Low-boiling point organic solvent (A) | | | | High-boiling point organic solvent (B) | | State | Storage stability | Note |
|---|---|---|---|---|---|---|---|---|---|---|---|---|---|---|---|
| | | Kind (main skeleton) | Functional group (I) | Content of constitutional component (I) | i Mass average molecular weight | Content in binder composition | | Boiling point (°C) | LogP | Content (ppm) | | Content | | | |
| S-10 | M-2 | (Meth) acrylic polymer | Ester/dicarboxylic acid group | 49/1 | 150,000 | 10 | Ethyl acetate | 77 | 0.29 | $3.0\times10^3$ | Xylene | Residual part | Dissolved | B | Example |
| S-11 | M-1 | (Meth) acrylic polymer | Ester/dicarboxylic acid group | 99/1 | 200,000 | 10 | Ethanol | 78 | 0.07 | $1.0\times10^3$ | Xylene | Residual part | Dissolved | B | Example |
| S-12 | M-3 | SEBS | Dicarboxylic acid group | 1 | 150,000 | 10 | Ethanol | 78 | 0.07 | $1.0\times10^3$ | Xylene | Residual part | Dissolved | B | Example |
| S-13 | M-4 | SEBS | Dicarboxylic acid group | 41 | 130,000 | 10 | Ethanol | 78 | 0.07 | $1.0\times10^3$ | Butyl butyrate | Residual part | Dissolved | B | Example |
| S-14 | M-5 | PVDF HFP | Carboxy group | 1 | 300,000 | 10 | Ethanol | 78 | 0.07 | $1.0\times10^3$ | Xylene | Residual part | Dissolved | B | Example |
| S-15 | M-6 | PVDF-HFP | Ester/carboxy group | 10/1 | 230,000 | 10 | Ethanol | 78 | 0.07 | $1.0\times10^3$ | Xylene | Residual part | Dissolved | B | Example |
| T-1 | M-1 | (Meth) acrylic polymer | Ester/dicarboxylic acid group | 99/1 | 200,000 | 10 | Ethanol | 78 | 0.07 | $2.0\times10^5$ | Xylene | Residual part | Dissolved | E | Comparative Example |
| T-2 | M-1 | (Meth) acrylic polymer | Ester/dicarboxylic acid group | 99/1 | 200,000 | 10 | Ethyl acetate | 77 | 0.29 | Residual part | - | - | Dissolved | E | Comparative Example |
| T-3 | M-7 | (Meth) acrylic polymer | Ester | 100 | 500,000 | 30 | Ethanol | 78 | 0.07 | $1.0\times10^3$ | Xylene | Residual part | Particles | F | Comparative Example |

<Abbreviations in table>

In the table, the name of the polymer that constitutes the main skeleton is described in the column of the kind of the polymer, SEBS indicates a styrene-ethylene-butylene-styrene random copolymer, and PVDF-HFP indicates a random copolymer of polyvinylidene difluoride and hexafluoropropylene. In addition, MEK indicates methyl ethyl ketone.

2. Synthesis of sulfide-based inorganic solid electrolyte

[Synthesis Example A]

A sulfide-based inorganic solid electrolyte was synthesized with reference to a non-patent document of T. Ohtomo, A. Hayashi, M. Tatsumisago, Y Tsuchida, S. Hama, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.

Specifically, in a globe box in an argon atmosphere (dew point: -70°C), lithium sulfide ($Li_2S$, manufactured by Sigma-Aldrich Co., LLC Co., LLC Co., LLC, purity: > 99.98%) (2.42 g) and diphosphorus pentasulfide ($P_2S_5$, manufactured by Sigma-Aldrich Co., LLC Co., LLC Co., LLC, purity: > 99%) (3.90 g) each were weighed, put into an agate mortar, and mixed using an agate pestle for five minutes. The mixing ratio between $Li_2S$ and $P_2S_5$ ($Li_2S$:$P_2S_5$) was set to 75:25 in terms of molar ratio.

Next, 66 g of zirconia beads having a diameter of 5 mm were put into a 45 mL container made of zirconia (manufactured by FRITSCH), the entire amount of the mixture of the above lithium sulfide and the diphosphorus pentasulfide was put thereinto, and the container was completely sealed in an argon atmosphere. The container was set in a planetary ball mill P-7 (product name, manufactured by FRITSCH), mechanical milling was carried out at a temperature of 25°C and a rotation speed of 510 rpm for 20 hours, thereby obtaining a yellow powder (6.20 g) of a sulfide-based inorganic solid electrolyte (Li-P-S-based glass, hereinafter, may be denoted as LPS). The particle diameter of the Li-P-S-based glass was 15 μm.

[Example 2]

In Example 2, regarding an all-solid state secondary battery, which is one form of the non-aqueous secondary battery, various compositions and each sheet for an all-solid state secondary battery were prepared or manufactured, and an all-solid state secondary battery was manufactured to evaluate the characteristics thereof.

First, regarding an inorganic solid electrolyte-containing composition which is one form of the composition for a non-aqueous secondary battery, each of compositions shown in Table 2-1 to Table 2-4 (collectively referred to as Table 2) was prepared as follows using the binder composition immediately after preparation which had been prepared in Example 1.

<Preparation of inorganic solid electrolyte-containing composition>

2.8 g of the inorganic solid electrolyte LPS synthesized in Synthesis Example A, 0.08 g (in terms of solid content mass) of each of the binder compositions prepared in Preparation Example B shown in Table 2-1, and a dispersion media shown in Table 2-1 were put into a container for a self-rotation type mixer (ARE-310, manufactured by THINKY CORPORATION), where the dispersion medium was such that the content of the dispersion medium (including the organic solvent derived from the binder composition) in the inorganic solid electrolyte-containing composition was 48% by mass. Then, this container was set in a self-rotation type mixer ARE-310 (product name). Each of the inorganic solid electrolyte-containing compositions (slurries) K-1 to K-15 was prepared by mixing for 5 minutes under the conditions of 25°C and a rotation speed of 2,000 rpm.

The dispersion medium used for the preparation of the inorganic solid electrolyte-containing composition was the same solvent as the high-boiling point organic solvent (B) in the binder composition, except for the following inorganic solid electrolyte-containing composition Kc12 (the same applies to the positive electrode composition and the negative electrode composition).

In addition, each of inorganic solid electrolyte-containing compositions (slurries) Kc11 to Kc13 was prepared in the same manner, except that in the preparation of the inorganic solid electrolyte-containing composition K-1, the binder composition S-1 was changed to the binder composition shown in Table 2-4 and the content of each component was set to the content shown in the same table.

<Preparation of positive electrode composition>

2.8 g of the inorganic solid electrolyte LPS synthesized in Synthesis Example A, and a dispersion medium shown

in Table 2-2 were put into a container for a self-rotation type mixer (ARE-310, manufactured by THINKY CORPORATION), where the dispersion medium was such that the content of the dispersion medium (including the organic solvent derived from the binder composition) in the composition for a positive electrode was 30% by mass. Then, this container was set in the self-rotation type mixer ARE-310 (product name), and mixing was carried out for 2 minutes at a temperature of 25°C and a rotation speed of 2,000 rpm. Then, $LiNi_{1/3}Co_{1/3}Mn_{1/3}O_2$ (NMC, manufactured by Sigma-Aldrich Co., LLC) as a positive electrode active material, acetylene black (AB) as a conductive auxiliary agent, and the binder composition (in terms of solid content mass) shown in Table 2-2 were put into this container at a proportion which leads to the content shown in Table 2-2, the container was set in a self-rotation type mixer ARE-310 (product name), and mixing was carried out for 2 minutes under the conditions of 25°C and a rotation speed of 2,000 rpm to prepare each of positive electrode compositions (slurries) PK-1 to PK-15.

In addition, each of positive electrode compositions (slurries) PKc21 to PKc23 was prepared in the same manner, except that in the preparation of the positive electrode composition PK-1, the binder composition S-1 was changed to the binder composition shown in Table 2-4 and the content of each component was set to the content shown in the same table.

<Preparation of negative electrode composition>

2.8 g of the inorganic solid electrolyte LPS synthesized in Synthesis Example A, 0.06 g (in terms of solid content mass) of the binder composition shown in Table 2-3, and a dispersion medium shown in Table 2-3 were put into a container for a self-rotation type mixer (ARE-310), where the dispersion medium was such that the content of the dispersion medium (including the organic solvent derived from the binder composition) in the negative electrode composition was 48% by mass. Then, this container was set in the self-rotation type mixer ARE-310 (product name) manufactured by THINKY CORPORATION, and mixing was carried out for 2 minutes under the conditions of 25°C and the rotation speed of 2,000 rpm. Then, 3.11 g of silicon (Si, manufactured by Sigma-Aldrich Co., LLC) as a negative electrode active material shown in Table 2-3 and 0.25 g of carbon nanotube (VGCF) as a conductive auxiliary agent were put into the container, the container was set in the same manner in the self-rotation type mixer ARE-310 (product name), and mixing was carried out for 2 minutes under the conditions of 25°C and the rotation speed of 2,000 rpm to prepare each of negative electrode compositions (slurries) NK-1 to NK-15.

In addition, each of negative electrode compositions (slurries) NKc21 to NKc23 was prepared in the same manner, except that in the preparation of the negative electrode composition NK-1, the binder composition S-1 was changed to the binder composition shown in Table 2-4 and the content of each component was set to the content shown in the same table.

All of the prepared inorganic solid electrolyte-containing composition, the positive electrode composition, and the negative electrode composition were non-aqueous compositions.

In the prepared inorganic solid electrolyte-containing composition, positive electrode composition, and negative electrode composition, the polymer binders M-1 to M-6 were dissolved in the dispersion medium, but the polymer binder M-7 was not dissolved in the dispersion medium.

In Table 2, the composition content is the content (% by mass) with respect to the total mass of the inorganic solid electrolyte-containing composition, the positive electrode composition, or the negative electrode composition, and the solid content is the content (% by mass) with respect to 100% by mass of the solid content of the composition. The unit is omitted in the table. It is noted that "Composition content" of the dispersion medium in Table 2 indicates the total amount of the content of the dispersion medium and the content of the organic solvent derived from the binder composition.

[Table 2-1]

| | No. | Inorganic solid electrolyte | | | Binder composition | | | Dispersion medium | | Note |
|---|---|---|---|---|---|---|---|---|---|---|
| | | | Composition content | Solid content | | Composition content | Content of solid contents | | Composition content | |
| Inorganic solid electrolyte-containing composition | K-1 | LPS | 50.5 | 97.2 | S-1 | 1.5 | 2.8 | Xylene | 48.0 | Present invention |
| | K-2 | LPS | 50.5 | 97.2 | S-2 | 1.5 | 2.8 | Xylene | 48.0 | Present invention |
| | K-3 | LPS | 50.5 | 97.2 | S-3 | 1.5 | 2.8 | Xylene | 48.0 | Present invention |
| | K-4 | LPS | 50.5 | 97.2 | S-4 | 1.5 | 2.8 | Xylene | 48.0 | Present invention |
| | K-5 | LPS | 50.5 | 97.2 | S-5 | 1.5 | 2.8 | Xylene | 48.0 | Present invention |
| | K-6 | LPS | 50.5 | 97.2 | S-6 | 1.5 | 2.8 | Xylene | 48.0 | Present invention |
| | K-7 | LPS | 50.5 | 97.2 | S-7 | 1.5 | 2.8 | Xylene | 48.0 | Present invention |
| | K-8 | LPS | 50.5 | 97.2 | S-8 | 1.5 | 2.8 | Xylene | 48.0 | Present invention |
| | K-9 | LPS | 50.5 | 97.2 | S-9 | 1.5 | 2.8 | Xylene | 48.0 | Present invention |
| | K-10 | LPS | 50.5 | 97.2 | S-10 | 1.5 | 2.8 | Xylene | 48.0 | Present invention |
| | K-11 | LPS | 50.5 | 97.2 | S-11 | 1.5 | 2.8 | Xylene | 48.0 | Present invention |
| | K-12 | LPS | 50.5 | 97.2 | S-12 | 1.5 | 2.8 | Xylene | 48.0 | Present invention |
| | K-13 | LPS | 50.5 | 97.2 | S-13 | 1.5 | 2.8 | Butyl butyrate | 48.0 | Present invention |
| | K-14 | LPS | 50.5 | 97.2 | S-14 | 1.5 | 2.8 | Xylene | 48.0 | Present invention |

(continued)

| No. | Inorganic solid electrolyte | | | Binder composition | | | Dispersion medium | | Note |
|---|---|---|---|---|---|---|---|---|---|
| | | Composition content | Solid content | | Composition content | Content of solid contents | | Composition content | |
| K-15 | LPS | 50.5 | 97.2 | S-15 | 1.5 | 2.8 | Xylene | 48.0 | Present invention |

[Table 2-2]

| | No. | Inorganic solid electrolyte | | | Binder solution or dispersion lie uid | | | Dispersion medium | | Active material | | | Conductive auxiliary agent | | | Note |
|---|---|---|---|---|---|---|---|---|---|---|---|---|---|---|---|---|
| | | | Composition content | Content of solid con-tents | | Composi-tion content | Content of solid con-tents | | Composi-tion content | | Composi-tion content | Content of solid con-tents t | | Composi-tion content | Content of solid con-tents | |
| Positive electrode composi-tion | PK-1 | LPS | 14.7 | 21.0 | S-1 | 0.7 | 1.0 | Xylene | 30.0 | NMC | 52.5 | 75.0 | AB | 2.1 | 3.0 | Present invention |
| | PK-2 | LPS | 14.7 | 21.0 | S-2 | 0.7 | 1.0 | Xylene | 30.0 | NMC | 52.5 | 75.0 | AB | 2.1 | 3.0 | Present invention |
| | PK-3 | LPS | 14.7 | 21.0 | S-3 | 0.7 | 1.0 | Xylene | 30.0 | NMC | 52.5 | 75.0 | AB | 2.1 | 3.0 | Present invention |
| | PK-4 | LPS | 14.7 | 21.0 | S-4 | 0.7 | 1.0 | Xylene | 30.0 | NMC | 52.5 | 75.0 | AB | 2.1 | 3.0 | Present invention |
| | PK-5 | LPS | 14.7 | 21.0 | S-5 | 0.7 | 1.0 | Xylene | 30.0 | NMC | 52.5 | 75.0 | AB | 2.1 | 3.0 | Present invention |
| | PK-6 | LPS | 14.7 | 21.0 | S-6 | 0.7 | 1.0 | Xylene | 30.0 | NMC | 52.5 | 75.0 | AB | 2.1 | 3.0 | Present invention |
| | PK-7 | LPS | 14.7 | 21.0 | S-7 | 0.7 | 1.0 | Xylene | 30.0 | NMC | 52.5 | 75.0 | AB | 2.1 | 3.0 | Present inven-tion |
| | PK-8 | LPS | 14.7 | 21.0 | S-8 | 0.7 | 1.0 | Xylene | 30.0 | NMC | 52.5 | 75.0 | AB | 2.1 | 3.0 | Present invention |
| | PK-9 | LPS | 14.7 | 21.0 | S-9 | 0.7 | 1.0 | Xylene | 30.0 | NMC | 52.5 | 75.0 | AB | 2.1 | 3.0 | Present inven-tion |

(continued)

| | No. | Inorganic solid electrolyte | | | Binder solution or dispersion lie uid | | | Dispersion medium | | Active material | | | Conductive auxiliary agent | | | Note |
|---|---|---|---|---|---|---|---|---|---|---|---|---|---|---|---|---|
| | | | Composition content | Content of solid con-tents | | Composi-tion content | Content of solid con-tents | | Composi-tion content | | Composi-tion content | Content of solid con-tents t | | Composi-tion content | Content of solid con-tents | |
| | P-K-10 | LPS | 14.7 | 21.0 | S-1C | 0.7 | 1.0 | Xylene | 30.0 | NMC | 52.5 | 75.0 | AB | 2.1 | 3.0 | Present invention |
| | PK-11 | LPS | 14.7 | 21.0 | S-11 | 0.7 | 1.0 | Xylene | 30.0 | NMC | 52.5 | 75.0 | AB | 2.1 | 3.0 | Present inven-tion |
| | P-K-12 | LPS | 14.7 | 21.0 | S-12 | 0.7 | 1.0 | Xylene | 30.0 | NMC | 52.5 | 75.0 | AB | 2.1 | 3.0 | Present inven-tion |
| | P-K-13 | LPS | 14.7 | 21.0 | S-13 | 0.7 | 1.0 | Butyl butyrate | 30.0 | NMC | 52.5 | 75.0 | AB | 2.1 | 3.0 | Present inven-tion |
| | P-K-14 | LPS | 14.7 | 21.0 | S-14 | 0.7 | 1.0 | Xylene | 30.0 | NMC | 52.5 | 75.0 | AB | 2.1 | 3.0 | Present inven-tion |
| | P-K-15 | LPS | 14.7 | 21.0 | S-15 | 0.7 | 1.0 | Xylene | 30.0 | NMC | 52.5 | 750 | AB | 2.1 | 3.0 | Present inven-tion |
| | | | | | | | | | | | | | | | | Present inven-tion |

[Table 2-3]

| | No. | Inorganic solid electrolyte | | | Binder solution or dispersion lie uid | | | Dispersion medium | | Active material | | | Conductive auxiliary agent | | | Note |
|---|---|---|---|---|---|---|---|---|---|---|---|---|---|---|---|---|
| | | | Composition content | Content of solid contents | | Composition content | Content of solid contents | | Composition content | | Composition content | Content of solid contents t | | Composition content | Content of solid contents | |
| Negative electrode composition | NK-1 | LPS | 23.4 | 45.0 | S-1 | 0.5 | Present invention | Xylene | 48.0 | Si | 26.0 | 50.0 | VGCF | 2.1 | 4.0 | Present invention |
| | NK-2 | LPS | 23.4 | 45.0 | S-2 | 0.5 | 1.0 | Xylene | 48.0 | Si | 26.0 | 50.0 | VGCF | 2.1 | 4.0 | Present invention |
| | NK-3 | LPS | 23.4 | 45.0 | S-3 | 0.5 | 1.0 | Xylene | 48.0 | Si | 26.0 | 50.0 | VGCF | 2.1 | 4.0 | Present invention |
| | NK-4 | LPS | 23.4 | 45.0 | S-4 | 0.5 | 1.0 | Xylene | 48.0 | Si | 26.0 | 50.0 | VGCF | 2.1 | 4.0 | Present invention |
| | NK-5 | LPS | 23.4 | 45.0 | S-5 | 0.5 | 1.0 | Xylene | 48.0 | Si | 26.0 | 50.0 | VGCF | 2.1 | 4.0 | Present invention |
| | NK-6 | LPS | 23.4 | 45.0 | S-6 | 0.5 | 1.0 | Xylene | 48.0 | Si | 26.0 | 50.0 | VGCF | 2.1 | 4.0 | Present invention |
| | NK-7 | LPS | 23.4 | 45.0 | S-7 | 0.5 | 1.0 | Xylene | 48.0 | Si | 26.0 | 50.0 | VGCF | 2.1 | 4.0 | Present invention |
| | NK-8 | LPS | 23.4 | 45.0 | S-8 | 0.5 | 1.0 | Xylene | 48.0 | Si | 26.0 | 50.0 | VGCF | 2.1 | 4.0 | Present invention |
| | NK-9 | LPS | 23.4 | 45.0 | S-9 | 0.5 | 1.0 | Xylene | 48.0 | Si | 26.0 | 50.0 | VGCF | 2.1 | 4.0 | Present invention |

(continued)

| | No. | Inorganic solid electrolyte | | | Binder solution or dispersion lie uid | | | Dispersion medium | | Active material | | | Conductive auxiliary agent | | | Note |
|---|---|---|---|---|---|---|---|---|---|---|---|---|---|---|---|---|
| | | | Composition content | Content of solid con-tents | | Composi-tion content | Content of solid con-tents | | Composi-tion content | | Composi-tion content | Content of solid con-tents t | | Composi-tion content | Content of solid con-tents | |
| | N-K-10 | LPS | 23.4 | 45.0 | S-1-C | 0.5 | 1.0 | Xylene | 48.0 | Si | 26.0 | 50.0 | VGCF | 2.1 | 4.0 | Present inven-tion |
| | N-K-11 | LPS | 23.4 | 45.0 | S-11 | 0.5 | 1.0 | Xylene | 48.0 | Si | 26.0 | 50.0 | VGCF | 2.1 | 4.0 | Present inven-tion |
| | N-K-12 | LPS | 23.4 | 45.0 | S-12 | 0.5 | 1.0 | Xylene | 48.0 | Si | 26.0 | 50.0 | VGCF | 2.1 | 4.0 | Present inven-tion |
| | N-K-13 | LPS | 23.4 | 45.0 | S-13 | 0.5 | 1.0 | Butyl butyrate | 48.0 | Si | 26.0 | 50.0 | VGCF | 2.1 | 4.0 | Present invention |
| | NK 14 | 1 LPS | 23.4 | 45.0 | S-14 | 0.5 | 1.0 | Xylene | 48.0 | Si | 26.0 | 50.0 | VGCF | 2.1 | 4.0 | Present inven-tion |
| | N-K-15 | LPS | 23.4 | 45.0 | S-15 | 0.5 | 1.0 | Xylene | 48.0 | Si | 26.0 | 50.0 | VGGF | 2.1 | 4.0 | Present invention |

[Table 2-4]

| | No. | Inorganic solid electrolyte | | | Binder solution or dispersion liquid | | | Dispersion medium | | Active material | | | Conductive auxiliary agent | | | Note |
|---|---|---|---|---|---|---|---|---|---|---|---|---|---|---|---|---|
| | | | Composition content | Content of solid contents | | Composition content | Content of solid contents | | Composition content | | Composition content | Content of solid contents | | C Composition content | Content of solid contents | |
| Inorganic solid electrolyte-containing composition | Kc11 | LPS | 43.1 | 98.0 | T-1 | 0.9 | 2.0 | Xylene | 56.0 | - | - | - | - | - | - | Comparative Example |
| | Kc12 | LPS | 43.1 | 98.0 | T-2 | 0.9 | 2.0 | Xylene | 56.0 | - | - | - | - | - | - | Comparative Example |
| | Kcl3 | LPS | 43.1 | 98.0 | T-3 | 0.9 | 2.0 | Xylene | 56.0 | - | - | - | - | - | - | Comparative Example |
| Positive electrode composition | PKc21 | LPS | 12.5 | 27.2 | T-1 | 0.5 | 1.0 | Xylene | 54.0 | NMC | 32.2 | 70.0 | AB | 0.8 | 1.8 | Comparative Example |
| | PKc22 | LPS | 12.5 | 27.2 | T-2 | 0.5 | 1.0 | Xylene | 54.0 | NMC | 32.2 | 70.0 | AB | 0.8 | 1.8 | Comparative Example |
| | PKc23 | LPS | 12.5 | 27.2 | T-3 | 0.5 | 1.0 | Xylene | 54.0 | NMC | 32.2 | 70.0 | AB | 0.8 | 1.8 | Comparative Example |
| Negative electrode composition | NKc21 | LPS | 17.6 | 45.0 | T-1 | 0.4 | 1.0 | Xylene | 61.0 | Si | 19.5 | 50.0 | VGCF | 1.6 | 4.0 | Comparative Example |
| | NKc22 | LPS | 17.6 | 45.0 | T-2 | 0.4 | 1.0 | Xylene | 61.0 | Si | 19.5 | 50.0 | VGCF | 1.6 | 4.0 | Comparative Example |
| | NKc23 | LPS | 17.6 | 45.0 | T-3 | 0.4 | 1.0 | Xylene | 61.0 | Si | 19.5 | 50.0 | VGCF | 1.6 | 4.0 | Comparative Example |

<Abbreviations in table>

LPS: LPS synthesized in Synthesis Example A
NMC: $LiNi_{1/3}Co_{1/3}Mn_{1/3}O_2$
Si: Silicon (APS: 1 to 5 μm, manufactured by Alfa Aesar)
AB: Acetylene black
VGCF: Carbon nanotube

Next, a sheet for an all-solid state secondary battery was produced as follows.

<Production of solid electrolyte sheet for all-solid state secondary battery>

Each of the inorganic solid electrolyte-containing compositions shown in the column of "Solid electrolyte composition No." of Table 3-1 or Table 3-4 obtained as described above was applied onto an aluminum foil (base material) having a thickness of 20 μm using a Baker type applicator (product name: SA-201, manufactured by Tester Sangyo Co., Ltd.) and heated at 80°C for 2 hours to dry (to remove the dispersion medium and the organic solvent) the inorganic solid electrolyte-containing composition. Then, using a heat press machine, the inorganic solid electrolyte-containing composition which had been dried at a temperature of 120°C and a pressure of 10 MPa for 10 seconds was heated and pressurized to produce each of solid electrolyte sheets 101 to 115, and c11 to c13 for an all-solid state secondary battery (in Table 3-1 and Table 3-4, it is described as "Solid electrolyte sheet"). The film thickness of the solid electrolyte layer was 50 μm.

<Production of positive electrode sheet for all-solid state secondary battery>

Each of the positive electrode compositions obtained as described above, which is shown in the column of "Electrode composition No." in Table 3-2 or Table 3-4, was applied onto an aluminum foil (base material) having a thickness of 20 μm by using a Baker type applicator (product name: SA-201), heating was carried out at 80°C for 1 hour, and then heating was further carried out at 110°C for 1 hour to dry (to remove the dispersion medium and the organic solvent) the positive electrode composition. Then, using a heat press machine, the dried positive electrode composition was pressurized (10 MPa, 1 minute) at 25°C to produce each of positive electrode sheets 116 to 130, and c21 to c23 for an all-solid state secondary battery, having a positive electrode active material layer having a film thickness of 100 μm (in Table 3-2 and Table 3-4, it is described as "Positive electrode sheet").

<Production of negative electrode sheet for all-solid state secondary battery>

Each of the negative electrode compositions obtained as described above, which is shown in the column of "Electrode composition No." in Table 3-3 or Table 3-4, was applied onto a copper foil (base material) having a thickness of 20 μm by using a Baker type applicator (product name: SA-201), heating was carried out at 80°C for 1 hour, and then heating was further carried out at 110°C for 1 hour to dry (to remove the dispersion medium and the organic solvent) the negative electrode composition. Then, using a heat press machine, the dried negative electrode composition was pressurized (10 MPa, 1 minute) at 25°C to produce each of negative electrode sheets 131 to 145, and c31 to c33 for an all-solid state secondary battery, having a negative electrode active material layer having a film thickness of 70 μm (in Table 3-3 and Table 3-4, it is described as "Negative electrode sheet").

<Evaluation 2: Dispersion stability test (redispersibility)>

Regarding each of the compositions prepared as described above, the LPS, the binder composition, the dispersion medium, and the active material as well as the conductive auxiliary agent were mixed in the same conditions as the preparation conditions of each composition at the same proportion as the proportion of the composition content and the solid content shown in Table 2, thereby preparing a composition (a slurry) for dispersibility evaluation. Regarding each of the prepared compositions, the generation (the presence or absence) of aggregates of solid particles was checked using a grind meter (manufactured by ASAHISOUKEN CORPORATION). The size of the aggregate at this time was denoted as X (μm) and used as an indicator of the initial dispersibility.

On the other hand, each of the prepared compositions was left to stand at 25°C for 24 hours and then mixed again at a temperature of 25°C using a planetary ball mill P-7 (product name). The rotation speed and the time at the time of the remixing were set to the same conditions as the preparation conditions of each composition. Regarding the remixed

composition, the generation (the presence or absence) of aggregates of solid particles was checked using the above-described grind meter. The size of the aggregate at this time was denoted as Y (μm) and used as an indicator of the redispersibility after storage.

It is noted that the size of the aggregate was set to a point at which remarkable spots appeared on the coating material applied to the grind meter (see JIS K-5600-2-5 6.6).

The ease of generation of aggregates (aggregating properties or sedimentary properties) was evaluated as the storage stability (the redispersibility of the solid particles) of the composition by determining where the sizes X and Y of the aggregates were included in any of the following evaluation standards. In this test, it is indicated that the smaller the size X of the aggregate is, the more excellent the initial dispersibility is, and the smaller the size Y is, the more excellent the dispersion stability is. In a case where the composition can effectively suppress the (re)aggregation or precipitation of the solid particles even with the lapse of time or the like (in a case where the composition has excellent dispersion stability), it is possible to reproduce the excellent dispersibility immediately after preparation even in the case of the solid particles that have once been aggregated or precipitated, and thus excellent storage stability is exhibited.

In this test, an evaluation standard of "D" or higher is the pass level, and in a case where the size Y is 10 μm or less (the evaluation standard is "D" or higher), the size Y of the aggregate is also included in the evaluation. The results are shown in Tables 3-1 to Table 3-4 (collectively referred to as Table 3).

- Evaluation standards -

A: $Y \leq 5$ μm and $X \leq 5$ μm
B: 5 μm < $Y \leq 8$ μm, and 5 μm < $X \leq 8$ μm
C: 5 μm < $Y \leq 8$ μm, and 8 μm < $X \leq 12$ μm
D: 8 μm < $Y \leq 10$ μm
E: 10 μm < $Y \leq 20$ μm
F: 20 μm <Y

<Evaluation 3: Handling test>

In the same manner as in each of the prepared compositions, the same mixing ratio was used except for the dispersion medium, and the amount of the dispersion medium was reduced, whereby a slurry having a concentration of solid contents of 75% by mass was prepared. A 2 mL poly dropper (manufactured by atect Corporation) was disposed vertically so that 10 mm of the tip thereof was positioned below the slurry interface, and the slurry was aspirated at 25°C for 10 seconds, and the mass W of the poly dropper containing the aspirated slurry was measured. In a case where the tare weight (the empty weight) of the poly dropper is denoted by $W_0$, it was determined that the slurry cannot be aspirated by the dropper in a case where the slurry mass $W - W_0$ is less than 0.1 g. In a case where the slurry could not be aspirated with a dropper, the upper limit of the concentration of solid contents at which the slurry can be aspirated with a dropper was estimated while gradually adding the dispersion medium. The handleability (the extent to which an appropriate viscosity suitable that forms a flat constitutional layer having a good surface property can be obtained) of the electrode composition was evaluated by determining where the obtained upper limit of concentration of solid contents is included in any one of the following evaluation standards. 0.30 g of the prepared slurry was placed on an aluminum cup and heated at 120°C for 2 hours to distill off the dispersion medium, and the concentration of solid contents was calculated.

In this test, it is indicated that the higher the upper limit of concentration of solid contents is, the better the handleability is, and the evaluation standard "D" or higher is the pass level. The results are shown in Table 3.

- Evaluation standards -

A: Upper limit of concentration of solid contents ≥ 70%
B: 70% > upper limit of concentration of solid contents ≥ 60%
C: 60% > upper limit of concentration of solid contents ≥ 50%
D: 50% > upper limit of concentration of solid contents ≥ 40%
E: 40% > upper limit of concentration of solid contents ≥ 30%
F: 30% > upper limit of concentration of solid contents

<Evaluation 4: Adhesiveness test>

Each of the adhesiveness of the solid particles and the adhesiveness between the solid electrolyte layer and the base material in the solid electrolyte layer of each of the obtained solid electrolyte sheets, and the adhesiveness of the solid particles and the adhesiveness between the active material layer and the base material in the active material layer of the electrode sheet was evaluated.

The produced sheet was cut out into a rectangle having a width of 3 cm and a length of 14 cm. Using a cylindrical mandrel tester (product code: 056, mandrel diameter: 10 mm, manufactured by Allgood Co., Ltd.), one end part of the cut-out sheet test piece in the length direction was fixed to the tester and disposed so that the cylindrical mandrel touched to the central portion of the sheet test piece, and then the sheet test piece was bent by 180° along the peripheral surface of the mandrel (with the mandrel as an axis) while pulling the other end part of the sheet test piece in the length direction with a force of 5N along the length direction. It is noted that the sheet test piece was set so that the solid electrolyte layer or active material layer thereof was placed on a side opposite to the mandrel (the base material was placed on the side of the mandrel) and the width direction was parallel to the axis line of the mandrel. The test was carried out by gradually reducing the diameter of the mandrel from 32 mm.

In a state of being wound around the mandrel and a state of being restored to a sheet shape by releasing the winding, the minimum diameter at which the occurrence of defects (cracking, breakage, chipping, and the like) due to the disintegration of binding of solid particles in the solid electrolyte layer or the active material layer, and the peeling between the solid electrolyte layer and the base material or the peeling between the active material layer and the base material could not be confirmed was measured, and the evaluation was carried out by determining which evaluation standard below is satisfied by the minimum diameter. The results are shown in Table 3.

In this test, it is indicated that the smaller the minimum diameter is, the more firm the adhesive force of the solid electrolyte layer or the solid particles that constitute the active material layer is, and the stronger the binding force between the solid particles and the base material is, and an evaluation standard "F" or higher is the pass level.

- Evaluation standards -

A: Minimum diameter < 5 mm
B: 5 mm ≤ minimum diameter < 6 mm
C: 6 mm ≤ minimum diameter < 8 mm
D: 8 mm ≤ minimum diameter < 10 mm
E: 10 mm ≤ minimum diameter < 14 mm
F: 14 mm ≤ minimum diameter < 25 mm
G: 25 mm ≤ minimum diameter

[Table 3-1]

| Sheet No. | Solid electrolyte composition No. | Binder polymer No. | Dispersion stability | Handleability | Adhesiveness | Note 1 | Note 2 |
|---|---|---|---|---|---|---|---|
| 101 | K-1 | S-1 | D | D | C | Solid electrolyte sheet | Present invention |
| 102 | K-2 | S-2 | D | D | C | | Present invention |
| 103 | K-3 | S-3 | C | C | C | | Present invention |
| 104 | K-4 | S-4 | C | B | C | | Present invention |
| 105 | K-5 | S-5 | B | B | C | | Present invention |
| 106 | K-6 | S-6 | A | A | B | | Present invention |
| 107 | K-7 | S-7 | A | A | A | | Present invention |
| 108 | K-8 | S-8 | A | A | A | | Present invention |
| 109 | K-9 | S-9 | C | C | B | | Present invention |
| 110 | K-10 | S-10 | B | B | A | | Present invention |
| 111 | K-11 | S-11 | B | B | B | | Present invention |
| 112 | K-12 | S-12 | C | C | A | | Present invention |
| 113 | K-13 | S-13 | C | B | A | | Present invention |
| 114 | K-14 | S-14 | C | C | A | | Present invention |
| 115 | K-15 | S-15 | B | C | A | | Present invention |

[Table 3-2]

| Sheet No. | Solid electrolyte composition No. | Binder polymer No. | Dispersion stability | Handleability | Adhesiveness | Note 1 | Note 2 |
|---|---|---|---|---|---|---|---|
| 116 | PK-1 | S-1 | D | D | C | Positive electrode sheet | Present invention |
| 117 | PK-2 | S-2 | D | D | C | | Present invention |
| 118 | PK-3 | S-3 | C | C | C | | Present invention |
| 119 | PK-4 | S-4 | C | B | C | | Present invention |
| 120 | PK-5 | S-5 | B | B | C | | Present invention |
| 121 | PK-6 | S-6 | A | A | B | | Present invention |
| 122 | PK-7 | S-7 | A | A | A | | Present invention |
| 123 | PK-8 | S-8 | A | A | A | | Present invention |
| 124 | PK-9 | S-9 | C | C | B | | Present invention |
| 125 | PK-10 | S-10 | B | B | A | | Present invention |
| 126 | PK-11 | S-11 | B | B | B | | Present invention |
| 127 | PK-12 | S-12 | C | C | A | | Present invention |
| 128 | PK-13 | S-13 | C | B | A | | Present invention |
| 129 | PK-14 | S-14 | C | C | A | | Present invention |
| 130 | PK-15 | S-15 | B | C | A | | Present invention |

[Table 3-3]

| Sheet No. | Electrode composition No. | Binder polymer No. | Dispersion stability | Handleability | Adhesiveness | Note 1 | Note 2 |
|---|---|---|---|---|---|---|---|
| 131 | NK-1 | S-1 | D | D | C | Negative electrode sheet | Present invention |
| 132 | NK-2 | S-2 | D | D | C | | Present invention |
| 133 | NK-3 | S-3 | C | C | C | | Present invention |
| 134 | NK-4 | S-4 | C | B | C | | Present invention |
| 135 | NK-5 | S-5 | B | B | C | | Present invention |
| 136 | NK-6 | S-6 | A | A | B | | Present invention |
| 137 | NK-7 | S-7 | A | A | A | | Present invention |
| 138 | NK-8 | S-8 | A | A | A | | Present invention |
| 139 | NK-9 | S-9 | C | C | B | | Present invention |
| 140 | NK-10 | S-10 | B | B | A | | Present invention |
| 141 | NK-11 | S-11 | B | B | B | | Present invention |
| 142 | NK-12 | S-12 | C | C | A | | Present invention |
| 143 | NK-13 | S-13 | C | B | A | | Present invention |
| 144 | NK-14 | S-14 | C | C | A | | Present invention |
| 145 | NK-15 | S-15 | B | C | A | | Present invention |

[Table 3-4]

| Sheet No. | Solid electrolyte composition No. | Binder polymer No. | Electrode composition No. | Binder polymer No. | Dispersion stability | Handleability | Adhesiveness | Note 1 | Note 2 |
|---|---|---|---|---|---|---|---|---|---|
| c11 | Kc11 | T-1 | - | - | E | E | D | Solid electrolyte sheet | Comparative Example |
| c12 | Kc12 | T-2 | - | - | F | F | G | | Comparative Example |
| c13 | Kc13 | T-3 | - | - | F | F | D | | Comparative Example |
| c21 | - | - | PKc21 | T-1 | E | E | D | Positive electrode sheet | Comparative Example |
| c22 | - | - | PKc22 | T-2 | F | F | G | | Comparative Example |
| c23 | - | - | PKc23 | T-3 | F | F | D | | Comparative Example |
| c31 | - | - | NKc21 | T-1 | E | E | D | Negative electrode sheet | Comparative Example |
| c32 | - | - | NKc22 | T-2 | F | F | G | | Comparative Example |
| c33 | - | - | NKc23 | T-3 | F | F | D | | Comparative Example |

<Manufacturing of all-solid state secondary battery>

First, each of a positive electrode sheet for an all-solid state secondary battery, including a solid electrolyte layer, and a negative electrode sheet for an all-solid state secondary battery, including a solid electrolyte layer, which would be used for manufacturing an all-solid state secondary battery, was produced.

- Production of positive electrode sheet for all-solid state secondary battery, which includes solid electrolyte layer -

The solid electrolyte sheet shown in the column of "Solid electrolyte layer (sheet No.)" of Table 4, produced as described above, was overlaid on the positive electrode active material layer of each of the positive electrode sheets for an all-solid state secondary battery shown in the column of "Electrode active material layer (sheet No.)" of Table 4 so that the solid electrolyte layer came into contact with the positive electrode active material layer, transferred (laminated) by being pressurized at 50 MPa and 25°C using a press machine, and then pressurized at 600 MPa and at 25°C, whereby each of positive electrode sheet Nos. 116 to 130, and c21 to c23 for an all-solid state secondary battery, which includes a solid electrolyte layer having a thickness of 25 μm (thickness of positive electrode active material layer: 50 μm), was produced.

- Production of negative electrode sheet for all-solid state secondary battery, which includes solid electrolyte layer -

Next, the solid electrolyte sheet shown in the column of "Solid electrolyte layer (sheet No.)" of Table 4, prepared as described above, was overlaid on the negative electrode active material layer of each of the negative electrode sheets for an all-solid state secondary battery shown in the column of "Electrode active material layer (sheet No.)" of Table 4 so that it came into contact with the negative electrode active material layer, transferred (laminated) by being pressurized at 50 MPa and 25°C using a press machine, and then pressurized at 600 MPa and at 25°C, whereby each of negative electrode sheets 131 to 145 and c31 to c33 for an all-solid state secondary battery, which includes a solid electrolyte sheet having a thickness of 25 μm (thickness of negative electrode active material layer: 40 μm), was produced.

An all-solid state secondary battery No. 101 having a layer configuration illustrated in Fig. 1 was manufactured as follows.

The positive electrode sheet No. 116 for an all-solid state secondary battery (the aluminum foil of the solid electrolyte-containing sheet had been peeled off), which included the solid electrolyte layer obtained as described above, was cut out into a disk shape having a diameter of 14.5 mm and placed, as illustrated in Fig. 2, in a stainless 2032-type coin case 11 into which a spacer and a washer (not illustrated in Fig. 2) had been incorporated. Next, a lithium foil cut out in a disk shape having a diameter of 15 mm was overlaid on the solid electrolyte layer. After further overlaying a stainless steel foil thereon, the 2032-type coin case 11 was crimped to manufacture an all-solid state secondary battery 13 (No. 101), illustrated in Fig. 2.

The all-solid state secondary battery manufactured in this manner has a layer configuration illustrated in Fig. 1 (however, the lithium foil corresponds to a negative electrode active material layer 2 and a negative electrode collector 1).

Each of all-solid state secondary batteries Nos. 102 to 115 and c101 to c103 was manufactured in the same manner as in the manufacturing of the all-solid state secondary battery No. 101, except that in the manufacturing of the all-solid state secondary battery No. 101, a positive electrode sheet for an all-solid state secondary battery, which includes a solid electrolyte layer and is indicated by No. shown in the column of "Electrode active material layer (sheet No.)" of Table 4, was used instead of the positive electrode sheet No. 116 for an all-solid state secondary battery, which has a solid electrolyte layer.

An all-solid state secondary battery No. 116 having a layer configuration illustrated in Fig. 1 was manufactured as follows.

The negative electrode sheet No. 131 for an all-solid state secondary battery (the aluminum foil of the solid electrolyte-containing sheet had been peeled off), which included the solid electrolyte obtained as described above, was cut out into a disk shape having a diameter of 14.5 mm and placed, as illustrated in Fig. 2, in a stainless 2032-type coin case 11 into which a spacer and a washer (not illustrated in Fig. 2) had been incorporated. Next, a positive electrode sheet (a positive electrode active material layer) punched out from the positive electrode sheet for an all-solid state secondary battery produced below into a disk shape having a diameter of 14.0 mm was overlaid on the solid electrolyte layer. A stainless steel foil (a positive electrode collector) was further layered thereon to form the laminate 12 for an all-solid state secondary battery (a laminate consisting of stainless steel foil - aluminum foil - positive electrode active material layer - solid electrolyte layer - negative electrode active material layer - copper foil). Then, the 2032-type coin case 11 was crimped to manufacture an all-solid state secondary battery No. 116 illustrated in Fig. 2.

A positive electrode sheet for an all-solid state secondary battery to be used in the manufacturing of the all-solid state secondary battery No. 116 was prepared as follows.

- Preparation of positive electrode composition -

180 beads of zirconia beads having a diameter of 5 mm were put into a 45 mL container made of zirconia (manufactured by FRITSCH), 2.7 g of the LPS synthesized in the above Synthesis Example A, and 0.3 g of KYNAR FLEX 2500-20 (product name, PVDF-HFP: polyvinylidene fluoride - hexafluoropropylene copolymer, manufactured by Arkema S.A.) in terms of solid content mass and 22 g of butyl butyrate were put into the above container. The container was set in a planetary ball mill P-7 (product name, manufactured by FRITSCH) and the components were stirred for 60 minutes at 25°C and a rotation speed of 300 rpm. Then, 7.0 g of $LiNi_{1/3}Co_{1/3}Mn_{1/3}O_2$ (NMC) was put into the container as the positive electrode active material, and similarly, the container was set in a planetary ball mill P-7, mixing was continued at 25°C and a rotation speed of 100 rpm for 5 minutes to prepare a positive electrode composition.

- Preparation of positive electrode sheet for all-solid state secondary battery -

The positive electrode composition obtained as described above was applied onto an aluminum foil (a positive electrode collector) having a thickness of 20 μm with a Baker type applicator (product name: SA-201, manufactured by Tester Sangyo Co., Ltd.), heating was carried out at 100°C for 2 hours to dry (to remove the dispersion medium) the positive electrode composition. Then, using a heat press machine, the dried positive electrode composition was pressurized (10 MPa, 1 minute) at 25°C to produce each of positive electrode sheets for an all-solid state secondary battery, having a positive electrode active material layer having a film thickness of 80 μm.

Each of all-solid state secondary batteries Nos. 117 to 130 and c104 to c106 was manufactured in the same manner as in the manufacturing of the all-solid state secondary battery No. 116, except that in the manufacturing of the all-solid state secondary battery No. 116, a negative electrode sheet for an all-solid state secondary battery, which includes a solid electrolyte layer and is indicated by No. shown in the column of "Electrode active material layer (sheet No.)" of Table 4, was used instead of the positive electrode sheet No. 131 for an all-solid state secondary battery, which has a solid electrolyte layer.

<Evaluation 5: Measurement of resistance>

The ion conductivity of each of the manufactured all-solid state secondary batteries was measured to evaluate the resistance. Specifically, the alternating-current impedance of each of the all-solid state secondary batteries was measured in a constant-temperature tank (25°C) using a 1255B FREQUENCY RESPONSE ANALYZER (product name, manufactured by SOLARTRON Analytical) at a voltage magnitude of 5 mV and a frequency of 1 MHz to 1 Hz. From the measurement result, the resistance of the sample for measuring ion conductivity in the layer thickness direction was determined, and the ion conductivity was determined by the calculation according to Expression (C1). The results are shown in Table 4.

Ion conductivity $\sigma$ (mS/cm) = 1,000 $\times$ sample layer thickness (cm)/[resistance ($\Omega$) $\times$ sample area (cm$^2$)] Expression (C1):

In Expression (C1), the sample layer thickness is a value obtained by measuring the thickness before placing the laminate 12 in the 2032-type coin case 11 and subtracting the thickness of the collector (the total layer thickness of the solid electrolyte layer and the electrode active material layer). The sample area is the area of the disk-shaped sheet having a diameter of 14.5 mm.

It was determined where the obtained ion conductivity $\sigma$ was included in any of the following evaluation standards.

In this test, in a case where the evaluation standard is "D" or higher, the ion conductivity $\sigma$ is the pass level. It is noted that a large ion conductivity $\sigma$ means a small resistance, which is evident from Expression (C1).

- Evaluation standards -

A: $0.30 \leq \sigma$

B: $0.25 \leq \sigma < 0.30$

C: $0.20 \leq \sigma < 0.25$

D: $0.15 \leq \sigma < 0.20$

E: $0.10 \leq \sigma < 0.15$

F:$\sigma < 0.10$

<Evaluation 6: Cycle characteristics>

The discharge capacity retention rate of each of the manufactured all-solid state secondary batteries was measured using a charging and discharging evaluation device TOSCAT-3000 (product name, manufactured by Toyo System Corporation).

Specifically, each of the all-solid state secondary batteries was charged in an environment of 25°C at a current density of 0.1 mA/cm$^2$ until the battery voltage reached 4.3 V. Then, the battery was discharged at a current density of 0.1 mA/cm$^2$ until the battery voltage reached 2.5 V. One charging operation and one discharging operation were set as one cycle of charging and discharging, and 3 cycles of charging and discharging were repeated under the same conditions to carry out initialization. Then, the above charging and discharging cycle was repeated, and the discharging capacity of each of the all-solid state secondary batteries was measured at each time after the charging and discharging cycle was carried out with a charging and discharging evaluation device: TOSCAT-3000 (product name).

In a case where the discharge capacity (the initial discharge capacity) of the first charging and discharging cycle after initialization is set to 100%, the battery characteristics (cycle characteristics) were evaluated by determining whether the number of charging and discharging cycles in a case where the discharge capacity retention rate (the discharge capacity with respect to the initial discharge capacity) reaches 80% was included in any of the following evaluation standards. In this test, the higher the evaluation standard is, the better the battery characteristics (cycle characteristics) are, and the initial battery characteristics can be maintained even in a case where a plurality of times of charging and discharging are repeated (even in a case of the long-term use). Regarding the cycle characteristics in this test, an evaluation standard "C" or higher is the pass level. The results are shown in Table 4.

All of the all-solid state secondary batteries Nos. 101 to 130 exhibited initial discharge capacity values sufficient for functioning as an all-solid state secondary battery.

- Evaluation standards -

A: 600 cycles or more
B: 450 cycles or more and less than 600 cycles
C: 300 cycles or more and less than 450 cycles
D: 150 cycles or more and less than 300 cycles
E: 80 cycles or more and less than 150 cycles
F: 40 cycles or more and less than 80 cycles

[Table 4]

| Battery No. | Layer configuration | | Resistance | Cycle characteristics | Note |
|---|---|---|---|---|---|
| | Electrode active material layer (sheet No.) | Solid electrolyte layer (sheet No.) | | | |
| 101 | 116 | 101 | D | C | Present invention |
| 102 | 117 | 102 | C | C | Present invention |
| 103 | 118 | 103 | D | C | Present invention |
| 104 | 119 | 104 | C | C | Present invention |
| 105 | 120 | 105 | B | C | Present invention |
| 106 | 121 | 106 | B | B | Present invention |
| 107 | 122 | 107 | A | A | Present invention |

(continued)

| Battery No. | Layer configuration | | Resistance | Cycle characteristics | Note |
|---|---|---|---|---|---|
| | Electrode active material layer (sheet No.) | Solid electrolyte layer (sheet No.) | | | |
| 108 | 123 | 108 | A | A | Present invention |
| 109 | 124 | 109 | B | B | Present invention |
| 110 | 125 | 110 | B | B | Present invention |
| 111 | 126 | 111 | B | B | Present invention |
| 112 | 127 | 112 | B | B | Present invention |
| 113 | 128 | 113 | B | B | Present invention |
| 114 | 129 | 114 | A | A | Present invention |
| 115 | 130 | 115 | A | B | Present invention |
| 116 | 131 | 101 | D | C | Present invention |
| 117 | 132 | 102 | C | C | Present invention |
| 118 | 133 | 103 | D | C | Present invention |
| 119 | 134 | 104 | C | C | Present invention |
| 120 | 135 | 105 | B | C | Present invention |
| 121 | 136 | 106 | B | B | Present invention |
| 122 | 137 | 107 | A | A | Present invention |
| 123 | 138 | 108 | A | A | Present invention |
| 124 | 139 | 109 | B | B | Present invention |
| 125 | 140 | 110 | B | B | Present invention |
| 126 | 141 | 111 | B | B | Present invention |
| 127 | 142 | 112 | B | B | Present invention |
| 128 | 143 | 113 | B | B | Present invention |
| 129 | 144 | 114 | A | A | Present invention |
| 130 | 145 | 115 | A | B | Present invention |
| c101 | c21 | c11 | E | E | Comparative Example |
| c102 | c22 | c12 | F | F | Comparative Example |
| c103 | c23 | c13 | E | E | Comparative Example |
| c104 | c31 | c11 | E | E | Comparative Example |
| c105 | c32 | c12 | F | F | Comparative Example |
| c106 | c33 | c13 | E | E | Comparative Example |

The following findings can be seen from the results of Table 1, Table 3, and Table 4.

It can be seen that the binder composition of Comparative Example, which does not contain the polymer binder soluble in an organic solvent and a predetermined amount of the low-boiling point organic solvent (A), is inferior in storage stability and cannot exhibit sufficient dispersion stability and handleability in the inorganic solid electrolyte-containing composition (electrode composition). Therefore, it can also be seen that it is not possible to realize a sheet for an all-solid state secondary battery which has a constitutional layer having high adhesiveness and an all-solid state secondary battery having excellent ion conductivity and cycle characteristics.

Specifically, the binder composition T-1 of Comparative Example, which excessively contains the low-boiling point organic solvent (A) has poor storage stability and cannot exhibit sufficient dispersion stability and handleability in the inorganic solid electrolyte-containing composition (electrode composition). In a case where this binder composition is

used, the adhesiveness of the sheet for an all-solid state secondary battery, and further, the ion conductivity and the cycle characteristics of the all-solid state secondary battery are not sufficient.

In the binder composition T-2 of Comparative Example, which excessively contains the low-boiling point organic solvent (A) and does not contain the high-boiling point organic solvent (B), the storage stability is inferior, and the dispersion stability and handleability of the inorganic solid electrolyte-containing composition (electrode composition) are exceedingly deteriorated. In a case where this binder composition is used, the adhesiveness of the sheet for an all-solid state secondary battery, and further, the ion conductivity and the cycle characteristics of the all-solid state secondary battery are also significantly reduced.

In the binder composition T-3 of Comparative Example, which contains the particulate polymer binder even in a case of containing a predetermined amount of the low-boiling point organic solvent (A), the storage stability is poor, and the dispersion stability and handleability of the inorganic solid electrolyte-containing composition (electrode composition) are exceedingly deteriorated. In a case where this binder composition is used, the adhesiveness of the sheet for an all-solid state secondary battery, and further, the ion conductivity and the cycle characteristics of the all-solid state secondary battery are not sufficient.

On the other hand, all of the binder compositions S-1 to S-15 according to the embodiment of the present invention, which contain a polymer binder soluble in an organic solvent and a predetermined amount of the low-boiling point organic solvent (A), have excellent storage stability and can exhibit sufficient dispersion stability and handleability in the inorganic solid electrolyte-containing composition (electrode composition). In a case where these binder compositions are used, it is possible to realize a sheet for an all-solid state secondary battery which has a constitutional layer having excellent adhesiveness and an all-solid state secondary battery having excellent ion conductivity and cycle characteristics.

As described above, the binder composition according to the embodiment of the present invention can effectively suppress the decrease in ion conductivity even in a case of being used after a lapse of time. Considering this fact together with the above test results, it can be seen that the binder composition according to the embodiment of the present invention can suppress the deterioration of the cycle characteristics even in a case of being used after a lapse of time.

The present invention has been described together with the embodiments of the present invention. However, the inventors of the present invention do not intend to limit the present invention in any part of the details of the description unless otherwise specified, and it is considered that the present invention should be broadly construed without departing from the spirit and scope of the invention shown in the attached "WHAT IS CLAIMED IS".

This application claims priority based on JP2022-048325 filed in Japan on March 24, 2022, and the content thereof is incorporated in the present specification by reference as a part of the description.

1: negative electrode collector
2: negative electrode active material layer
3: solid electrolyte layer
4: positive electrode active material layer
5: positive electrode collector
6: operation portion
10: all-solid state secondary battery
11: 2032-type coin case
12: laminate for all-solid state secondary battery
13: coin-type all-solid state secondary battery

## Claims

1. A binder composition for a secondary battery, comprising:

   an organic solvent; and
   a polymer binder dissolved in the organic solvent,
   wherein the binder composition for a secondary battery contains 3 to $1.0 \times 10^5$ ppm of a low-boiling point organic solvent (A) having a boiling point of lower than 120°C in the binder composition.

2. The binder composition for a secondary battery according to claim 1,
   wherein the organic solvent includes the low-boiling point organic solvent (A) and a high-boiling point organic solvent (B) having a boiling point of 120°C or higher.

3. The binder composition for a secondary battery according to claim 1 or 2,

wherein a polymer constituting the polymer binder has a constitutional component containing at least one functional group selected from the following group (I) of functional groups,
<group (I) of functional groups>
an ester group, a carboxy group, a dicarboxylic acid group, a carbonate group, a thioester group, a thiocarbonate group, an amide group, a urethane group, urea, and an imide group.

**4.** The binder composition for a secondary battery according to any one of claims 1 to 3,
wherein a polymer constituting the polymer binder contains a constitutional component derived from a (meth)acrylic acid ester compound.

**5.** The binder composition for a secondary battery according to any one of claims 1 to 4,
wherein a LogP value of the low-boiling point organic solvent (A) is 2.0 or less.

**6.** The binder composition for a secondary battery according to any one of claims 1 to 5,
wherein the boiling point of the low-boiling point organic solvent (A) is 90°C or lower.

**7.** The binder composition for a secondary battery according to any one of claims 1 to 6,
wherein a content of the low-boiling point organic solvent (A) in the binder composition for a secondary battery is 3 to $3.0 \times 10^3$ ppm.

**8.** A composition for a non-aqueous secondary battery, comprising:
the binder composition for a secondary battery according to any one of claims 1 to 7.

**9.** The composition for a non-aqueous secondary battery according to claim 8, further comprising:
an inorganic solid electrolyte having an ion conductivity of a metal belonging to Group 1 or Group 2 in the periodic table.

**10.** The composition for a non-aqueous secondary battery according to claim 9,
wherein the inorganic solid electrolyte is a sulfide-based inorganic solid electrolyte.

**11.** The composition for a non-aqueous secondary battery according to any one of claims 8 to 10, further comprising:
an active material.

**12.** A sheet for an all-solid state secondary battery, comprising:
a layer formed of the composition for a non-aqueous secondary battery according to any one of claims 8 to 11.

**13.** An all-solid state secondary battery comprising, in the following order:

a positive electrode active material layer;
a solid electrolyte layer; and
a negative electrode active material layer,
wherein at least one layer of the positive electrode active material layer, the solid electrolyte layer, or the negative electrode active material layer is a layer formed of the composition for a non-aqueous secondary battery according to any one of claims 8 to 11.

**14.** A manufacturing method for a sheet for an all-solid state secondary battery, the manufacturing method comprising:
forming a film of the composition for a non-aqueous secondary battery according to any one of claims 8 to 11.

**15.** A manufacturing method for an all-solid state secondary battery, the manufacturing method comprising:
manufacturing an all-solid state secondary battery through the manufacturing method according to claim 14.

FIG. 1

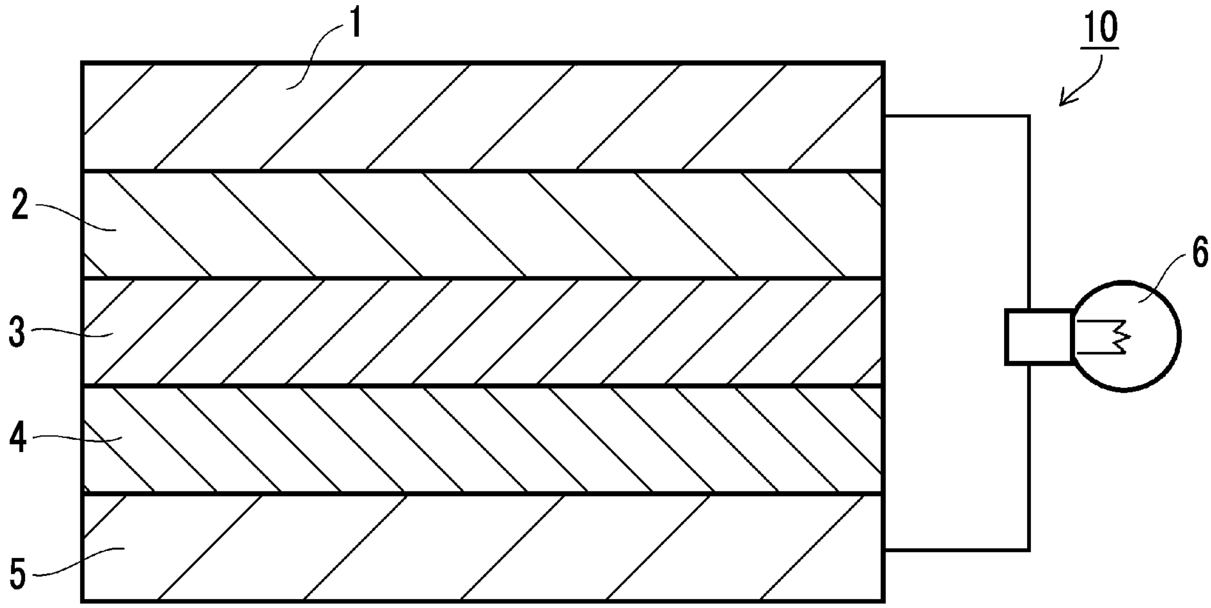


FIG. 2

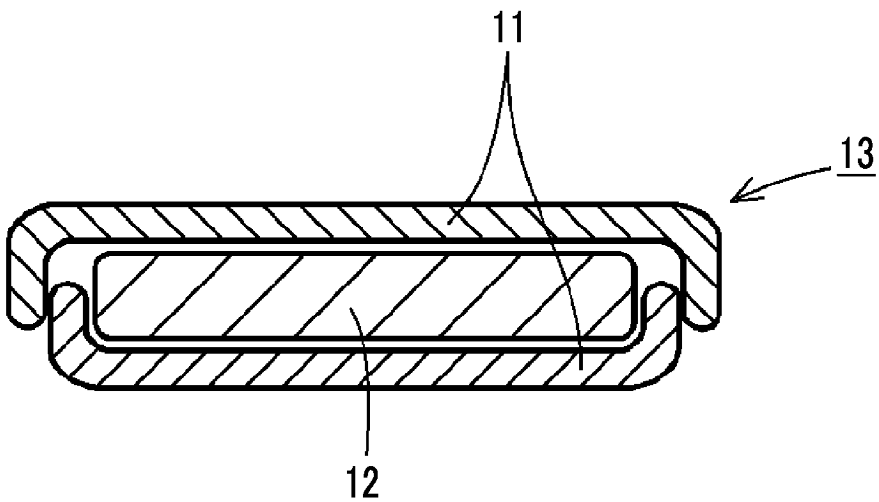

## INTERNATIONAL SEARCH REPORT

International application No.
**PCT/JP2023/010142**

**A. CLASSIFICATION OF SUBJECT MATTER**

***H01M 4/62***(2006.01)i; ***H01M 4/13***(2010.01)i; ***H01M 4/139***(2010.01)i; ***H01M 10/052***(2010.01)i; ***H01M 10/0562***(2010.01)i; ***H01M 10/0585***(2010.01)i
FI: H01M4/62 Z; H01M4/13; H01M4/139; H01M10/052; H01M10/0562; H01M10/0585

According to International Patent Classification (IPC) or to both national classification and IPC

**B. FIELDS SEARCHED**

Minimum documentation searched (classification system followed by classification symbols)

H01M4/62; H01M4/13; H01M4/139; H01M10/052; H01M10/0562; H01M10/0585

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-117784 A (SAMSUNG SDI CO., LTD.) 29 June 2017 (2017-06-29) comparative example 3 | 1-2, 5-6, 8 |
| A | | 3-4, 7, 9-15 |
| Y | JP 2007-220642 A (HITACHI MAXELL LTD.) 30 August 2007 (2007-08-30) paragraph [0061], example 1 | 1-2, 5-8 |
| A | | 3-4, 9-15 |
| Y | JP 2022-500825 A (OXIS ENERGY LTD.) 04 January 2022 (2022-01-04) claim 14 | 1-2, 5-8 |
| A | | 3-4, 9-15 |
| Y | JP 2022-508770 A (UNIVERSITY OF WOLLONGONG) 19 January 2022 (2022-01-19) claim 9 | 1-2, 5-8 |
| A | | 3-4, 9-15 |
| A | JP 2011-122013 A (SAIDEN CHEM IND CO., LTD.) 23 June 2011 (2011-06-23) entire text, all drawings | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 May 2023** | **06 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/010142**

**C. DOCUMENTS CONSIDERED TO BE RELEVANT**

| Category* | Citation of document, with indication, where appropriate, of the relevant passages | Relevant to claim No. |
|---|---|---|
| A | JP 2008-300160 A (HITACHI MAXELL LTD.) 11 December 2008 (2008-12-11) entire text, all drawings | 1-15 |
| A | JP 2011-134492 A (HITACHI CHEMICAL CO., LTD.) 07 July 2011 (2011-07-07) entire text, all drawings | 1-15 |

Form PCT/ISA/210 (second sheet) (January 2015)

**INTERNATIONAL SEARCH REPORT**
**Information on patent family members**

International application No.
**PCT/JP2023/010142**

| Patent document cited in search report | Publication date (day/month/year) | Patent family member(s) | Publication date (day/month/year) |
|---|---|---|---|
| JP 2017-117784 A | 29 June 2017 | US 2017/0179456 A1<br>comparative example 3<br>KR 10-2017-0074535 A<br>CN 106910859 A | |
| JP 2007-220642 A | 30 August 2007 | (Family: none) | |
| JP 2022-500825 A | 04 January 2022 | US 2022/0102758 A1<br>claim 14<br>GB 2577114 A<br>WO 2020/053604 A1 | |
| JP 2022-508770 A | 19 January 2022 | US 2021/0328221 A1<br>claim 9<br>WO 2020/073081 A1 | |
| JP 2011-122013 A | 23 June 2011 | (Family: none) | |
| JP 2008-300160 A | 11 December 2008 | (Family: none) | |
| JP 2011-134492 A | 07 July 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017209233 A
- WO 2020158626 A
- JP 2015088486 A
- JP 62022066 A
- JP S6222066 A
- JP 2006856 A
- JP H26856 A
- JP 3045473 A
- JP H345473 A
- JP 5090844 A
- JP H590844 A
- JP 6004516 A
- JP H64516 A
- JP 2022048325 A

### Non-patent literature cited in the description

- **T. OHTOMO** ; **A. HAYASHI** ; **M. TATSUMISAGO** ; **Y TSUCHIDA** ; **S. HAMA** ; **K. KAWAMOTO**. *Journal of Power Sources*, 2013, vol. 233, 231-235
- **A. HAYASHI** ; **S. HAMA** ; **H. MORIMOTO** ; **M. TATSUMISAGO** ; **T. MINAMI**. *Chem. Lett.*, 2001, 872-873